(19) Europäisches Patentamt
European Patent Office
Office européen des brevets

(11) **EP 2 566 043 A1**

(12) **EUROPEAN PATENT APPLICATION**
published in accordance with Art. 153(4) EPC

(43) Date of publication:
06.03.2013 Bulletin 2013/10

(51) Int Cl.:
*H02P 21/00* (2006.01)   *H02P 27/04* (2006.01)

(21) Application number: 10807578.9

(22) Date of filing: 28.04.2010

(86) International application number:
PCT/JP2010/057575

(87) International publication number:
WO 2011/135694 (03.11.2011 Gazette 2011/44)

(84) Designated Contracting States:
AT BE BG CH CY CZ DE DK EE ES FI FR GB GR HR HU IE IS IT LI LT LU LV MC MK MT NL NO PL PT RO SE SI SK SM TR

(71) Applicant: Hitachi, Ltd.
Chiyoda-ku
Tokyo 100-8280 (JP)

(72) Inventors:
• FURUKAWA, Kimihisa
Ibaraki 3120034 (JP)
• MITSUI, Toshisada
Ibaraki 3120034 (JP)

• NISHIGUCHI, Shingo
Ibaraki 3120034 (JP)
• OOYAMA, Kazuto
Ibaraki 3120034 (JP)
• MIYAZAKI, Hideki
Ibaraki 3120034 (JP)
• KAMIYA, Akinori
Ibaraki 3120034 (JP)

(74) Representative: MERH-IP
Matias Erny Reichl Hoffmann
Paul-Heyse-Strasse 29
80336 München (DE)

(54) **POWER CONVERSION DEVICE**

(57) A control circuit of a power conversion device calculates voltage command signals for determining timings for making switching elements of a power switching circuit continuous by performing feed forward control on the basis of input information, and feedback control on the basis of the input information and current values of AC output, for each of the d axis and the q axis of a motor.

FIG.2

**EP 2 566 043 A1**

**Description**

TECHNICAL FIELD

The present invention relates to a power conversion device that converts DC power into AC power, or AC power into DC power.

BACKGROUND ART

A power conversion device that receives DC power and that converts this DC power into AC power for supply to a rotating electrical machine includes a plurality of switching elements, and converts the DC power that is supplied into AC power by these switching elements repeating their switching operation. Many power conversion devices such as described above can also be used for converting AC power induced in a rotating electrical machine to DC power by switching operation of the switching elements described above. Generally, the switching elements described above are controlled on the basis of a pulse width modulation method (hereinafter termed the "PWM method"), employing a carrier wave that changes at a constant frequency. The control accuracy can be enhanced by increasing the frequency of the carrier wave, and there is also a tendency for the torque generated by the rotating electrical machine to become smoother.

However, when the switching elements described above change over from the interrupted state to the continuous state, or when they change over from the continuous state to the interrupted state, the power loss increases, and the amount of heat generated also increases.

An example of such a power conversion device is disclosed in Japanese Laid-Open Patent Publication No. S63-234878 (refer to Patent Literature #1).

CITATION LIST

PATENT LITERATURE

Patent Literature #1: Japanese Laid-Open Patent Publication No. S63-234878.

SUMMARY OF THE INVENTION

TECHNICAL PROBLEM

It is desirable to reduce the power losses in the switching elements described above, and moreover, by reducing the power losses, it will be possible to reduce the heat generated by the switching elements. For this, it is desirable to reduce the number of times the switching elements described above are switched. However with the PWM method that is generally used as described above, when the frequency of the carrier wave is reduced in order to reduce the number of times that the switching elements described above are switched per unit time, distortion of the current outputted from the power conversion device becomes great, and turbulence appears in its current waveform. This is accompanied by vibration and noise in the rotating electrical machine, increase of torque pulsations, increase of iron losses and so on.

The present invention takes as its object, in a power conversion device, to suppress turbulence of the current waveform as much as possible, thereby aiming at reduction of switching losses. In the embodiment explained below, the outcomes of appropriate research for development of a manufactured product are reflected, and solutions are found for various more concrete problems that need to be resolved for production of a manufactured product. The concrete problems that are solved by the concrete structure and operation of the embodiment described below will be explained in the sections describing that embodiment.

SOLUTION TO PROBLEM

A power conversion device according to a 1st aspect of the present invention includes: a power switching circuit incorporating a plurality of series circuits in each of which an upper arm switching element and a lower arm switching element are connected in series, and that receives DC power and generates AC power that is supplied to a three phase AC motor; a sensor that measures current values of the AC output generated by the power switching circuit; a control circuit that, on the basis of the current values of the AC output measured by the sensor and information inputted from the exterior, determines timings to make the switching elements continuous according to the phase of the AC output to be generated by the power switching circuit, and generates control signals on the basis of these timings; and a driver circuit that generates drive signals for making the switching elements continuous or discontinuous, on the basis of the control signals from the control circuit. In this power conversion device, the control circuit calculates voltage command signals for determining timings for making the switching elements continuous by performing feed forward control on the basis of the input information, and feedback control on the basis of the input information and the current values of the AC output, for each of the d axis and the q axis of the motor.

According to a 2nd aspect of the present invention, in the power conversion device of the 1 st aspect, it is desirable that the control circuit changes parameters used for the feed forward control or the feedback control according to a rotational speed of the motor and a waveform pattern of the drive signal.

According to a 3rd aspect of the present invention, in the power conversion device of the 2nd aspect, it is more desirable that the control circuit changes the parameters used for the feed forward control or the feedback control according to the rotational speed of the motor and the pulse interval of the drive signal that corresponds to the waveform pattern of the drive signal.

According to a 4th aspect of the present invention, the power conversion device of any one of the 1 st through 3rd aspects may further include an A/D converter that determines a sampling timing on the basis of a modulation index of the AC output, and samples the current values of the AC output as measured by the sensor, on the basis of the timing. In this power conversion device, the control circuit can estimate a fundamental current wave of the AC output on the basis of the current values of the AC output sampled by the A/D converter, and determine the timings at which to make the switching elements continuous on the basis of the fundamental current wave.

According to a 5th aspect of the present invention, in the power conversion device of the 4th aspect, it is preferable that the A/D converter determines the sampling timings on the basis of the points of intersection when the waveform of the AC output to be generated by the power switching circuit and the waveform of the drive signal are superimposed.

According to a 6th aspect of the present invention, in the power conversion device of the 4th or 5th aspect, the A/D converter may determine the sampling timings on the basis of a sampling phase table for each modulation index, which is stored in advance.

A power conversion device according to a 7th aspect of the present invention includes: a power switching circuit incorporating a plurality of series circuits in each of which an upper arm switching element and a lower arm switching element are connected in series, and that receives DC power and generates AC output; a sensor that measures current values of the AC output generated by the power switching circuit; an A/D converter that determines a sampling timing on the basis of a modulation index of the AC output, and samples the current values of the AC output as measured by the sensor on the basis of the timing; a control circuit that, on the basis of the current values of the AC output sampled by the A/D converter and information inputted from the exterior, determines timings to make the switching elements continuous according to the phase of the AC output to be generated by the power switching circuit, and generates control signals on the basis of these timings; and a driver circuit that generates drive signals for making the switching elements continuous or discontinuous, on the basis of the control signals from the control circuit.

ADVANTAGEOUS EFFECTS OF THE INVENTION

According to the present invention, in a power conversion device, it is possible to suppress turbulence of the current waveform, and also to reduce switching losses.

It should be understood that, in the embodiment described below, solutions are found as seems desirable for various problems relating to manufacture as a commercial product, as will be described hereinafter.

BRIEF DESCRIPTION OF THE DRAWINGS

Fig. 1 is a figure showing control blocks of a hybrid vehicle;
Fig. 2 is a figure showing the structure of an electrical circuit;
Fig. 3 is a figure for explanation of PWM control and square wave control;
Fig. 4 is a figure showing an example of harmonic components generated during square wave control;
Fig. 5 is a figure showing a motor control system with a control circuit according to an embodiment of this invention;
Fig. 6 is a figure showing the structure of a current controller (i.e. an ACR);
Fig. 7 is a figure showing a way in which a q axis current Iq and a q axis voltage Vq change;
Fig. 8 is a figure showing a way in which a value $T_u$ is determined as a value that corresponds to the pulse interval of a PHM pulse signal;
Fig. 9 is a figure showing the results of comparison of phase current, torque, and phase voltage when the value of $T_u$ is changed according to pulse interval, and when it is not so changed;
Fig. 10 is a figure showing the structure of an A/D converter;
Fig. 11 is a first figure showing a summary of a current acquisition method when a phase current detection signal is converted from an analog signal into a digital signal;

Fig. 12 is a further figure showing this summary of a current acquisition method when a phase current detection signal is converted from an analog signal into a digital signal;

Fig. 13 is a figure showing an example of a sampling phase table;

Fig. 14 is a flow chart showing a procedure for A/D conversion by table searching;

Fig. 15 is a flow chart showing a procedure for A/D conversion by real time calculation;

Fig. 16 is a figure showing the structure of a pulse generator;

Fig. 17 is a flow chart showing a procedure for pulse generation by table searching;

Fig. 18 is a flow chart showing a procedure for pulse generation by real time calculation;

Fig. 19 is a flow chart showing a procedure for pulse pattern calculation;

Fig. 20 is a figure showing a method for pulse generation with a phase counter;

Fig. 21 is a figure showing examples of waveforms of a voltage between lines in the PHM control mode;

Fig. 22 is an explanatory figure for when the pulse width of one voltage between lines is not equal to that for another pulse train;

Fig. 23 is a figure showing an example of the waveform of a voltage between lines in the PHM control mode;

Fig. 24 is a figure showing an example of a phase voltage waveform in the PHM control mode;

Fig. 25 is a figure showing a conversion table for converting between voltages between lines and voltages at the phase terminals;

Fig. 26 is a figure showing an example of conversion from voltage pulses between lines to phase voltage pulses, in the square wave control mode;

Fig. 27 is a figure showing an example of conversion from voltage pulses between lines to phase voltage pulses, in the PHM control mode;

Fig. 28 is a figure showing the magnitude of the amplitude of the fundamental wave of voltage pulses between lines, and the magnitudes of the amplitudes of harmonic components that are to be the subjects of elimination, when the modulation index is changed;

Fig. 29 is a figure showing an example of the waveform of a voltage between lines in the PHM control mode;

Fig. 30 is a figure showing an example of a phase voltage waveform in the PHM control mode;

Fig. 31 is a figure for explanation of a method for generating a PWM pulse signal;

Fig. 32 is a figure showing examples of the waveform of a voltage between lines in the PWM control mode;

Fig. 33 is a figure showing an example of a phase voltage waveform in the PWM control mode;

Fig. 34 is a figure that compares the waveform of voltage pulses between lines for a PHM pulse signal and the waveform of voltage pulses between lines for a PWM pulse signal;

Fig. 35 is a figure showing a way in which the PWM control mode and the PHM control mode are changed over;

Fig. 36 is a figure for explanation of the difference in pulse shapes between PWM control and PHM control;

Fig. 37 is a figure showing the relationship between the motor rotational speed and the waveform of the voltage pulses between lines of a PHM pulse signal;

Fig. 38 is a figure showing the relationship between the number of pulses of a voltage between lines generated in PHM control and in PWM control, and motor rotational speed; and

Fig. 39 is an explanatory figure for explanation of the pattern of the voltage between the lines for the U phase and the V phase when the third order, fifth order, and seventh order harmonic components are eliminated.

DESCRIPTION OF EMBODIMENTS

In addition to the details described in the foregoing sections TECHNICAL PROBLEM and ADVANTAGEOUS EFFECT OF THE INVENTION, in the following embodiment, it is possible to solve problems that need to be solved from the point of view of improvement of productivity, and, furthermore, advantageous effects are obtained from the point of view of productivity. Along with the following explanation of an embodiment, concrete solutions for such problems and concrete advantages will be explained.

[Reduction of the switching frequency of the switching elements]

Since, with the power conversion device explained in the embodiment below, the switching operation of the switching elements is controlled on the basis of an AC output that is converted from DC power, for example on the basis of its waveform angle, in other words on the basis of its phase, accordingly drive signals are supplied from a drive circuit to the switching elements described above, and the switching elements perform operation to go continuous or interrupted in correspondence to the AC output that is being converted, for example in correspondence to the phase of its AC voltage. Due to this type of structure and operation, the number of times that the switching elements described above perform their switching operation per unit time or per cycle of AC output, for example AC voltage, can be reduced as compared with the case with the conventional PWM mode. Furthermore, with the structure described above, irrespective of that the switching frequency for the switching elements of the power switching circuit is reduced, the advantageous effects are obtained that it is possible to suppress increase of distortion of the AC waveform that is outputted, and that it is possible to reduce the losses entailed by switching operation. These benefits are accompanied by reduction of the amount of heat generated by the switching elements of the power switching circuit.

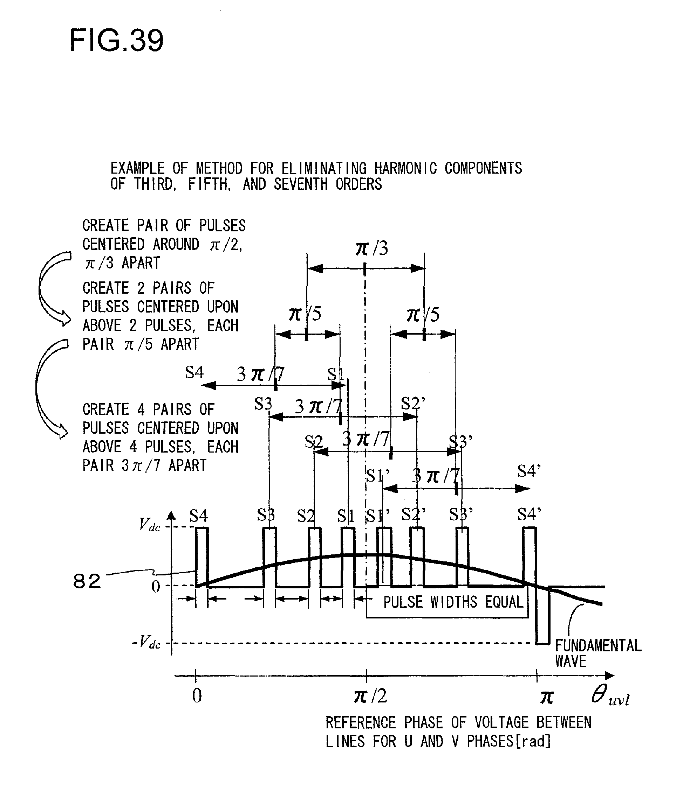

In the embodiment explained below, in particular in the embodiment explained with reference to Fig. 39, the orders of the harmonic components that are to be eliminated are selected. Since in this manner it is possible to select the orders to be eliminated by matching them to the subject to which the present invention is applied, accordingly it is possible to prevent the numbers of orders of harmonic components that are to be eliminated from becoming increased more than is necessary, and thereby it becomes possible to reduce the number of times that each switching element of the power switching circuit is switched for each phase. Even further, since the harmonic components of the orders that are to be eliminated are overlapped for each unit phase, and since the timings for switching the switching elements of the power switching circuit are controlled on the basis of these overlapped waveforms, accordingly it is possible to reduce the number of times that the switching elements of the power switching circuit are switched.

It should be understood that, for the switching elements, it is desirable to employ elements whose speed of operation is high, and with which both operation to go continuous and operation to go discontinuous can be controlled on the basis of control signals: for example, insulated gate bipolar transistors (hereinafter termed "IGBTs") or electric field effect transistors ("MOS transistors") are elements of this type, and these elements are appropriate from the points of view of responsiveness and controllability.

The AC power that is outputted from the power conversion device described above is supplied to an inductance circuit that consists of a rotating electrical machine or the like, and an AC current flows on the basis of inductance operation. In the following embodiment, an example will be cited of a rotating electrical machine that performs operation as a motors and also as a generator, thus serving as an inductance circuit. Use of the present invention to generate AC power for driving such a rotating electrical machine is optimum from the point of view of the benefits that it yields, but the present invention can also be employed as a power conversion device that supplies AC power to some inductance circuit other than a rotating electrical machine.

In the following embodiment, it is possible to change over the pattern of switching operation of the switching elements according to predetermined conditions. For example, in a first operational range in which the rotational speed of the rotating electrical machine is high, switching operation of the switching elements may be controlled on the basis of the phase of the AC waveform that is to be outputted; whereas on the other hand, in a second operational region in which the rotational speed of the rotating electrical machine is lower than in the first operational range described above, the switching elements described above may be controlled according to the PWM method, in which the operation of the switching elements is controlled on the basis of a carrier wave of a fixed frequency. It is possible to include the state in which the rotor of the above described rotating electrical machine is stopped, in the second operational region described above. It should be understood that, in the following embodiment, as a rotating electrical machine, an example will be explained in which a motor-generator is used as a motors and also as a generator.

[Reduction of distortion of the outputted AC current]

In the method in which the switching elements are made to go continuous or to go interrupted on the basis of the angle of the AC waveform of the power that is to be outputted, distortion of the AC waveform has a tendency to become large in the region in which the output frequency of the AC to be outputted is low. In the above explanation, in the second region in which the frequency of the AC output is low, it is possible to control the switching elements on the basis of elapsed time by using the PWM control mode, while controlling the switching elements on the basis of angle in the first region in which the frequency is higher than in the second region. By controlling the switching elements using different methods in this manner, the advantageous effect is obtained that it is possible to reduce distortion of the AC current.

[The basic control]

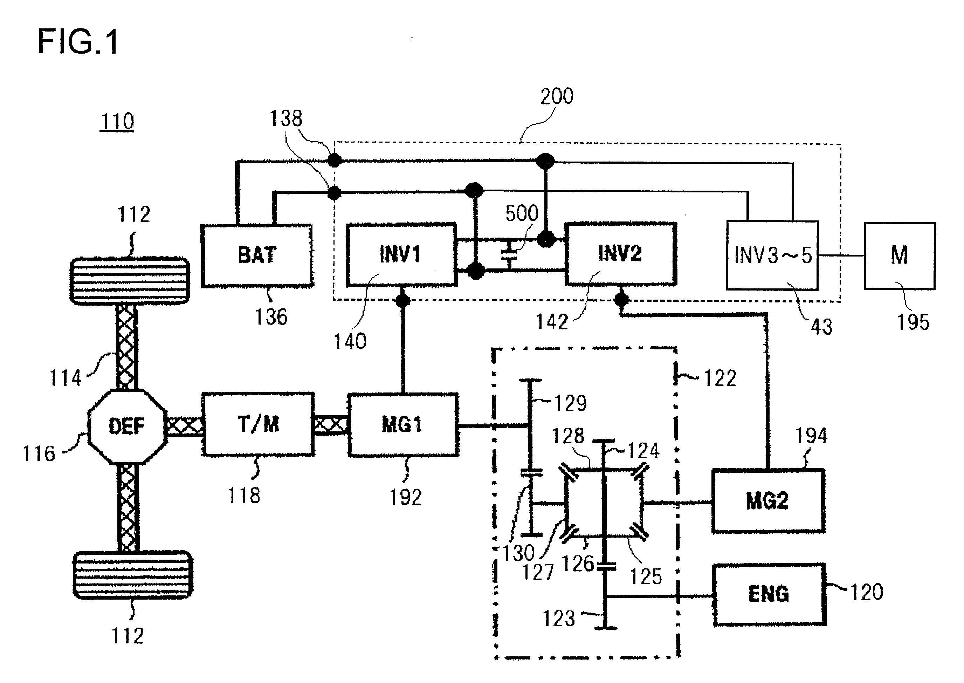

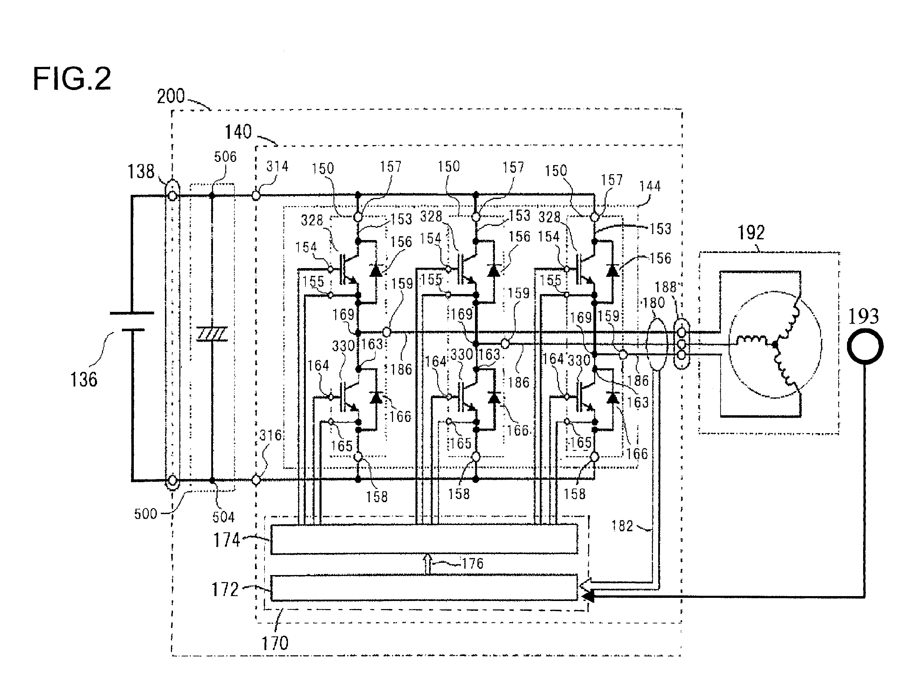

A power conversion device according to an embodiment of the present invention will now be explained in detail with reference to the drawings. This power conversion device according to an embodiment of the present invention is an example in which the present invention is applied to a power conversion device that generates AC power for driving a rotating electrical machine of a hybrid electric vehicle (hereinafter termed an "HEV") or of a pure electric vehicle (hereinafter termed an "EV"). Since many of the features of the fundamental structures and control procedures of a power conversion device for an HEV and of a power conversion device for an EV are basically the same, accordingly, as a representative example, the control structure and the power conversion device circuit structure in a case in which the power conversion device according to this embodiment of the present invention is applied to a hybrid electric vehicle will be explained with reference to Figs. 1 and 2. Fig. 1 is a figure showing control blocks of a hybrid electric vehicle.

The power conversion device according to this embodiment of the present invention will be explained in terms of an onboard power conversion device for an onboard electrical machinery system that is mounted to an automobile. In particular, by way of example, a power conversion device for driving a vehicle will be discussed and explained that is used for an system of electrical machinery that drives a vehicle, in which case the mounting environment and the operating environment and so on are very severe. A power conversion device for driving a vehicle is included in this system of electrical machinery for driving the vehicle, and serves as a control device that drives a rotating electrical machine that powers the vehicle. This power conversion device for driving a vehicle converts, into predetermined AC power, DC power that is supplied from an onboard battery or that is supplied from an onboard power generation device that constitutes an onboard power supply, and supplies this AC power that is obtained to the rotating electrical machine described above, thus driving that rotating electrical machine. Moreover, since the rotating electrical machine described above is not only endowed with the function of acting as an electric motor but also is endowed with the function of acting as a generator, accordingly, according to its operational mode, the power conversion device described above not only converts DC power into AC power, but also alternatively performs operation to convert AC power generated by the rotating electrical machine described above into DC power. This DC power that has been converted is supplied to the onboard battery.

It should be understood that the structure of this embodiment is optimized as a power conversion device for driving a vehicle such as an automobile or a truck or the like. However, apart from these power conversion devices, the present invention may also be applied, for example, to a power conversion device for a rail locomotive or a ship or an aircraft or the like, or to a power conversion device for industry that is used for generating AC power to be supplied to a rotating electrical machine that drives a piece of equipment in a workplace, or to a power conversion device for household use that is used in a control device for driving a rotating electrical machine that powers a household solar power generating system or a household electrical product.

In Fig. 1 the HEV 110 is a single electrically operated vehicle, and two systems are provided for driving this vehicle. One of these is an engine system that uses, as its power source, an engine 120 that is an internal combustion engine. Such an engine system is used as the main source of drive power for this HEV. The other drive system is an onboard system of electrical machinery that employs motor-generators 192 and 194 as power sources. Such an onboard electrical machinery system is mainly used as a source of drive power for the HEV and also as a means of electrical power generation for the HEV. The motor-generators 192 and 194 may, for example, be rotating electrical machines such as synchronous machines or induction machines or the like, and in this specification they will be termed "motor-generators", since they can function either as motors or as generators, according to the way in which they are operated.

Front wheel axles 114 are rotatably supported at the front portion of the vehicle body. A pair of front wheels 112 are provided at the ends of the front wheel axles 114. And a rear wheel axle (not shown in the figure) is rotatably supported at the rear portion of the vehicle body. A pair of rear wheels are provided at the two ends of this rear wheel axle. With the HEV of this embodiment, it is supposed that the main wheels that are driven by power are the front wheels 112, while the auxiliary wheels that are carried along freely are the rear wheels, so that the so called front wheel drive setup is employed; but the opposite, i.e. the rear wheel drive setup, could also be employed.

A front wheel differential gear (hereinafter referred to as the front wheel DEF) 116 is provided at the central portion, between the two front wheel axles 114. The front wheel axles 114 are mechanically connected to the output sides of this front wheel DEF 116. And the output shaft of a speed change mechanism 118 is mechanically connected to the input side of the front wheel DEF 116. This front wheel DEF 116 is a differential type power division mechanism that divides rotational drive force, transmitted thereto by the speed change mechanism 118 after having been speed changed, between the left and right front wheel axles 114. The output side of the motor-generator 192 is mechanically connected to the input side of the speed change mechanism 118. And the output side of the engine 120 and the output side of the motor-generator 194 are mechanically connected to the input side of the motor-generator 192, via the power division mechanism 122. It should be understood that the motor-generators 192 and 194 and the power division mechanism 122 are housed in the interior of the casing of the speed change mechanism 118.

The motor-generators 192 and 194 are synchronous machines, and are provided with permanent magnets in their rotors. The driving of these motor-generators 192 and 194 is controlled by the AC power supplied to the armature windings of their stators being controlled by power conversion devices 140 and 142. The battery 136 is electrically connected to these power conversion devices 140 and 142. Thus it is possible for power to be mutually transferred between the battery 136 and the power conversion devices 140 and 142.

In the onboard electrical machinery system of this embodiment, two electric drive and power generation units are provided, i.e. a first electric drive and power generation unit that consists of the motor-generator 192 and the power conversion device 140, and a second electric drive and power generation unit that consists of the motor-generator 194 and the power conversion device 142, and usage is divided between these two units according to the operational situation. In other words, when the vehicle is being driven by power from the engine 120, if the drive torque of the vehicle is to be assisted, then the second electric drive and power generation unit is operated as an electrical power generation unit that generates electrical power from the power of the engine 120, and the first electric drive and power generation unit is operated as an electrical drive unit with the power obtained by this electricity generation. Furthermore, in a similar case, if the speed of the vehicle is to be assisted, then the first electric drive and power generation unit is operated by the power of the engine 120 as an electrical power generation unit and generates electrical power, and the second electric drive and power generation unit is operated as an electrical drive unit with the power obtained by this electricity generation.

Furthermore, in this embodiment, it is possible to drive the vehicle only by the power of the motor-generator 192, by operating the first electric drive and power generation unit as an electrical drive unit with the power of the battery 136. Yet further, in this embodiment, it is possible to charge up the battery 136 by operating the first electric drive and power generation unit and/or the second electric drive and power generation unit as an electrical power generation unit with the power of the engine 120 or with power from the vehicle wheels, so as to generate electricity.

The battery 136 is also used as a power supply for driving a motor 195 for auxiliary machinery. Such a motor for auxiliary machinery may, for example, be a motor that drives a compressor of an air conditioner, or a motor that drives an oil pressure pump for control. DC power is supplied from the battery 136 to the power conversion device 43, and is converted by the power conversion device 43 into AC power that is supplied to the motor 195. The power conversion device 43 has functions similar to those of the power conversion devices 140 and 142, and controls the phase, the frequency, and the power of the AC supplied to the motor 195. For example, the motor 195 may be caused to generate torque by AC current being supplied that has a phase that leads with respect to that of the rotor of the motor 195. On the other hand, by AC current whose phase is delayed being supplied, the motor 195 is caused to operate as a generator, and is thus operated in the regenerative braking state. This type of control function of the power conversion device 43 is the same as the control functions of the power conversion devices 140 and 142. Since the capacity of the motor 195 is smaller than the capacities of the motor-generators 192 and 194, accordingly the maximum power that the power conversion device 43 can convert is made to be smaller than that for the power conversion devices 140 and 142. However, the circuit structure and the operation of the power conversion device 43 are fundamentally the same as the circuit structures and the operation of the power conversion devices 140 and 142.

The power conversion devices 140 and 142, the power conversion device 43, and the capacitor module 500 have a closely coupled electrical relationship. Moreover, from the point of view that they require countermeasures against the generation of heat, they have much in common. Furthermore, it is desirable for these devices to be made as small as possible in volume. From these points of view, the power conversion device described in detail below should house the power conversion devices 140 and 142, the power conversion device 43, and also the capacitor module 500 within a single power conversion device casing. With this structure, it is possible to implement a compact device whose reliability is high.

Moreover, by housing the power conversion devices 140 and 142, the power conversion device 43, and also the capacitor module 500 within a single casing, the advantageous effect is obtained that it is possible to implement simplification of the wiring and also reduction of the noise. Furthermore, it is possible to reduce the inductance of the circuitry that connects together the capacitor module 500 and the power conversion devices 140 and 142 and the power conversion device 43, so that, along with it being possible to reduce spike voltages, it is also possible to anticipate reduction of heat generation and enhancement of the heat dissipation efficiency.

Next, the electric circuit structure of the power conversion devices 140 and 142 and of the power conversion device 43 will be explained with reference to Fig. 2. It should be understood that, in the embodiment shown in Figs. 1 and 2, a case is described and explained by way of example in which each of the power conversion devices 140 and 142 and the power conversion device 43 is constructed individually. The power conversion devices 140 and 142 and the power conversion device 43 perform similar operation with a similar structure, and have similar functions. Thus here, as a representative example, only explanation of the power conversion device 140 will be provided.

The power conversion device 200 according to this embodiment includes the power conversion device 140 and the capacitor module 500. And the power conversion device 140 includes a power switching circuit 144 and a control unit 170. Furthermore, the power switching circuit 144 includes switching elements that operate as upper arms and switching elements that operate as lower arms. In this embodiment, IGBTs (insulated gate type bipolar transistors) are used for these switching elements. The IGBTs 328 that operate as upper arms are connected in parallel with diodes 156, while the IGBTs 330 that operate as lower arms are connected in parallel with diodes 166. A plurality of the upper and lower arm series circuits 150 are provided (in the example of Fig. 2, three upper and lower arm series circuits 150, 150, 150), and a connection is made from the central point of each of these upper and lower arm series circuits 150 (i.e. from the connection points 169) via an AC terminal 159 to one of three AC power lines (i.e. one of three AC bus bars) 186 that lead to the motor-generator 192. Furthermore, the control unit 170 includes a driver circuit 174 that drive controls the power switching circuit 144, and a control circuit 172 that supplies a control signal to this driver circuit 174 via a signal line 176.

The IGBTs 328 and 330 of the upper and lower arms are switching elements and operate upon receipt of drive signals outputted from the control unit 170, and they convert DC power supplied from the battery 136 into three-phase AC power. This power that has thus been converted is supplied to the armature winding of the motor-generator 192. As described above, the power conversion device 140 also can perform operation to convert three-phase AC power generated by the motor-generator 192 into DC power.

As described in Fig. 1, the power conversion device 200 according to this embodiment includes the power conversion devices 140 and 142, and also the power conversion device 43 and the capacitor module 500. Moreover, as described above, since the power conversion devices 140 and 142 and the power conversion device 43 have similar circuit structures, here the power conversion device 140 will be described as a representative, and description of the power conversion devices 142 and 43 will be omitted, as mentioned above.

The power switching circuit 144 is built as a three phase bridge circuit. The DC positive terminal 314 and the DC negative terminal 316 are electrically connected to the positive side and the negative side of the battery 136, respectively. And the upper and lower arm series circuits 150, 150, 150 that correspond to the three phases are each connected electrically in parallel between the DC positive terminal 314 and the DC negative terminal 316. Here, the upper and lower arm series circuits will be termed "arms". Each of these arms is provided with an upper arm side switching element 328 and diode 156, or a lower arm side switching element 330 and diode 166.

In this embodiment, IGBTs 328 and 330 are used for the switching elements. The IGBTs 328 and 330 have collector electrodes 153 and 163, emitter electrodes (signal emitter terminals) 155 and 165, and gate electrodes (gate terminals) 154 and 164. The diodes 156 and 166 are connected electrically in parallel between the collector electrodes 153 and 163 of the IGBTs 328 and 330 and their emitter electrodes, as shown in the figure. Each of the diodes 156 and 166 has two electrodes, a cathode electrode and an anode electrode. The cathode electrodes are electrically connected to the collector electrodes of the IGBTs 328 and 330, and the anode electrodes are electrically connected to the emitter electrodes of the IGBTs 328 and 330, so that the direction from the emitter electrodes of the IGBTs 328 and 330 towards their collector electrodes is the forward direction. It would also be acceptable for MOSFETs (metallic oxide semiconductor field effect transistors) to be used for the switching elements. In this case, the diodes 156 and 166 would be unnecessary.

The upper and lower arm series circuits 150 correspond to the three phases of the AC power supplied to the three-phase motor-generator 192, and, in each of these series circuits 150, 150, 150, the connection point 169 at which the emitter electrode of the IGBT 328 and the collector electrode 163 of the IGBT 330 are connected together is used for outputting, respectively, the U phase, the V phase, and the W phase of the output AC power. By the connection points 169 described above for each phase being connected, via corresponding AC terminals 159 and a connector 188, to armature windings of the motor-generator 192 for the U phase, the V phase, and the W phase (i.e. stator windings, in the case of a synchronous electric motor), currents for the U phase, the V phase, and the W phase are caused to flow in the above described armature windings. The upper and lower arm series circuits described above are connected in parallel with one another. And the collector electrodes 153 of the IGBTs 328 of the upper arms are electrically connected via a DC bus bar or the like to the positive side electrode of the capacitor module 500 via a positive terminal (P terminal) 157, while similarly the emitter electrodes of the IGBTs 330 of the lower arms are electrically connected via a DC bus bar or the like to the negative side electrode of the capacitor module 500 via a negative terminal (N terminal) 158.

The capacitor module 500 is a device that provides a smoothing circuit for suppressing fluctuations of the DC voltage generated by the switching operation of the IGBTs 328 and 330. The positive side of the battery 136 is electrically connected to the positive side electrode of the capacitor module 500, and the negative side of the battery 136 is electrically connected to the negative side electrode of the capacitor module 500, each via a DC connector 138. Due to this, the capacitor module 500 is connected between the collector electrodes 153 of the upper arm IGBTs 328 and the positive side of the battery 136, and between the emitter electrodes of the lower arm IGBTs 330 and the negative side of the battery 136, and thus is electrically connected to the battery 136 and the upper and lower arm series circuits 150, in parallel.

The control unit 170 functions to control the operation of the IGBTs 328 and 330 to go continuous and discontinuous: this control unit 170 includes the control circuit 172 that generates timing signals for controlling the switching timing of the IGBTs 328 and 330 on the basis of information inputted from other control devices and/or sensors and so on, and the drive circuit 174 that generates drive signals for causing the switching operation of the IGBTs 328 and 330 on the basis of the timing signals outputted from the control circuit 172.

The control circuit 172 includes a microcomputer for performing processing for calculating switching timings for the IGBTs 328 and 330. As input information, a requested target torque value for the motor-generator 192, current values supplied to the armature windings of the motor-generator 192 from the upper and lower arm series circuits 150, and the magnetic pole position of the rotor of the motor-generator 192 are inputted to this microcomputer. The target torque value is a value based upon a command signal that is outputted from a higher level control device not shown in the figures. The current values are values detected on the basis of detection signals outputted from current sensors 180. And the magnetic pole position is a value detected on the basis of a detection signal outputted from a magnetic pole rotation sensor (not shown in the figures) that is provided to the motor-generator 192. In this embodiment an example is cited and explained for a case in which current values for all three phases are detected, but it would be acceptable only to detect current values for two of the phases.

The microcomputer within the control circuit 172 calculates current command values for the d and q axes of the motor-generator 192 on the basis of the target torque value that is inputted, calculates voltage command values for the d and q axes on the basis of the differences between these current command values for the d and q axes that have been calculated and the detected current values for the d and q axes, and generates drive signals in pulse form from these d and q axis voltage command values. This control circuit 172 can function to generate drive signals in two different modes, as will be described hereinafter. One or the other of these two modes for generating drive signals is selected on the basis of the state of the motor-generator 192, i.e. its inductance load, or on the basis of the frequency of the AC output that is to be converted or the like.

One of the above described two modes is a mode for modulation on the basis of the phase of the AC waveform that is to be outputted, so as to control the switching operation of the IGBTs 328 and 330 that are switching elements (i.e. the PHM mode that will be described hereinafter). The other one of the above described two modes is the conventional PWM (Pulse Width Modulation) mode for pulse width modulation.

When driving one of the lower arms, the driver circuit 174 amplifies a pulse form modulated signal, and outputs the result as a drive signal to the gate electrode of the IGBT 330 of the corresponding lower arm. Furthermore, when driving one of the upper arms, the driver circuit 174 amplifies a pulse form modulated signal after having shifted the level of its reference potential to the reference potential of the upper arms, and outputs the result as a drive signal to the gate electrode of the IGBT 328 of the corresponding upper arm. By doing this, each of the IGBTs 328 and 330 performs switching operation on the basis of the drive signal that is inputted to it. By the switching operation performed by each of the IGBTs 328 and 330 in this manner according to the drive signals from the control unit 170, the power conversion device 140 converts the voltage supplied from the battery 136, that constitutes the DC power supply, into output voltages for the U phase, the V phase, and the W phase that are spaced apart by $2\pi/3$ of electrical angle from one another, and supplies these output voltages to the motor-generator 192, that is a three phase AC motor. It should be understood that the electrical angle is a value that corresponds to the rotational state of the motor-generator 192, in concrete terms to the position of its rotor, and changes cyclically from 0 to $2\pi$. By using this rotational angle as a parameter, it is possible to determine the switching states of the IGBTs 328 and 330, in other words the output voltages for the U phase, the V phase, and the W phase, according to the rotational state of the motor-generator 192.

Further, the control unit 170 performs anomaly detection (for excess current, excess voltage, excess temperature and so on), so as to protect the upper and lower arm series circuits 150. For this, sensing information is inputted to the control unit 170. For example, information from signal emission terminals 155 and 165 of each arm specifying the currents flowing in the emitter electrodes of the IGBTs 328 and 330 is inputted to corresponding drive units (ICs). Due to this, each of these drive units (ICs) performs excess current detection and stops the switching operation of the corresponding IGBT 328 or 330 if it has detected excess current, so as to protect that IGBT 328 or 330 from excess current. And information specifying the temperatures of the upper and lower arm series circuits 150 is inputted to the microcomputer from temperature sensors (not shown in the figures) that are provided to the upper and lower arm series circuits 150. Moreover, information specifying the DC voltages of the upper and lower arm series circuits 150 is inputted to the microcomputer. The microcomputer performs excess temperature detection and excess voltage detection on the basis of this information, and stops the switching operation of all of the IGBTs 328 and 330 if excess temperature or excess voltage has been detected, thereby protecting the upper and lower arm series circuits 150, and accordingly also the semiconductor modules including these circuits 150, from excess temperature and excess voltage.

In Fig. 2, the upper and lower arm series circuits 150 are the series circuits of the upper arm IGBTs 328 and the upper arm diodes 156, and of the lower arm IGBTs 330 and the lower arm diodes 166. The IGBTs 328 and 330 are semiconductor switching elements. The operations of the IGBTs 328 and 330 of the upper and lower arms of the power switching circuit 144 to go continuous and discontinuous are changed over in a fixed order. During this changeover, the currents in the stator winding of the motor-generator 192 flow in the circuits set up by the diodes 156 and 166.

As shown in the figure, the upper and lower arm series circuits 150 include positive terminals (P terminals) 157, negative terminals (N terminals) 158, AC terminals 159 from the connection points 169 of the upper and lower arms, signal emission terminals 155 for the upper arms, upper arm gate terminals 154, signal emission terminals 165 for the lower arms, and lower arm gate terminals 164. Furthermore, the power conversion device 200 has the DC connectors 138 on its input side and the AC connectors 188 on its output side, and is connected to the battery 136 and to the motor-generator 192 via these connectors 138 and 188 respectively. Moreover, it would also be acceptable to provide a power conversion device having a circuit structure in which two upper and lower arm series circuits are connected in parallel for each phase, thus constituting circuits that generate each phase of the three phase AC output for the motor-generator 192.

In this embodiment, for example, the control mode according to the PWM control method (hereinafter termed the PWM control mode) may be used in the region in which the rotational speed of the motor-generator 192 is comparatively low, while on the other hand the PHM control mode that will be described hereinafter may be used in the region in which the rotational speed is comparatively high. In the PWM control mode, the power conversion device 140 performs control using PWM signals, as previously described. In other words, voltage command values for the d and q axes of the motor-generator 192 are calculated by the microcomputer within the control circuit 172 on the basis of the target torque value that has been inputted, and these are converted into voltage command values for the U phase, the V phase,

and the W phase. And, for each of the phases, a sine wave corresponding to the voltage command value is taken as the fundamental wave, this is compared with a triangular wave that is a carrier wave and that has a predetermined period, and a modulated wave in pulse form having a pulse width determined on the basis of the result of this comparison is outputted to the driver circuit 174. And, by outputting drive signals corresponding to these modulated waves from the driver circuit 174 to the IGBTs 328 and 330 that respectively correspond to the upper and lower arms of each phase, the DC voltage outputted from the battery 136 is converted into three phase AC voltage, and this is supplied to the motor-generator 192.

The details of the PHM method will be explained hereinafter. The modulated waves generated by the control circuit 172 in the PHM control mode are outputted to the driver circuit 174. Due to this, drive signals corresponding to these modulated waves are outputted from the driver circuit 174 to the IGBTs 328 and 330 corresponding to each phase. As a result, the DC voltage outputted from the battery 136 is converted into three phase AC voltage, and this is supplied to the motor-generator 192.

When converting DC power into AC power using switching elements as in this power conversion device 140, it is possible to reduce the switching losses if the number of times switching is performed per unit time or per predetermined phase of AC output is reduced, but the obverse of this is that torque pulsations increase because there is a tendency for more harmonic components to be included in the converted AC output, so that there is a possibility that the responsiveness of motor control is deteriorated. Thus, with the present invention, by changing over between the PWM control mode and the PHM control mode as described above according to the frequency of the AC output to which DC is to be converted or according to the rotational speed of the motor that is correlated with this frequency, the PHM control method may be adopted in the region of motor rotation in which it cannot easily experience any influence from the harmonic components of low order, in other words in the high rotational speed region; while the PWM control method may be adopted in the low rotational speed region in which for torque pulsations are liable easily to be generated. By doing this, it is possible to suppress the occurrence of torque pulsations to a comparatively low level, and it is also possible to reduce switching losses.

It should be understood that the state of control with square waves in which the switching elements for each phase go ON and OFF once for each rotation of the motor is the control state of the motor at which the number of times of switching becomes a minimum. In the PHM control method described above, this state of control with square waves can be attained as one control state according to that PHM control mode, being the ultimate state as the number of times of switching per half cycle decreases according to increase of the modulation index in the converted AC output waveform. This point will be explained in detail hereinafter.

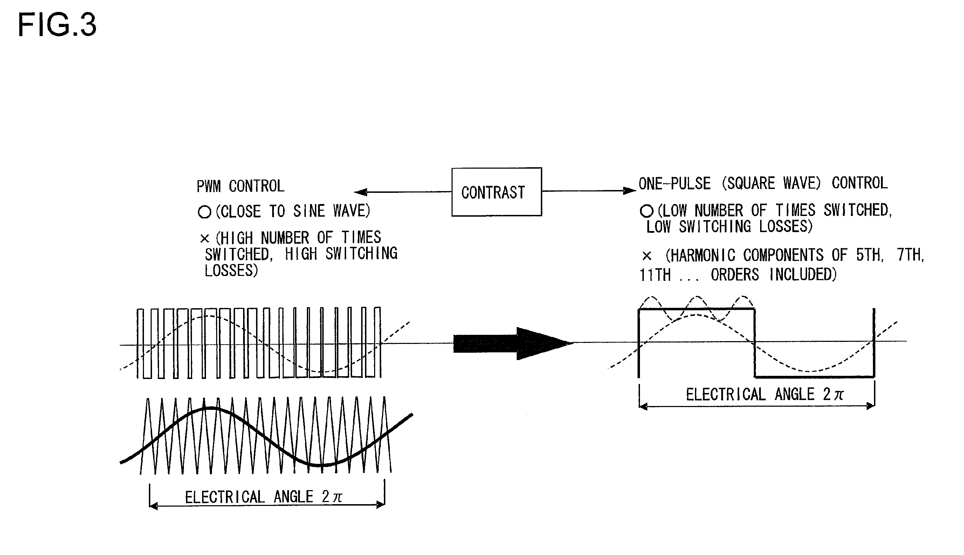

Next, in order to explain the PHM control method, first PWM control and square wave control will be explained with reference to Fig. 3. PWM control is a method for determining the timing at which the switching elements are to be made continuous and discontinuous, and thus controlling those switching elements, on the basis of comparing the magnitude of a carrier wave of a constant frequency and the magnitude of the AC waveform that it is desired to output. By using PWM control, it is possible to supply to the motor an AC output having a low level of pulsation, so that motor control with low torque pulsation becomes possible. On the other hand, there is the shortcoming that the switching losses are large, since the number of times of switching per unit time or per one cycle of the AC waveform is large. By contrast, as an extreme example, if the switching element is controlled using a square wave that has just one pulse, then it is possible to minimize the switching losses since the number of times switching is performed is minimized. The converse to this is that, if the influence of inductance load is ignored, the AC waveform that is the result of conversion has a square wave shape, and this may be viewed as a situation in which fifth order, seventh order, eleventh order, ... etc. harmonic components of a sine wave are included. When a square wave is Fourier expanded, in addition to the basic sine wave, harmonic components of the fifth order, seventh order, eleventh order, ... etc. appear. These harmonic components create current distortion, and this is a cause of torque pulsations. Thus, because of this, there is a mutually opposed relationship between PWM control and square wave control.

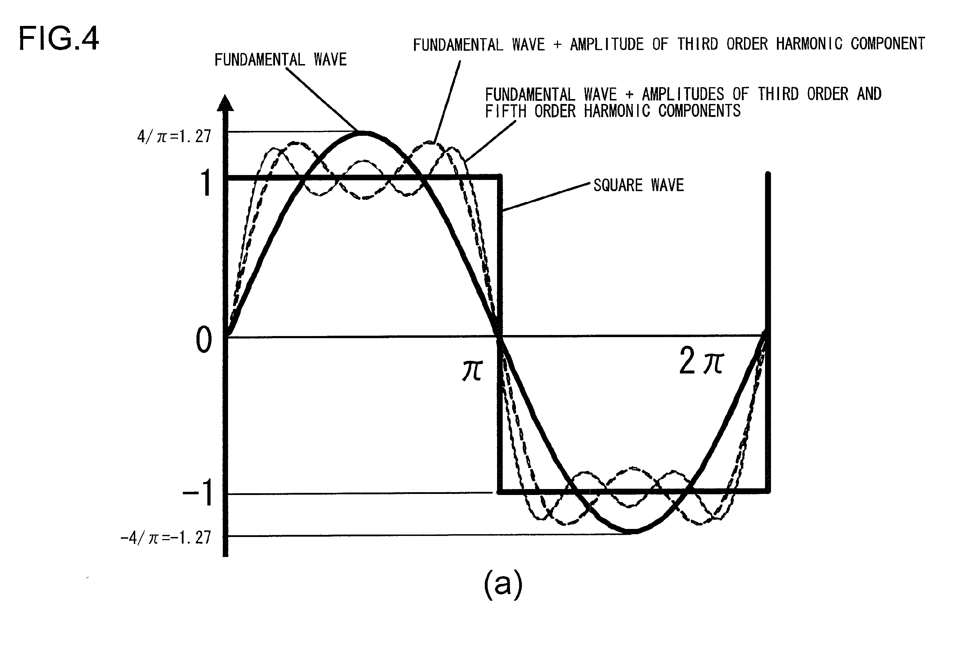

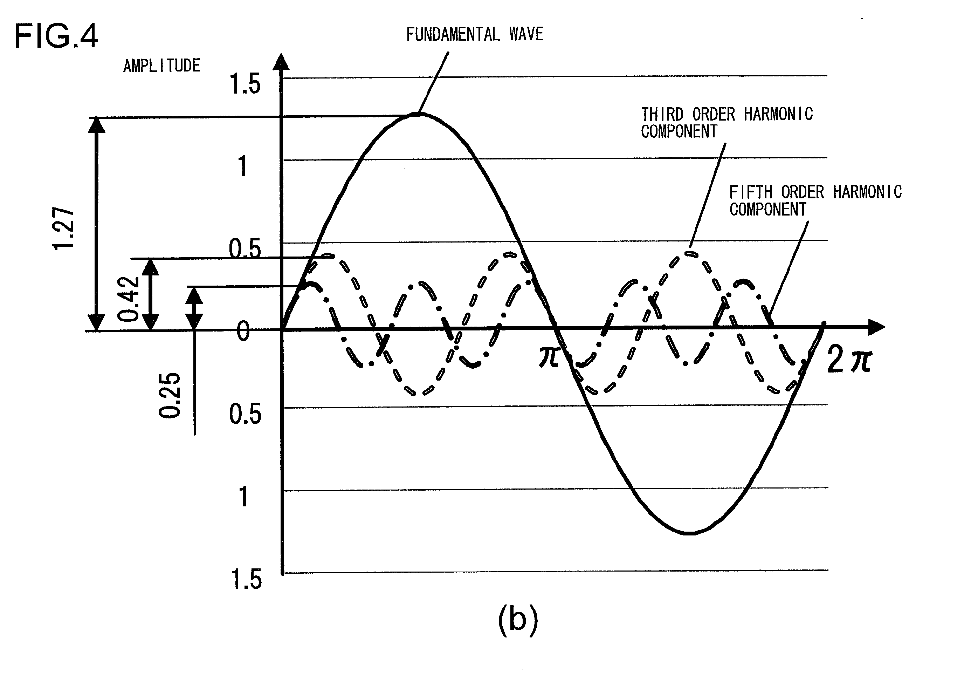

If control in a square wave pattern to make the switching element continuous and discontinuous is hypothesized, then an example of the harmonic components generated in the AC output is shown in Fig. 4. Fig. 4(a) is an example in which an AC waveform that varies in a square wave shape has been decomposed into sine wave harmonic components, with these being fundamental waves, of the fifth order, seventh order, eleventh order... and so on. The Fourier series expansion of the square wave shown in Fig. 4(a) is given by Equation (1):

$$f\,(\omega t) = 4/\pi \times \{\sin\omega t + (\sin 3\omega t)\,/3 + (\sin 5\omega t)\,/5 + (\sin 7\omega t)\,/7 + ...\} \cdots (1)$$

Equation (1) shows that the square wave shown in Fig. 4(a) is created from a sine wave given by $4/\pi \cdot (\sin \omega t)$ (this being the fundamental wave) and harmonic components of the third order, fifth order, seventh order, .... It will be understood that a square wave may be approximated by combining these higher order harmonic components into the fundamental wave in this manner.

Fig. 4(b) shows the situation when the amplitudes of the fundamental wave, of the third order harmonic component, and of the fifth order harmonic component are compared together. If the amplitude of the square wave of Fig. 4(a) is taken as being 1, then the amplitude of the fundamental wave is 1.27, the amplitude of the third order harmonic components is 0.42, and the amplitude of the fifth order harmonic component is 0.25. Since the amplitudes of the harmonic components decrease in this manner as their order increases, it will be understood that the influence that they exert upon square wave control decreases.

In consideration of the torque pulsations that may be generated with a square wave shape when the switching element goes continuous and discontinuous, by eliminating the harmonic components of high order whose influence is large, while on the other hand including the harmonic components of high order whose influence is small and thus ignoring their influence, it is possible to implement a power converter that has low switching losses and that moreover is capable of keeping increase in torque pulsations to a low level. With the PHM control used in this embodiment, the harmonic components that are included in the square wave AC current are somewhat reduced according to the state of control, and due to this the influence of torque pulsations upon motor control is reduced, but on the other hand it is arranged to reduce switching losses by ensuring that certain harmonic components are included, provided that no problem in use is entailed. As mentioned above, this type of control method is described in this specification as being the PHM control method.

Next, the structure of the control circuit 172 for implementing the control described above will be explained.

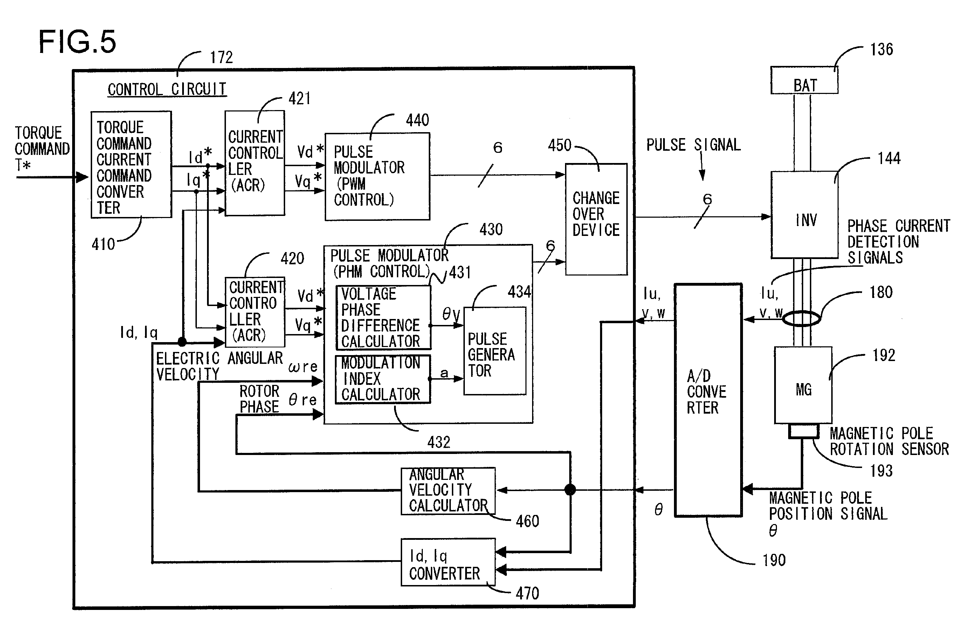

A motor control system with a control circuit 172 according to an embodiment of the present invention is shown in Fig. 5. As a target torque value, a torque command T* is inputted to the control circuit 172 by a higher level control device. On the basis of this torque command T* that has been inputted and of an electric angular velocity ωre calculated by an angular velocity calculator 460 on the basis of a magnetic pole position signal θ that has been obtained by detection by a magnetic pole rotation sensor 193 and conversion from an analog signal to a digital signal by an A/D converter 190, a torque command - current command converter 410 obtains a d axis current command signal Id* and a q axis current command signal Iq* using data stored in advance in a torque-rotational speed map. The d axis current command signal Id* and the q axis current command signal Iq* obtained by the torque command - current command converter 410 are respectively outputted to current controllers (ACRs) 420 and 421.

On the basis of the d axis current command signal Id* and the q axis current command signal Iq* that are outputted from the torque command - current command converter 410, and current signals Id and Iq that are generated by converting, into current signals upon the d and q axes, phase current detection signals Iu, Iv, and Iw for the motor-generator 192 that are detected by the current sensors 180 and converted from analog signals into digital signals by the A/D converter 190, the current controllers (ACRs) 420 and 421 respectively calculate a d axis voltage command signal Vd* and a q axis voltage command signal Vq*, so that the currents flowing in the motor-generator 192 track the d axis current command signal Id* and the q axis current command signal Iq*. It should be understood that this conversion from the phase current detection signal Iu, Iv, Iw to the current signals Id and Iq is performed by an Id and Iq converter 470 on the basis of the magnetic pole position signal θ. The d axis voltage command signal Vd* and the q axis voltage command signal Vq* obtained by the current controller (ACR) 420 are outputted to a pulse modulator for PHM control 430. On the other hand, the d axis voltage command signal Vd* and the q axis voltage command signal Vq* obtained by the current controller (ACR) 421 are outputted to a pulse modulator 440 for PWM control.

The pulse modulator for PHM control 430 includes a voltage phase difference calculator 431, a modulation index calculator 432, and a pulse generator 434. The d axis voltage command signal Vd* and the q axis voltage command signal Vq* outputted from the current controller 420 are inputted to the voltage phase difference calculator 431 and to the modulation index calculator 432 of the pulse modulator 430.

The voltage phase difference calculator 431 calculates the phase difference between the magnetic pole position of the motor-generator 192 and the voltage phase exhibited by the d axis voltage command signal Vd* and q axis voltage command signal Vq*, in other words their voltage phase difference. If this voltage phase difference is termed δ, then the voltage phase difference δ is given by Equation (2):

$$\delta = \arctan\left(-Vd^*/Vq^*\right) \cdots\cdots\cdots (2)$$

The voltage phase difference calculator 431 further calculates the voltage phase by adding the rotor phase angle, given by the magnetic pole position signal θ from the magnetic pole rotation sensor 193, to the voltage phase difference δ described above. And it outputs a voltage phase signal θv corresponding to this voltage phase that has been calculated to the pulse generator 434. If the rotor phase angle given by the magnetic pole position signal θ is termed θre, then this voltage phase signal θv is given by the following Equation (3):

$$\theta v = \delta + \theta re \cdots\cdots (3)$$

The modulation index calculator 432 calculates the modulation index by normalizing the size of a vector given by the d axis voltage command signal Vd* and q axis voltage command signal Vq* by the voltage of the battery 136, and outputs a modulation index signal a corresponding to this modulation index to the pulse generator 434. In this embodiment, the modulation index signal a described above thus comes to be determined on the basis of the battery voltage, i.e. on the basis of the DC voltage supplied to the power switching circuit 144 shown in Fig. 2, and the modulation index a has a tendency to become smaller when the battery voltage becomes high. Furthermore, the modulation index a has a tendency to become large when the value of the amplitude of the command value becomes great. In concrete terms, if the battery voltage is termed Vdc, then the modulation index a is given by Equation (4). It should be understood that, in Equation (4), Vd is the value of the amplitude of the d axis voltage command signal Vd* and Vq is the amplitude of the q axis voltage command signal Vq*, respectively.

$$a = (\sqrt{(Vd^2 + Vq^2)}) / Vdc \cdots\cdots (4)$$

On the basis of the voltage phase signal θv from the voltage phase difference calculator 431 and the modulation index signals a from the modulation index calculator 432, the pulse generator 434 generates six different pulse signals on the basis of PHM control, corresponding respectively to the upper and lower arms of the U phase, the V phase, and the W phase. And these pulse signals that have been generated are outputted to a changeover device 450 and are outputted from the changeover device 450 to the driver circuit 174, with a drive signal then being outputted to each of the switching elements. It should be understood that the method for generating these pulse signals on the basis of PHM control (hereinafter termed the PHM pulse signals) will be explained in detail hereinafter.

On the other hand, on the basis of the d axis voltage command signal Vd* and the q axis voltage command signal Vq* outputted from the current controller 421 and of the electric angular velocity ωre calculated by the angular velocity calculator 460 on the basis of the magnetic pole position signal θ from the magnetic pole rotation sensor 193, the pulse modulator 440 for PWM control generates six different pulse signals (hereinafter termed the PWM pulse signals) on the basis of PWM control, corresponding respectively to the upper and lower arms of the U phase, the V phase, and the W phase, according to a per se known PWM method. And these pulse signals that have been generated are outputted to the changeover device 450 and are supplied from the changeover device 450 to the driver circuit 174, with a drive signal then being supplied to each of the switching elements.

The changeover device 450 selects either the PHM pulse signals outputted from the pulse modulator 430 for PHM control or the PWM pulse signals outputted from the pulse modulator 440 for PWM control. This selection of a set of pulse signals by the changeover device 450 is performed according to the rotational speed of the motor-generator 192 or the like, as previously described. For example it may be arranged for the PWM control method to be applied by the power conversion device 140 by the PWM pulse signals being selected, if the rotational speed of the motor-generator 192 is lower than a predetermined threshold value that has been set as a changeover line. Moreover, it may be arranged for the PHM control method to be applied by the power conversion device 140 by the PHM pulse signals being selected, if the rotational speed of the motor-generator 192 is higher than the threshold value. In this manner, either the PHM pulse signals or the PWM pulse signals that have been selected by the changeover device 450 are outputted to the driver circuit 174 (not shown in the figure).

As has been explained above, either the PHM pulse signals or the PWM pulse signals are outputted from the control circuit 172 to the driver circuit 174 as modulated waves. Corresponding to these modulated waves, drive signals are outputted by the driver circuit 174 to the IGBTs 328 and 330 of the power switching circuit 144.

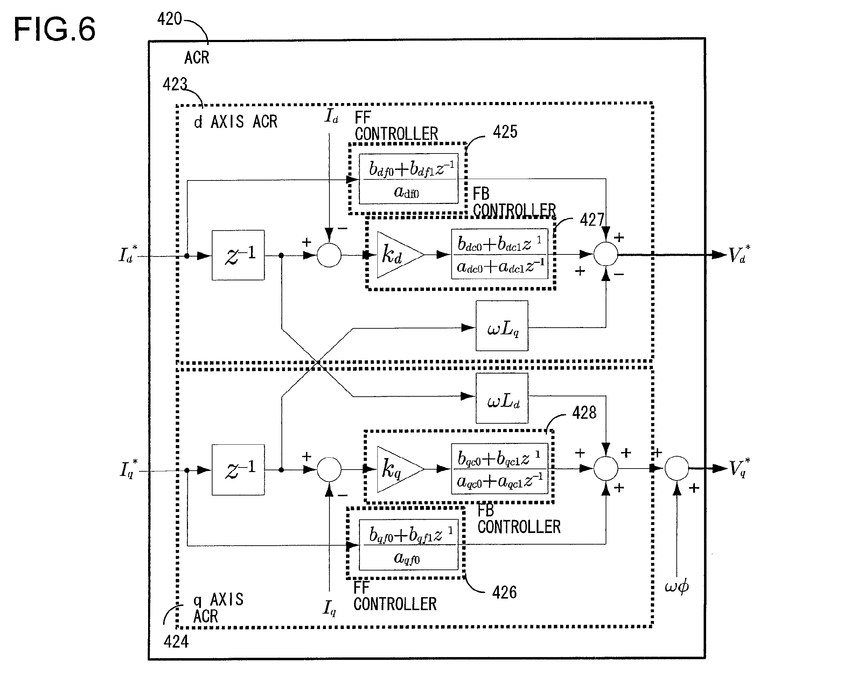

Next, the details of the current controller (ACR) 420 of Fig. 5 will be explained. As for example shown in Fig. 6, this current controller (ACR) 420 includes a current controller (ACR) 423 for the d axis for inputting the d axis current command signal Id* and for calculating a d axis voltage command signal Vd*, and a current controller (ACR) 424 for the q axis for inputting the q axis current command signal Iq* and for calculating a q axis voltage command signal Vq*. The current controller (ACR) 423 for the d axis includes a FF (feed-forward) controller 425 and a FB (feed-back) controller 427. And, similarly, the current controller (ACR) 424 for the q axis includes a FF (feed-forward) controller 426 and a FB (feed-back) controller 428.

In this manner, the current controller (ACR) 420 calculates the d axis voltage command signal Vd* and the q axis voltage command signal Vq* from the d axis current command signal Id* and the q axis current command signal Iq*, by using a combination of feed forward control by the FF controllers 425 and 426 and feedback control by the FB controllers 427 and 428. Due to this, accurate and moreover responsive current control can be implemented.

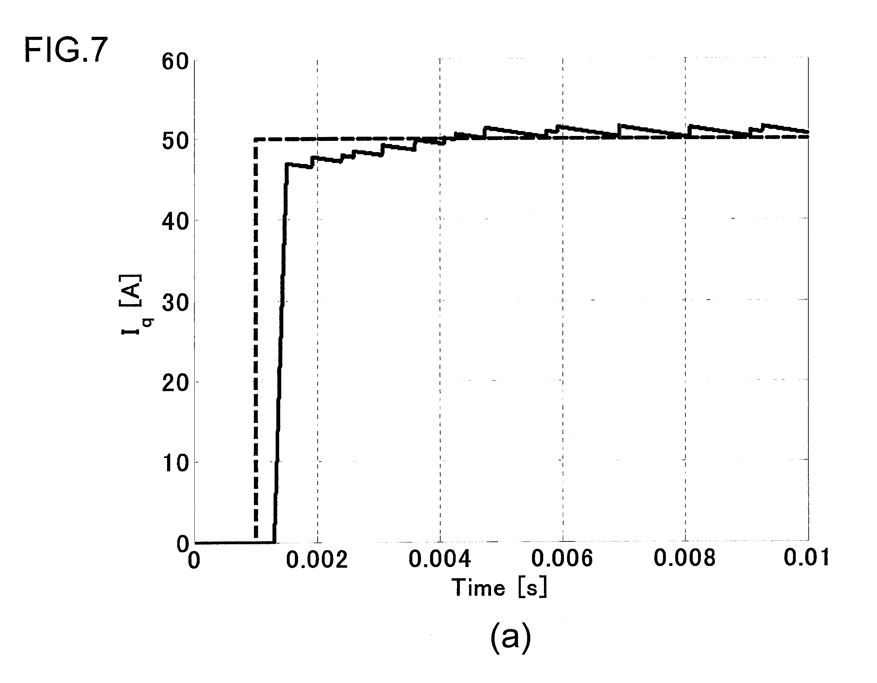

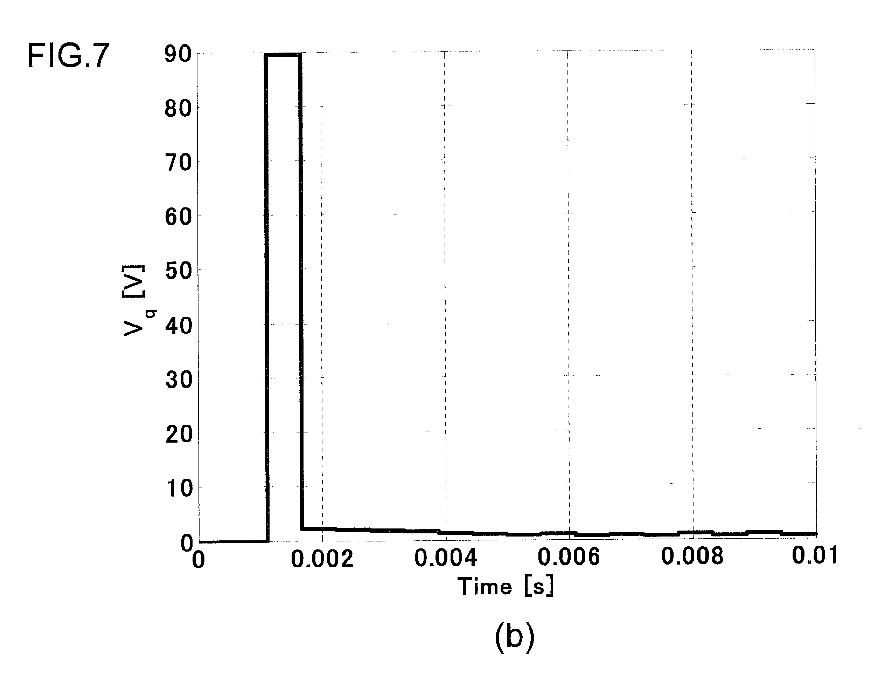

Figs. 7(a) and 7(b) respectively show the patterns of change of the q axis current Iq and the q axis voltage Vq flowing in the motor-generator 192 when the q axis current command signal Iq* has been changed abruptly using the current controller (ACR) 420 shown in Fig. 6. From these figures it will be understood that, even if the q axis current command signal Iq* changes abruptly, still it is possible for the q axis current Iq and the q axis voltage Vq to follow this change quickly, and moreover that accurate and also responsive current control can be implemented, since the fluctuations after the change are comparatively small.

Here, the transmission functions $G_{df}(z)$ and $G_{qf}(z)$ of the FF controllers 425 and 426 and the transmission functions $G_{dc}(z)$ and $G_{qc}(z)$ of the FB controllers 427 and 428, as shown in Fig. 6, are respectively given by the following Equations (5):

$$G_{df}(z) = \frac{b_{df0} + b_{df1}z^{-1}}{a_{df0}}$$

$$G_{qf}(z) = \frac{b_{qf0} + b_{qf1}z^{-1}}{a_{qf0}}$$

$$G_{dc}(z) = k_d \frac{b_{dc0} + b_{dc1}z^{-1}}{a_{dc0} + a_{dc1}z^{-1}}$$

$$G_{qc}(z) = k_q \frac{b_{qc0} + b_{qc1}z^{-1}}{a_{qc0} + a_{qc1}z^{-1}}$$

$$\cdots\cdots (5)$$

In Equations (5), the parameters $a_{df0}$, $b_{df0}$, and $b_{df1}$ in the transmission function $G_{df}(z)$ of the FF controller 425 and the parameters $aq_{f0}$, $bq_{f0}$, and $bq_{f1}$ in the transmission function $G_{qf}(z)$ of the FF controller 426 may be respectively expressed as in Equations (6):

$$a_{df0} = (T_u / L_d)\exp(T_u / T_d)$$

$$b_{df0} = 1$$

$$b_{df1} = \exp(T_u / T_d)$$

$$a_{qf0} = (T_u / L_q)\exp(T_u / T_q)$$

$$b_{qf0} = 1$$

$$b_{qf1} = \exp(T_u / T_q)$$

$$\cdots\cdots (6)$$

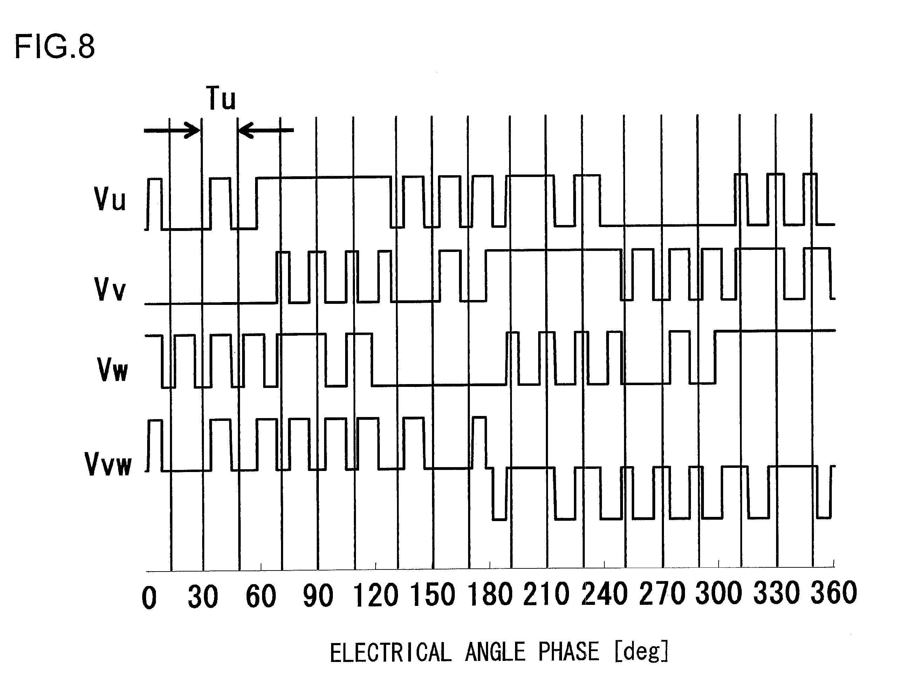

Here, $L_d$, $L_q$, $T_d$, and Tq in Equations (6) are respectively the d axis inductance, the q axis inductance, the d axis circuit time constant, and the q axis circuit time constant. Furthermore, the value of $T_u$ is determined as being a value corresponding to the pulse interval in the PHM pulse signal, as shown in Fig. 8. This value of $T_u$ changes according to the rotational speed of the motor-generator 192 and the pattern of the PHM pulses. Due to this, it is possible further to enhance the current control performance of the current controller (ACR) 420, and it is possible effectively to suppress turbulence in the current waveform for the motor-generator 192.

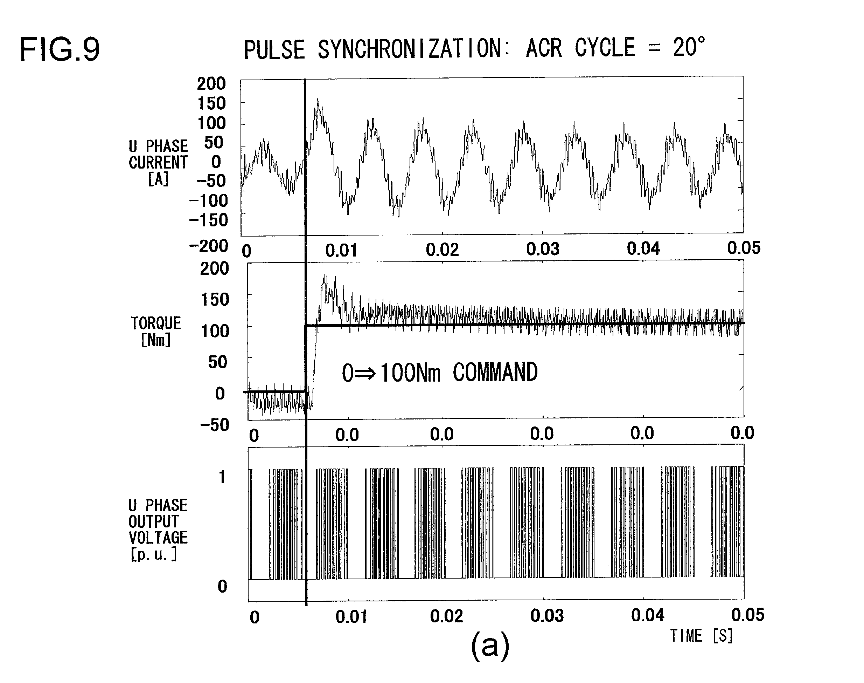

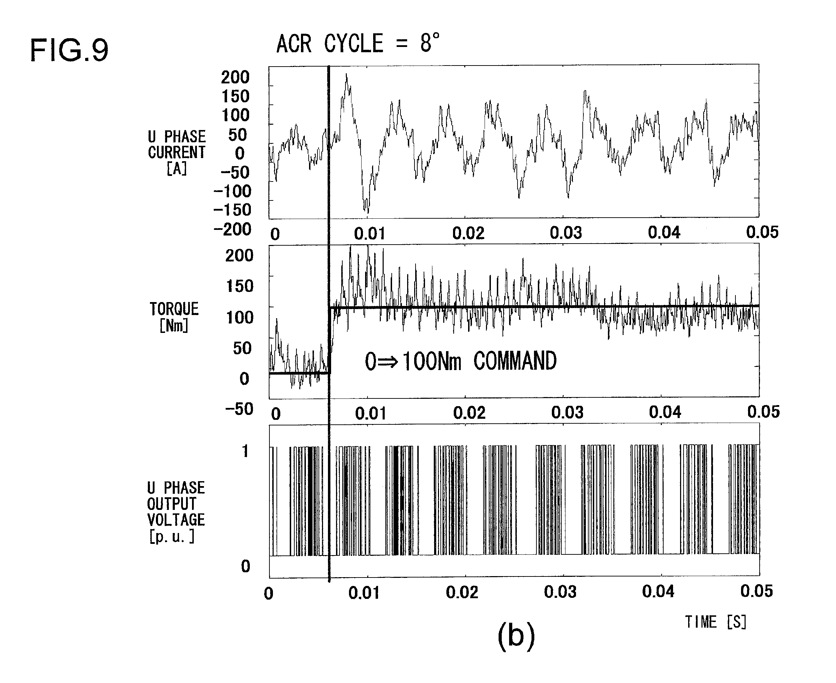

The results of comparison of the phase current, torque and phase voltage of the motor-generator 192 when the value of $T_u$ is changed according to the pulse interval as described above, and when it is not, are shown in Fig. 9. Fig. 9(a) shows an example when, as described above, the value of $T_u$ is set to a phase that is appropriate for the pulse shape, and in concrete terms, when the control is performed with the control cycle of the current controller (ACR) 420 set to 20°. On the other hand, Fig. 9(b) shows an example when, as described above, the value of $T_u$ is set to a phase that is not appropriate for the pulse shape, and in concrete terms, when the control is performed with the control cycle of the current controller (ACR) 420 set to 8°. It should be understood that, while the U phase current and the U phase voltage are shown since they are representative of all the phases, the same holds for the other phases, i.e. for the V phase and for the W phase.

When Figs. 9(a) and 9(b) are compared together, it will be understood that the fluctuations of the phase current and of the torque after the torque value has been changed from 0 to 100 Nm as a torque command value are smaller and more stable in the Fig. 9(a) case than in the Fig. 9(b) case. By synchronizing the value of $T_u$ with the pulses and changing it according to the pulse interval in this manner, it becomes possible to enhance the current control performance of the current controller (ACR) 420, and it becomes possible to stabilize the current and the torque of the motor-generator 192.

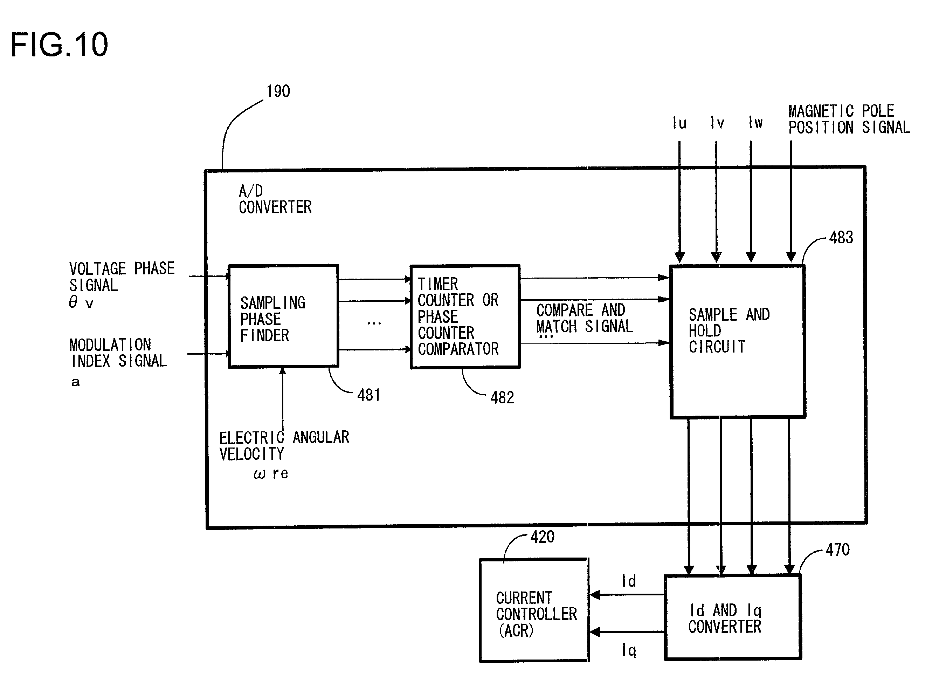

Next, the details of the A/D converter 190 of Fig. 5 will be explained. This A/D converter 190, as for example shown in Fig. 10, is implemented with a sampling phase finder 481, a timer counter (or phase counter) comparator 482, and a sample hold circuit 483. As input signals, the sampling phase finder 481 acquires the voltage phase signal θv outputted from the voltage phase difference calculator 431, the modulation index signal a outputted from the modulation index calculator 432, and the electric angular velocity signal ωre outputted from the angular velocity calculator 460. On the basis of these input signals, the sampling phase finder 481 finds, from a table of sampling phases that has been stored in advance, phases at which the current waveform is to be detected for each of the U phase, the V phase, and the W phase, and outputs information about these results that have been found to the timer counter comparator 482.

On the basis of the search results outputted from the sampling phase finder 481, the timer counter comparator 482 generates a compare-match signal for each of the U phase, the V phase, and the W phase, and outputs these compare-match signals to the sample hold circuit 483. And, on the basis of these compare-match signals from the timer counter comparator 482, the sample hold circuit 483 determines sampling timings for the phase current detection signals lu, lv, and lw detected by the current sensors 180, and for the magnetic pole position signal θ detected by the magnetic pole rotation sensor 193, and samples these signals and converts them from analog signals to digital signals. The phase current detection signals lu, lv, and lw and the magnetic pole position signal θ sampled by the sample hold circuit 483 are outputted to the Id and Iq converter 470, and are converted by the Id and Iq converter 470 into Id and Iq current signals that are outputted to the current controller (ACR) 420. It should be understood that the magnetic pole position signal θ after A/D conversion is also outputted from the sample hold circuit 483 to the voltage phase difference calculator 431 and to the angular velocity calculator 460.

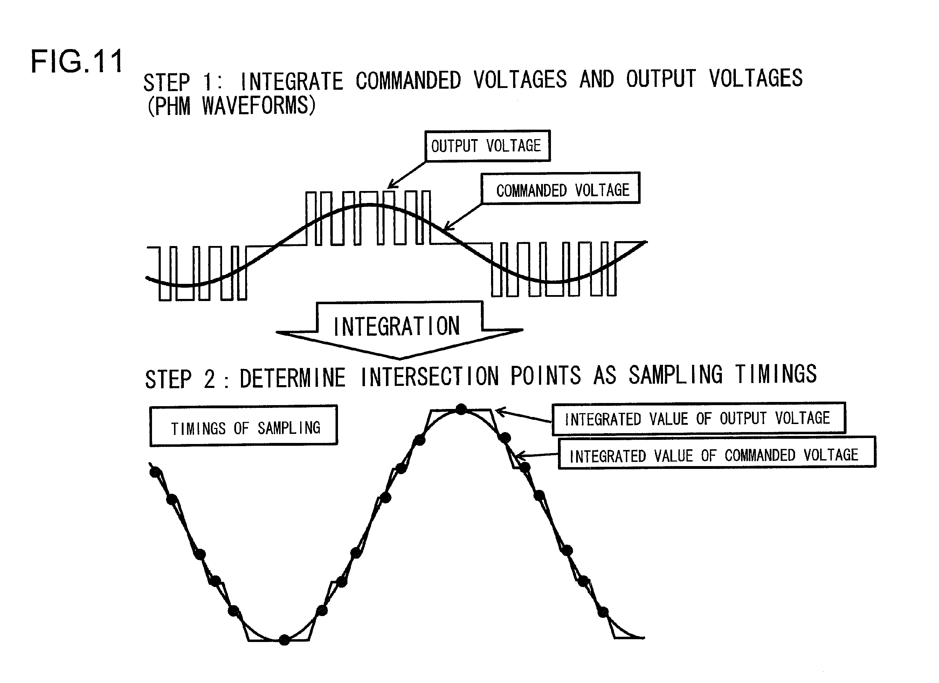

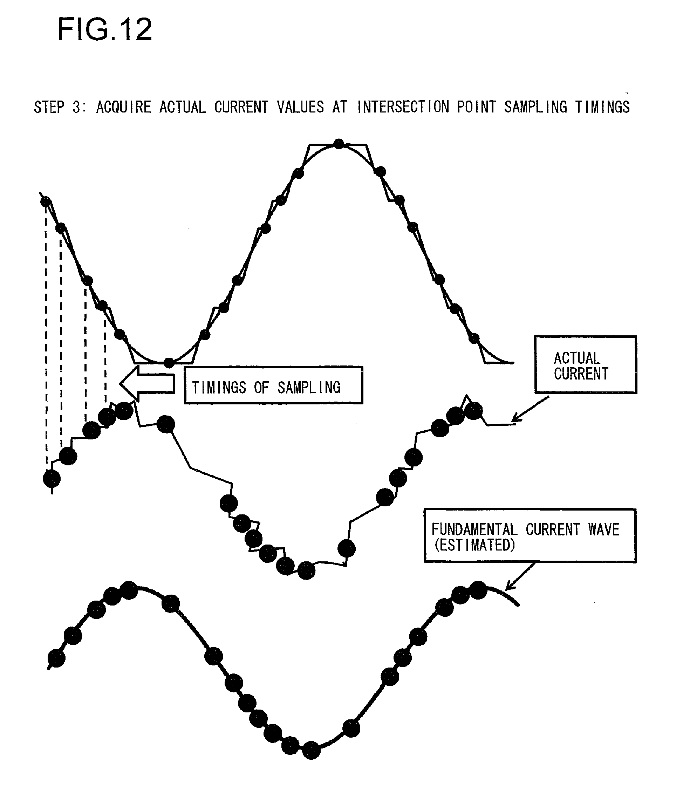

A summary of the current acquisition method when the phase current detection signals lu, lv, and lw are converted from analog signals into digital signals by the A/D converter 190 is shown in Figs. 11 and 12. First, as shown in Fig. 11, the voltage command values based upon the d axis voltage command signal Vd* and the q axis voltage command signal Vq*, and PHM pulse signals as the output voltages by the pulse generator 434 corresponding to these voltage command values, are both integrated in advance. Next, the points of intersection at which these results of integration meet and cross are obtained, and these points of intersection are determined as being the timings of sampling. Information about the timings of sampling determined in this manner is made into a table, and is stored in the sampling phase finder 481 as a sampling phase table.

When the phase current detection signals lu, lv, and lw are detected by the current sensors 180, the sampling timings are determined as shown in Fig. 12 on the basis of the sampling phase table that is stored in the sampling phase finder 481, and the values of the phase current detection signals lu, lv, and lw are acquired discretely at these sampling timings as the actual current values. By acquiring actual discrete current values in this manner, the A/D converter 190 converts the phase current detection signals lu, lv, and lw from analog signals into digital signals.

On the basis of the digital signals for the actual current values that have been acquired by the A/D converter 190 in the above manner, the fundamental current waves are estimated by the Id and Iq converter 470, and Id and Iq current signals are generated.

As has been explained above, the sampling timings are determined by the A/D converter 190, and the phase current detection signals lu, lv, and lw from the current sensors 180 are sampled according to these timings. By using these sampling values, the fundamental current waves can be accurately estimated by the Id and Iq converter 470, and the Id and Iq current signals can be generated. As a result, it is possible to implement accurate current control by the current controller (ACR) 420.

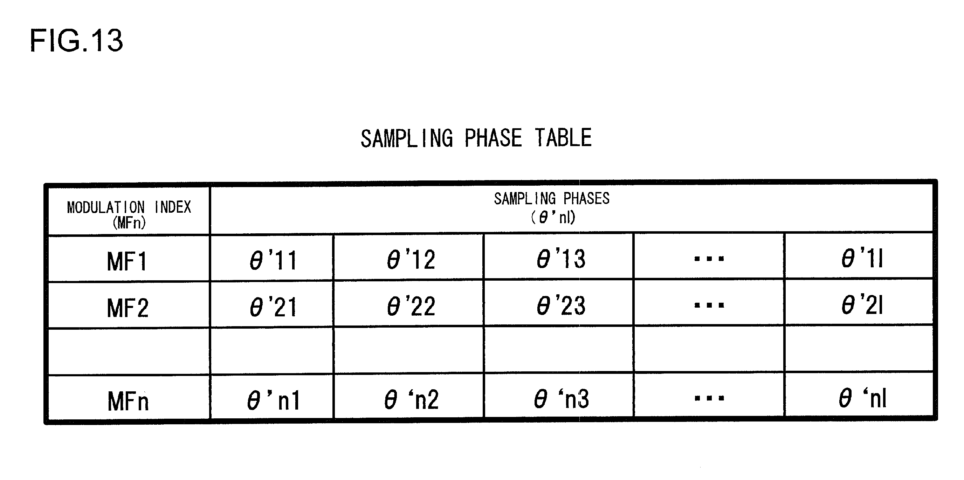

Fig. 13 shows an example of a sampling phase table that is stored in the sampling phase finder 481. As shown in Fig. 13, for this sampling phase table, sampling phase values for each modulation index are stored in the sampling phase finder 481. Sampling phase values that correspond to the modulation index signal a are searched for in this sampling phase table by the sampling phase finder 481, and the result that is found is outputted to the timer counter comparator 482.

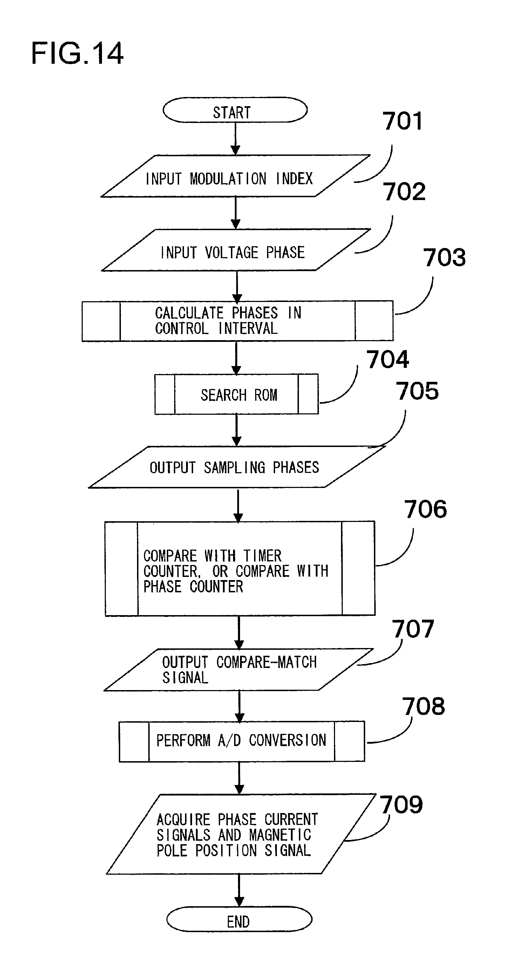

A flow chart is shown in Fig. 14 for detailed explanation of the procedure for A/D conversion by the A/D converter 190 of Fig. 5. The sampling phase finder 481 inputs the modulation index signal a in a step 701 as an input signal, and then in a step 702 it inputs the voltage phase signal θv as an input signal. Next in a step 703, on the basis of the current voltage phase signal θv that has been inputted, and in consideration of the control delay time period and the rotational speed that is given by the electric angular velocity signal ωre, the sampling phase finder 481 calculates the range of voltage phase that corresponds to the next control cycle. Then in a step 704 the sampling phase finder 481 performs searching of the ROM. In this ROM searching, sampling phases are searched for in the ROM (not shown in the figures) over the range of voltage phase that was calculated in the step 703, according to the table that was stored in advance, on the basis of the modulation index signal a that was inputted.

In a step 705, the sampling phase finder 481 outputs information about the sampling phases found by the ROM searching of the step 704 to the timer counter comparator 482. And in a step 706 the timer counter comparator 482 converts this phase information into time information, and generates a compare-match signal by using a function of compare-matching with a timer counter. It should be understood that this processing of converting the phase information into time information utilizes the electric angular velocity signal ωre. Or, it would also be acceptable to replace the timer counter comparator 482 with a phase counter comparator. In this case, it would be possible to utilize the information about the sampling phases obtained by the ROM searching in the step 704 just as it is, and in the step 706 it would be possible to generate the compare-match signal by using a function of compare-matching with a phase counter.

In the next step 707, the timer counter comparator 482 outputs the compare-match signal generated in the step 706 to the sample hold circuit 483. And in a step 708, on the basis of this compare-match signal, the sample hold circuit 483 determines the sampling timings for each of the phase current detection signals lu, lv, and lw and for the magnetic pole position signal θ, and executes A/D conversion by performing sampling of each of these signals at that sampling timing.

The phase current detection signals lu, lv, and lw and the magnetic pole position signal θ that have been converted from analog signals to digital signals by the A/D conversion of the step 708 are outputted from the A/D converter 190 to the Id and Iq converter 470, and are acquired by the Id and Iq converter 470 in a step 709. Id and Iq current signals are obtained by the Id and Iq converter 470 on the basis of the phase current detection signals lu, lv, and lw and the magnetic pole position signal θ after A/D conversion that have been acquired in this manner, and are output to the current controller (ACR) 420.

A/D conversion of the phase current detection signals lu, lv, and lw from the current sensors 180 and of the magnetic pole position signal θ from the magnetic pole rotation sensor 193 is performed by the processing of the steps 701 through 709 explained above being executed by the A/D converter 190.

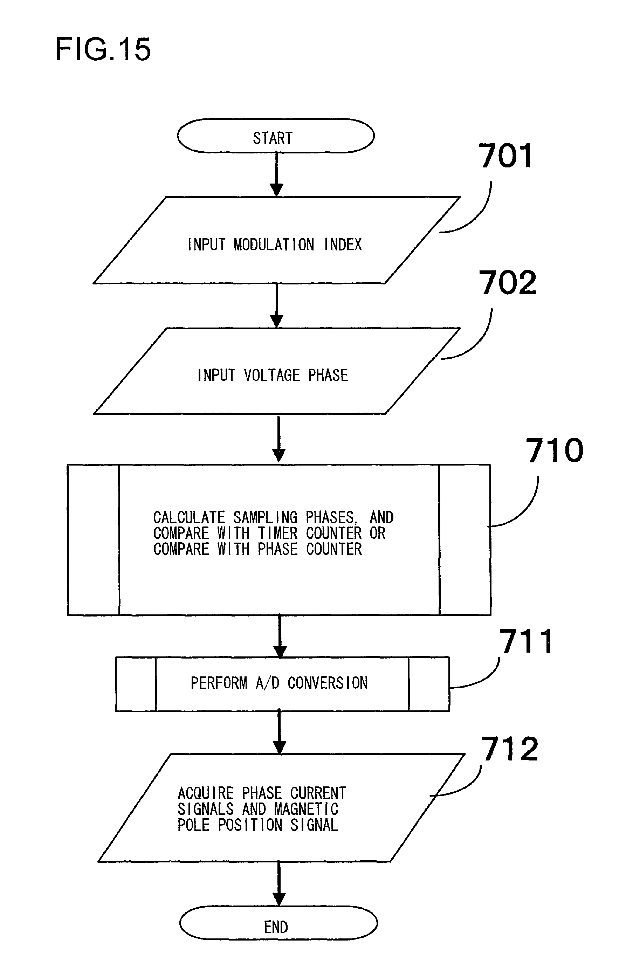

Or, instead of the flow chart of Fig. 14, it would also be acceptable to arrange to perform the A/D conversion of the phase current detection signals lu, lv, and lw and of the magnetic pole position signal θ by the A/D converter 190 executing the processing shown in the flow chart of Fig. 15. This processing does not use a table searching method in which the sampling phases are searched for using a table that is stored in advance, as shown in the flow chart of Fig. 14, but rather uses a method of generating the sampling phases for each control cycle of the current controller (ACR).

In a step 701, the A/D converter 190 inputs the modulation index signal a, and then in a step 702 it inputs the voltage phase signal θv. Next in a step 710, on the basis of the modulation index signal a and the voltage phase signal θv that have thus been inputted, and in consideration of the control delay time period and of the rotational speed that is given by the electric angular velocity signal ωre, the A/D converter 190 calculates the sampling phases and determines them for each control cycle of the current controller (ACR). Here, as explained in Fig. 11, a voltage command value and the PHM pulse signal as an output voltage are obtained from the modulation index signal a and the voltage phase signal θv, and the sampling phases are determined by integrating these and obtaining their points of mutual intersection. And, on the basis of information about the sampling phases that have been determined, a compare-match signal is generated by using the compare-match function of a timer counter or of a phase counter. It should be understood that, if a timer counter is used, then as previously described it is necessary to convert the information about the sampling phases into time information based upon the electric angular velocity signal ωre.

Then in a step 711, on the basis of the compare-match signal generated in the step 710 as described above, the A/D converter 190 determines the sampling timings for the phase current detection signals lu, lv, and lw and for the magnetic pole position signal θ, and executes A/D conversion by performing sampling of these signals at that sampling timing.

The phase current detection signals lu, lv, and lw and the magnetic pole position signal θ that have been A/D converted from analog signals into digital signals in the step 711 are outputted from the A/D converter 190 to the Id and Iq converter 470, and are acquired by the Id and Iq converter 470 in a step 712. On the basis of the phase current detection signals Iu, Iv, and Iw and the magnetic pole position signal θ that have been acquired in this manner after having been A/D converted, Id and Iq current signals are obtained by the Iq and Id converter 470, and are outputted to the current controller (ACR) 420. In this manner as well, it is possible to perform A/D conversion of the phase current detection signals Iu, Iv, and Iw and of the magnetic pole position signal θ.

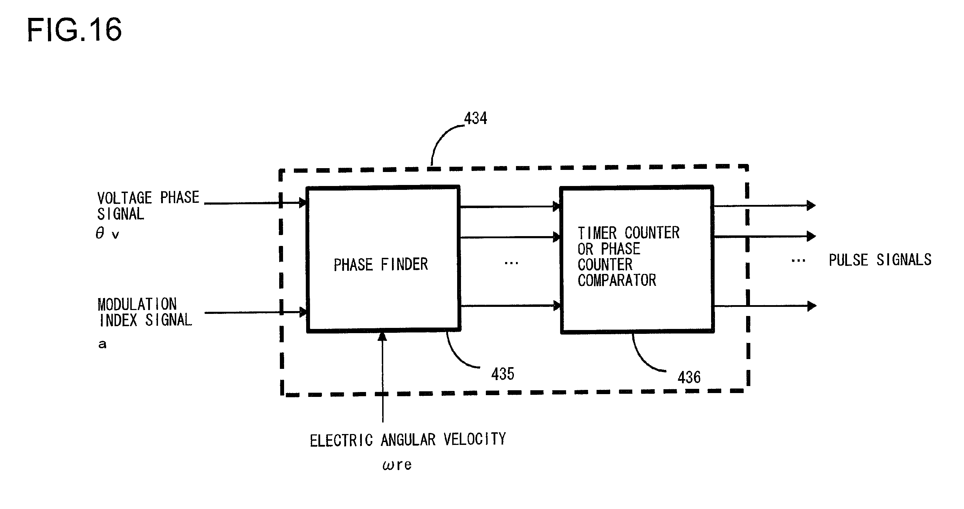

Now the details of the pulse generator 434 of Fig. 5 will be explained. As shown for example in Fig. 16, this pulse generator 434 is implemented with a phase finder 435 and a timer counter comparator 436. On the basis of the voltage phase signal θv from the voltage phase difference calculator 431, the modulation index signal a from the modulation index calculator 432, and the electric angular velocity signal ωre from the angular velocity calculator 460, the phase finder 435 finds the phases at which switching pulses are to be outputted for the upper and lower arms of the U phase, the V phase, and the W phase from a table of switching pulse phase information that is stored in advance, and outputs information specifying the result of this search to the timer counter comparator 436. And, on the basis of the results of searching outputted from the phase finder 435, the time counter comparator 436 creates six PHM pulse signals as switching commands for the upper and lower arms of the U phase, the V phase, and the W phase. These six PHM pulse signals for the upper and lower arms of each phase that have thus been created by the timer counter comparator 436 are outputted to the changeover device 450, as previously described.

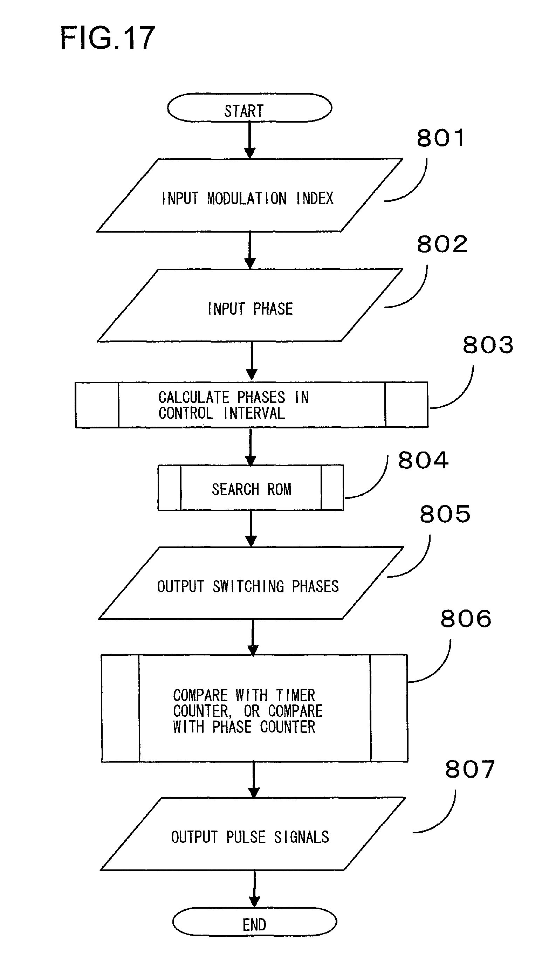

A flow chart is shown in Fig. 17 for explanation of the details of the procedure for pulse generation by the phase finder 435 and the timer counter comparator 436 of Fig. 16. In a step 801 the phase finder 435 inputs the modulation index signal a as an input signal, and then in a step 802 it inputs the voltage phase signal θv as an input signal. Next in a step 803, on the basis of the current value of the voltage phase signal θv that has been inputted, and in consideration of the control delay time period and the rotational speed as given by the electric angular velocity signal ωre, the phase finder 435 calculates a range of voltage phase that corresponds to the next control cycle. And in the next step 804 the phase finder 435 performs ROM searching. In this ROM searching, on the basis of the modulation index signal a that was inputted, and in the range of voltage phase that was calculated in the step 803, phases for turning switching ON and OFF are found from a table that is stored in advance in a ROM (not shown in the figures).

Then in a step 805 the phase finder 435 outputs the information about the phases for switching ON and OFF that was obtained by the ROM searching in the step 804 to the timer counter comparator 436. Then the timer counter comparator 436 converts this phase information into time period information in a step 806, and generates a PHM pulse signal using a compare-match function with a timer counter. It should be understood that the processing of converting the phase information into time period information takes advantage of the electric angular velocity signal ωre. Or, it would also be acceptable to replace the timer counter comparator 436 by a phase counter comparator. In this case, the information about the phases for switching ON and OFF obtained by the ROM searching in the step 804 could be utilized just as it is, and, in the step 806, it would be possible to generate PHM pulses by taking advantage of the compare-match function with a phase counter.

In the next step 807, the timer counter comparator 436 outputs the PHM pulse signals that were created in the step 806 to the changeover device 450. By the processing of the steps 801 through 807 explained above being performed by the phase finder 435 and the timer counter comparator 436, the PHM pulse signals are created by the pulse generator 434.

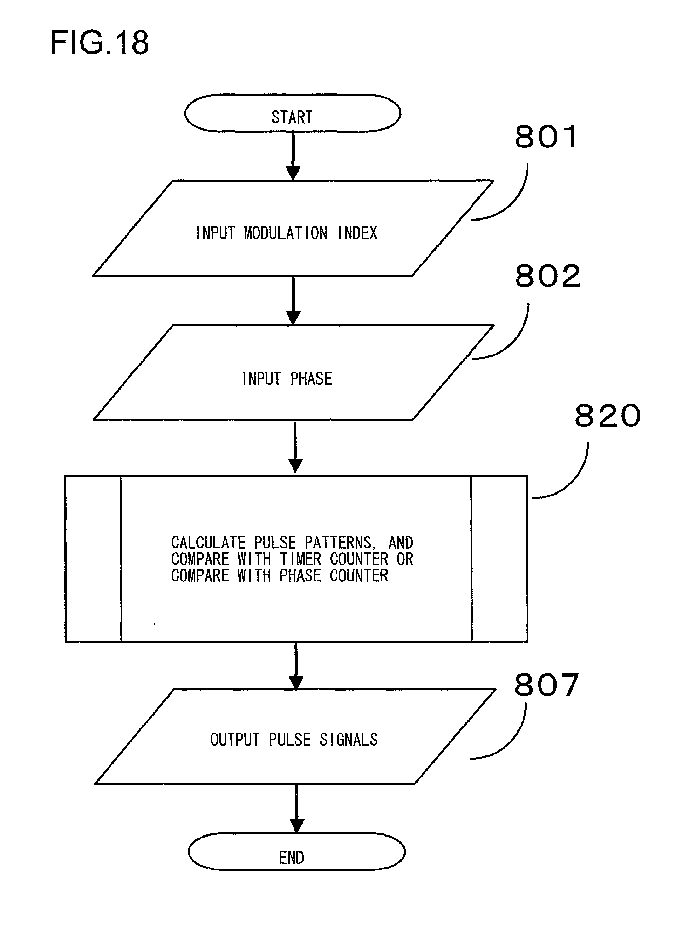

Or, instead of the flow chart of Fig. 17, it would also be acceptable to arrange to perform pulse generation by executing processing with the pulse generator 434, as shown in the flow chart of Fig. 18. This processing does not use the table searching method of finding the switching phases using a table that is stored in advance, as in the case of the flow chart of Fig. 17; rather, it is a method of generating the switching phases for each control cycle of the current controller (ACR).

In a step 801 the pulse generator 434 inputs the modulation index signal a, and in a step 802 it inputs the voltage phase signal θv. Next in a step 820, on the basis of the modulation index signal a and the voltage phase signal θv that were inputted, and in consideration of the control delay time period and the rotational speed as given by the electric angular velocity signal ωre, the pulse generator 434 determines phases for turning the switching ON and OFF for each control cycle of the current controller (ACR).

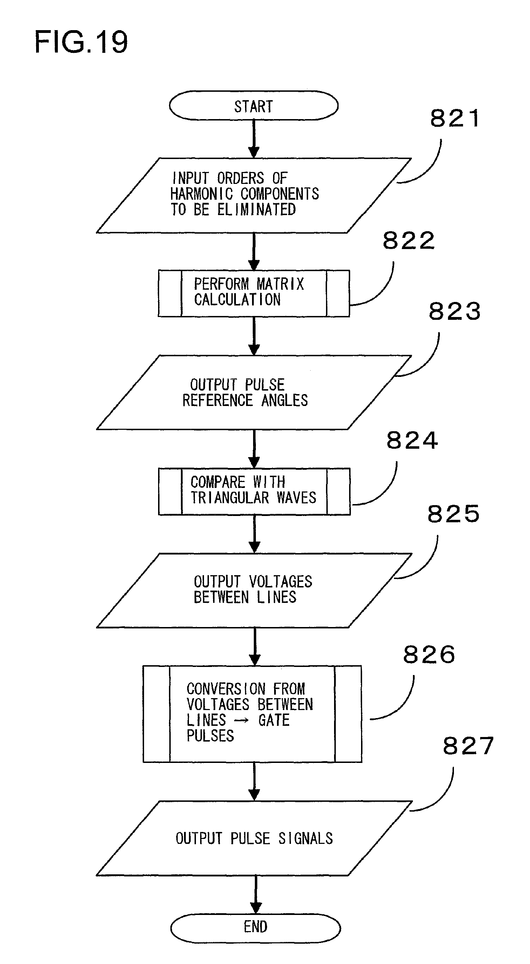

The details of the processing for determining the switching phases in the step 820 are shown in the flow chart of Fig. 19. In a step 821, the pulse generator 434 specifies orders of harmonic components to be eliminated, on the basis of the rotational speed as given by the electric angular velocity signal ωre. And, according to the harmonic component orders that have been specified in this manner, in the next step 822, the pulse generator 434 performs processing such as matrix calculation or the like, and then in a step 823 it outputs pulse reference angles.

The pulse generation process in the steps 821 through 823 is performed by calculation in accordance with the matrix equations given in the following Equations (7) through (10).

As an example, a case will be discussed in which the harmonic components of the third order, the fifth order, and the seventh order are to be eliminated.

When the harmonic components of the third order, the fifth order, and the seventh order have been specified in the step 821 as the orders of harmonic components to be eliminated, then the pulse generator 434 performs the following matrix calculation in the next step 822.

A row vector as in Equation (7) is created for this elimination of the harmonic components of the third order, the fifth order and the seventh order:

$$\begin{bmatrix} x_1 & x_2 & x_3 \end{bmatrix} = \pi/2 \begin{bmatrix} k_1/3 & k_2/5 & k_3/7 \end{bmatrix}$$

$$\cdots\cdots (7)$$

The terms within the parentheses on the right side of Equation (7) are $k_1/3$, $k_2/5$, and $k_3/7$. Now $k_1$, $k_2$, and $k_3$ may be selected to be any desired odd numbers. However, it will not be acceptable for $k_1$ to be 3, 9, or 15; for $k_2$ to be 5, 15, or 25; or for $k_3$ to be 7, 21, or 35, or the like. Under these conditions, the third order, fifth order, and seventh order harmonic components may be perfectly eliminated.

To express the above more generally, the value of each of the terms in Equation (7) may be determined by taking the value of its denominator as being the order of the harmonic component that is to be eliminated, and by taking the value of its numerator as being any desired odd number except for an odd multiple of its denominator. Here, in the example of Equation (7), the number of elements in the row vector is three, because there are harmonic components of three orders to be eliminated (i.e. the components of the third order, the fifth order, and the seventh order). In a similar manner, for elimination of harmonic components of N orders, a row vector of N terms may be set up, with the value of each term being determined as above.

It should be understood that, in Equation (7), instead of eliminating harmonic components, it is also possible to perform waveform shaping of the spectrum by making the value of the numerator and the denominator of each term other than that described above. Because of this, it would also be acceptable to arrange to set the values of the numerator and the denominator of each term with the primary objective, not of eliminating harmonic components, but rather of spectral waveform shaping. In this case, while there is no need for the values of the numerator and the denominator necessarily to be integral, it will not be acceptable for an odd multiple of the denominator to be selected as the value of the numerator. Moreover, it is not necessary for the values of the numerator and the denominator to be constants; they could also be values that change with time.

If, as described above, there are three terms for which combinations of values of the denominator and the numerator are determined, then a vector of three columns may be set up as in Equation (7). In a similar manner, a vector having N terms that are determined by combinations of values of the denominator and the numerator, in other words a vector of N columns, may be set up. In the following, a N-column vector of this type will be termed a "harmonic component reference phase vector".

If the harmonic component reference phase vector is a three-column vector as in Equation (7), then this harmonic component reference phase vector is transposed for the calculation shown in Equation (8). The result is that the pulse reference angles from S1 to S4 are obtained.

The pulse reference angles S1 through S4 are parameters that give the center positions of the voltage pulses, and they are compared with a triangular wave carrier as described hereinafter. If four pulse reference angles (S1 through S4) are used in this manner, then generally the number of voltage pulses between lines per one cycle becomes sixteen.

$$\begin{bmatrix} S_1 \\ S_2 \\ S_3 \\ S_4 \end{bmatrix} = \left\{ 2 \begin{bmatrix} 1 & 0 & 0 \\ 1 & 0 & 1 \\ 1 & 1 & 0 \\ 1 & 1 & 1 \end{bmatrix} - \begin{bmatrix} 1 & 1 & 1 \\ 1 & 1 & 1 \\ 1 & 1 & 1 \\ 1 & 1 & 1 \end{bmatrix} \right\} \begin{bmatrix} x_1 \\ x_2 \\ x_3 \end{bmatrix}$$

$$\cdots\cdots (8)$$

Furthermore if, instead of Equation (7), the harmonic component reference phase vector is a four-column vector as in Equation (9), then the matrix calculation Equation (10) is applied.

$$\begin{bmatrix} x_1 & x_2 & x_3 & x_4 \end{bmatrix} = \pi/2 \begin{bmatrix} k_1/3 & k_2/5 & k_3/7 & k_4/11 \end{bmatrix}$$

$$\cdots\cdots (9)$$

$$\begin{bmatrix} S_1 \\ S_2 \\ S_3 \\ S_4 \\ S_5 \\ S_6 \\ S_7 \\ S_8 \end{bmatrix} = \left\{ 2 \begin{bmatrix} 1 & 0 & 0 & 0 \\ 1 & 0 & 0 & 1 \\ 1 & 0 & 1 & 0 \\ 1 & 0 & 1 & 1 \\ 1 & 1 & 0 & 0 \\ 1 & 1 & 0 & 1 \\ 1 & 1 & 1 & 0 \\ 1 & 1 & 1 & 1 \end{bmatrix} - \begin{bmatrix} 1 & 1 & 1 & 1 \\ 1 & 1 & 1 & 1 \\ 1 & 1 & 1 & 1 \\ 1 & 1 & 1 & 1 \\ 1 & 1 & 1 & 1 \\ 1 & 1 & 1 & 1 \\ 1 & 1 & 1 & 1 \\ 1 & 1 & 1 & 1 \end{bmatrix} \right\} \begin{bmatrix} x_1 \\ x_2 \\ x_3 \\ x_4 \end{bmatrix}$$

$$\cdots\cdots (10)$$

The result is that the pulse reference angle outputs S1 through S8 are obtained. At this time, the number of voltage pulses between the lines per one cycle becomes 32.

The general relationship between the number of harmonic components to be eliminated and the number of pulses is as follows. That is, if there are 2 harmonic components to be eliminated, the number of pulses per one cycle of the voltage between lines is 8; if there are 3 harmonic components to be eliminated, the number of pulses per one cycle of the voltage between lines is 16; if there are 4 harmonic components to be eliminated, the number of pulses per one cycle of the voltage between lines is 32; and if there are 5 harmonic components to be eliminated, the number of pulses per one cycle of the voltage between lines is 64. In a similar manner, each time the number of harmonic components to be eliminated increases by one, the number of pulses per one cycle of the voltage between lines is doubled.

However, in the case of a pulse arrangement on the voltage between lines in which positive and negative pulses are superimposed, then sometimes it is the case that the number of pulses is different from that described above.

Pulse waveforms for the three voltages between pairs of lines, i.e. for the voltage between the U line and the V line, for the voltage between the V line and the W line, and for the voltage between the W line and the U line, are created by the PHM pulse signals generated by the pulse generator 434 as described above. The pulse waveforms of these voltages between lines are the same pulse waveform, but have phase differences of $2\pi/3$. Accordingly in the following, as a typical representative of these voltages between lines, only the voltage between the U line and the V line will be explained.

Here, the relationship of Equation (11) holds between the reference phase θuvl of the voltage between the U and V lines, the voltage phase signal θv, and the rotor phase θre.

$$\theta uvl = \theta v + \pi/6 = \theta re + \delta + \pi/6 \text{ [rad]} \cdots\cdots (11)$$

The waveform of the voltage between the U and V lines given by Equation (11) is bilaterally symmetric about the positions θuvl=$\pi/2$ and θuvl=$3\pi/2$ as centers, and moreover is point symmetric about the positions θuvl=0 and θuvl=$\pi$ as centers. Accordingly, the waveform of one cycle of the pulses of the voltage between the U and V lines (from θuvl=0 to θuvl=$2\pi$) may be expressed as the pulse waveform of θuvl from 0 to $\pi/2$, augmented by repeating the same waveform for each interval of $\pi/2$, reversed horizontally and/or vertically.

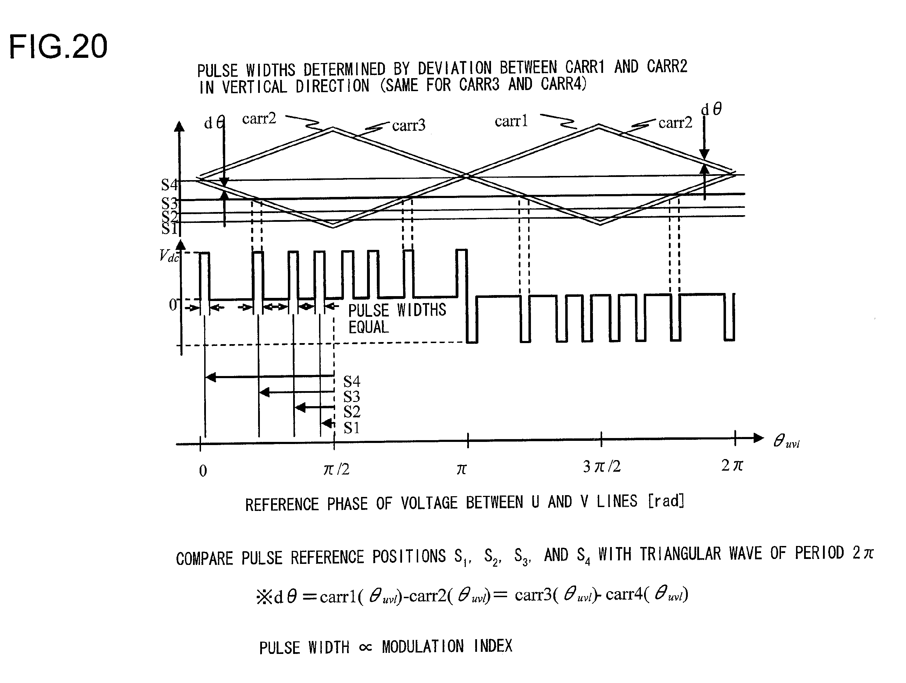

One method for implementing this is an algorithm that compares the phase centers of the voltage pulses between the U and V lines in the range 0≤θuvl≤$\pi/2$ with a four channel phase counter, and generates voltage pulses between the U and V lines over one full cycle, in other words in the range 0≤θuvl≤$2\pi$, on the basis of the results of this comparison. Fig. 20 illustrates this concept.

Fig. 20 shows an example of a case when the number of voltage pulses between the lines in the range $0 \leq \theta uvl \leq \pi/2$ is 4. In Fig. 20, the pulse reference angles S1 through S4 denote the phase centers of these four pulses.

carr1($\theta$uvl), carr2($\theta$uvl), carr3($\theta$uvl), and carr4($\theta$uvl) each denote one of four phase counters on four channels. All of these phase counters are triangular waves having a period of $2\pi$ radians with respect to the reference phase $\theta$uvl. Furthermore, carr1($\theta$uvl) and carr2($\theta$uvl) have a mutual deviation of d$\theta$ in the amplitude direction, and carr3($\theta$uvl) and carr4($\theta$uvl) also have the same relationship.

d$\theta$ denotes the width of the voltage pulses between lines. The amplitude of the fundamental wave changes linearly with respect to this pulse width d$\theta$.

The voltage pulses between lines are formed at the points of intersection between the phase counters carrl($\theta$uvl), carr2($\theta$uvl), carr3($\theta$uvl), and carr4($\theta$uvl) and the pulse reference angles S1 through S4 that denote the center phases of the pulses in the range $0 \leq \theta uvl \leq \pi/2$. Due to this, pulse signals having a symmetrical pattern every 90° are generated.

In more detail, at the points that carr1($\theta$uvl) and carr2($\theta$uvl) and S1 through S4 agree with one another, pulses of width d$\theta$ having positive amplitude are generated. On the other hand, at the points that carr3($\theta$uvl) and carr4($\theta$uvl) and S1 through S4 agree with one another, pulses of width d$\theta$ having negative amplitude are generated.

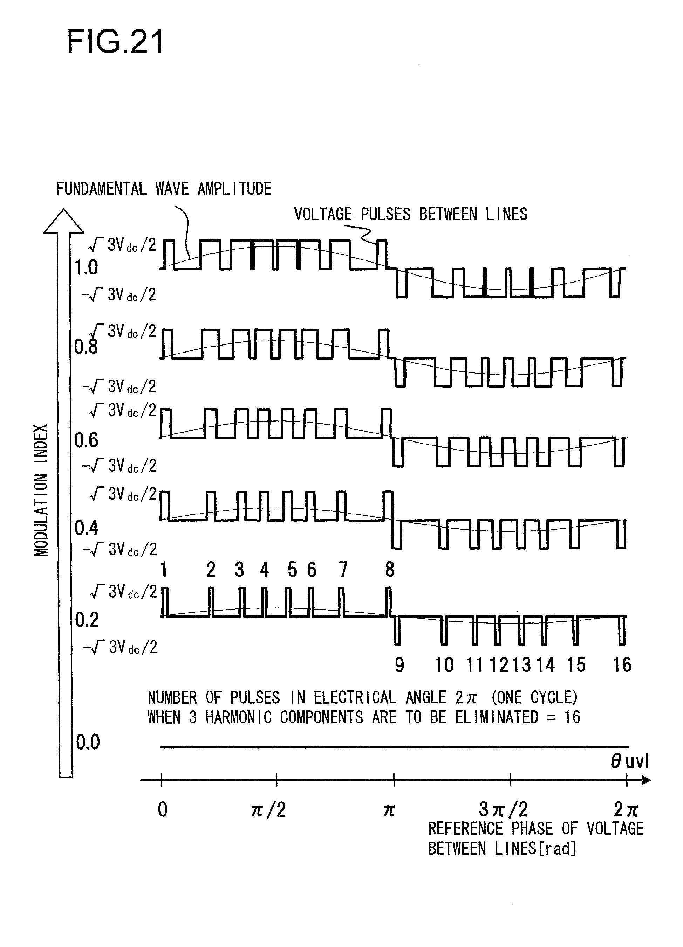

Examples in which waveforms of the voltage generated between lines using a method like that explained above are drawn for various modulation indices are shown in Fig. 21. In Fig. 21, k1=1, k2=1, and k3=3 are respectively chosen for the values of k1, k2, and k3 in Equation (7), and examples of the waveforms of the voltage pulses between lines as the modulation index is changed from 0 to 1.0 are shown. It will be understood that, according to Fig. 21, the pulse width increases almost in proportion to increase of the modulation index. By increasing the pulse width in this manner, it is possible to increase the effective value of the voltage. However, for the pulses in the vicinity of $\theta$uvl=0, $\pi$, and $2\pi$, when the modulation index is 0.4 or greater, the pulse width does not change even when the modulation index changes. This type of phenomenon is engendered due to the fact that the pulses that have positive amplitude and the pulses that have negative amplitude overlap one another.

As described above, by sending the drive signals from the driver circuit 174 to the switching elements of the power switching circuit 144 in the embodiment described above, each of the switching elements performs switching operation on the basis of the AC output that is desired to be outputted, for example on the basis of the phase of the AC voltage. The number of times that the switching elements perform switching in one cycle of the AC output, for example of the AC voltage, has a tendency to increase along with increase of the types of harmonic components that it is desired to eliminate. Here, in the case of outputting three phase AC power to be supplied to a rotating electrical machine that operates on three-phase AC, since the harmonic components of orders that are multiples of three will cancel one another out, accordingly they need not be included in the harmonic components that are to be eliminated.

Furthermore, when seen from another standpoint, when the voltage of the DC power decreases the modulation index increases, and there is a tendency for the continuous intervals in which the switching operations go continuous to become longer. Furthermore, when driving a rotating electrical machine such as a motor or the like, the modulation index becomes greater when the torque to be generated by the rotating electrical machine becomes greater, and as a result the continuous intervals of the switching operations become longer; while, when the torque to be generated by the rotating electrical machine becomes lower, the continuous intervals of the switching operations become shorter. When the continuous intervals become longer and the discontinuous intervals become shorter, in other words when the switching intervals becomes somewhat shorter, there is a possibility that it is not possible to interrupt the switching elements safely, and in this case control is performed to join together consecutive continuous intervals, thus maintaining the continuous state without performing any interruption.

Moreover, when seen from another standpoint, in a low frequency state in which the influence of distortion of the outputted AC current becomes great, and in particular in the state when the rotating electrical machine is stopped or in a state in which its rotational speed is extremely low, control is not performed according to the PHM method, but rather the power switching circuit 144 is controlled according to the PWM method by using a carrier wave of a fixed period, while, in the state in which the rotational speed has been increased, control of the power switching circuit 144 is changed over to the PHM method. And, when the present invention has been applied to a power conversion device for driving an automobile, at the state at which the vehicle is starting off from rest (i.e. from the stopped state) and is accelerating, it is particularly desirable to reduce the influence of torque pulsations, for reasons such as the fact that they exert an influence upon the feeling of luxuriousness of the vehicle and so on. Due to this, at least in the state in which the vehicle is starting off from rest (i.e. from the stopped state), the power switching circuit 144 is controlled according to the PWM method, and is changed over to control according to the PHM method after the vehicle has accelerated to some extent. By doing this, it is possible to implement control for reducing pulsations of torque at least when starting off from rest, and it becomes possible to perform control according to the PHM method in which the switching losses are less in the state in which at least travel at constant speed (i.e. normal operation) has been attained, so that it is possible to implement control with lower loss while at the same time suppressing the influence of pulsations of torque.

According to the PHM pulse signal used in the present invention, when the modulation index is fixed as described above, the characteristic is that the waveforms of the voltages between lines are generated by pulse trains whose pulse widths are equal, except for exceptions. It should be understood that if, exceptionally, the width of some pulse of a voltage between lines is not equal to the widths of the other pulses thereof, then this is a case in which a pulse having positive amplitude and a pulse having negative amplitude have become overlapped, as described above. In this case, when the portion where the pulses are overlapped is decomposed into the pulse that has positive amplitude and the pulse that has negative amplitude, the pulse widths will compulsorily become equal over the entire range. In other words, the modulation index changes with change of the pulse width.

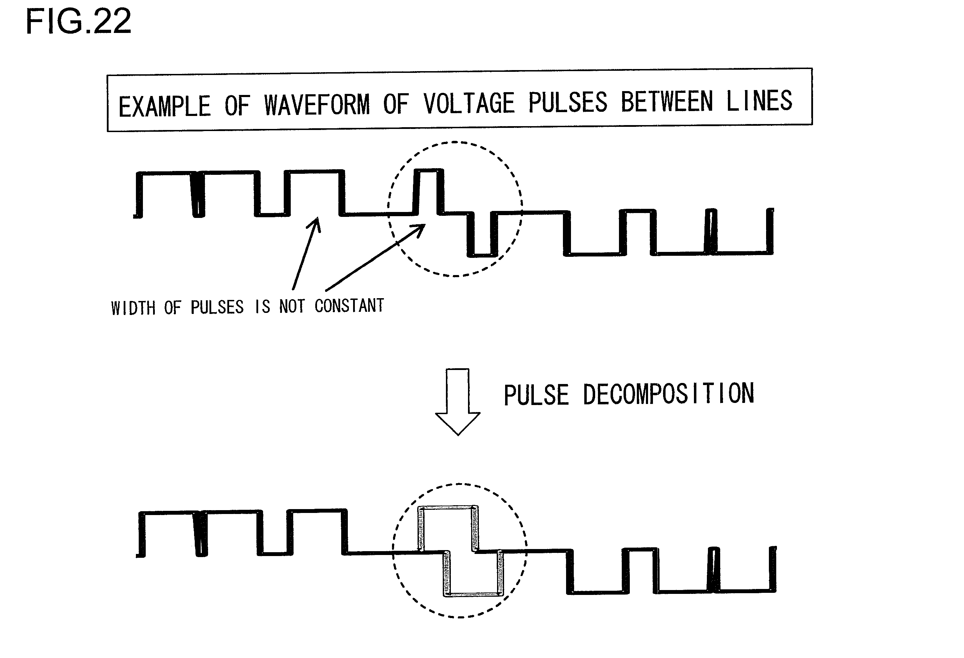

Now such a case in which, exceptionally, the pulse width of one voltage between lines is not equal to that of another pulse train will be explained in further detail using Fig. 22. In the upper portion of Fig. 22, the range $\pi/2 \leq \theta uvl < 3\pi/2$ in one waveform of voltage pulses between lines when the modulation index in Fig. 21 is 1.0 is shown as magnified. In this waveform of voltage pulses between lines, the two pulses near its center have different pulse widths from the other pulses.

In the lower portion of Fig. 22, a way is shown for decomposing this portion where the pulse widths are different from those of the other pulses. From this figure it will be understood that, in this portion, a pulse that has positive amplitude and a pulse that has negative amplitude are overlapped, both having the same pulse width as the other pulses; and, by these pulses being combined, two pulses have been created that have different pulse widths from the other pulses. In other words, by decomposing the overlapping of pulses in this manner, it will be understood that the pulse waveform of the voltage between lines that is created according to the PHM pulse signal is built up of pulses that have constant pulse width.

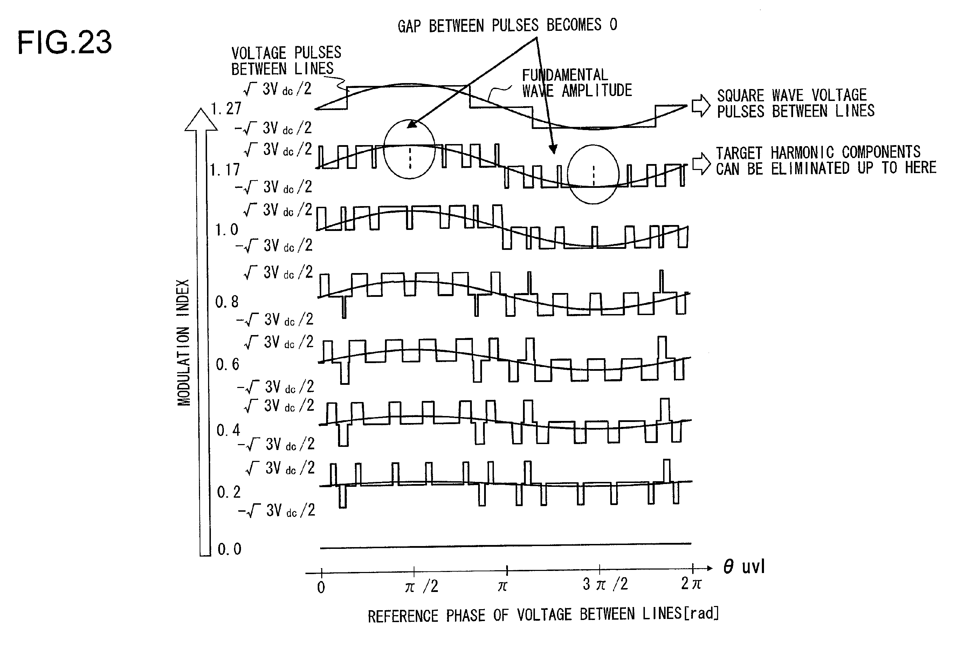

Examples of other waveforms of voltage pulses between lines due to PHM pulse signals generated according to the present invention are shown in Fig. 23. Here, $k_1$=1, $k_2$=1, and $k_3$=5 are respectively chosen for the values of $k_1$, $k_2$, and $k_3$ in Equation (7), and examples of the waveforms of the voltage pulses between lines as the modulation index is changed from 0 to 1.27 are shown. In Fig. 23, when the modulation index becomes 1.17 or greater, at the positions $\theta uvl = \pi/2$ and $3\pi/2$, the gaps between the two mutually adjacent left and right symmetric pulses disappear. Accordingly it will be understood that, while it is possible to eliminate the target harmonic components in the range where the modulation index is less than 1.17, by contrast, when the modulation index becomes 1.17 or greater, it is not possible to eliminate the harmonic components effectively. Furthermore, as the modulation index becomes higher, the gaps between adjacent pulses even in other positions progressively disappear, and finally at the modulation index of 1.27 the waveform of the voltage pulses between lines becomes a square wave.

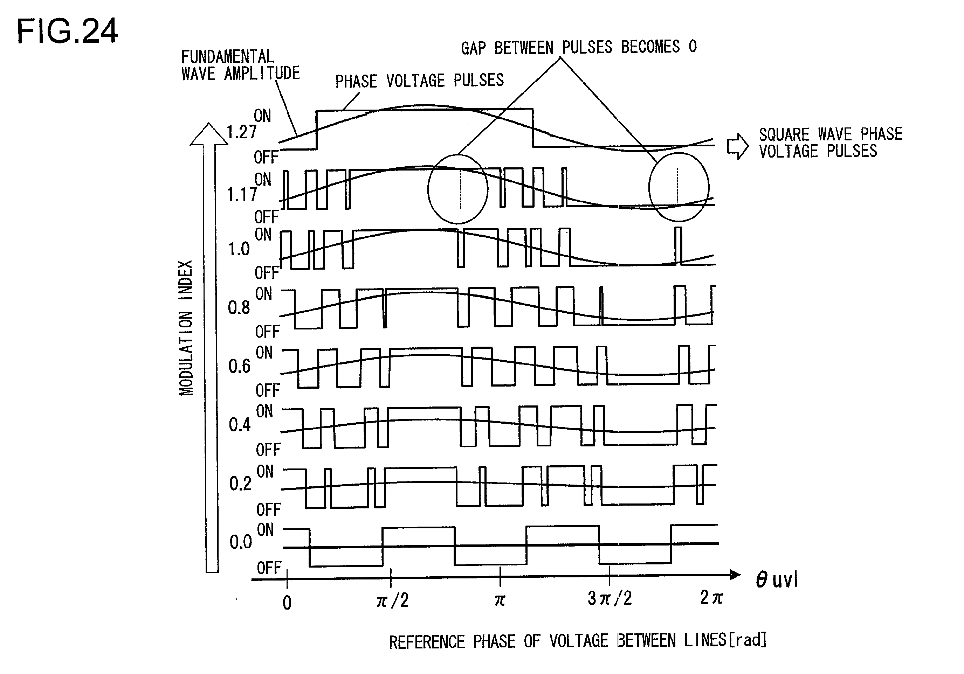

An example is shown in Fig. 24 of the phase voltage pulse waveform that corresponds to the waveform of the voltage pulses between lines shown in Fig. 23. It will be understood that, in Fig. 24 as well, in a similar manner to Fig. 23, when the modulation index becomes 1.17 or greater, the gap between two adjacent pulses disappears. It should be understood that there is a phase difference of $\pi/6$ between the phase voltage pulse waveform shown in Fig. 24 and the waveform of voltage pulses between lines shown in Fig. 23.

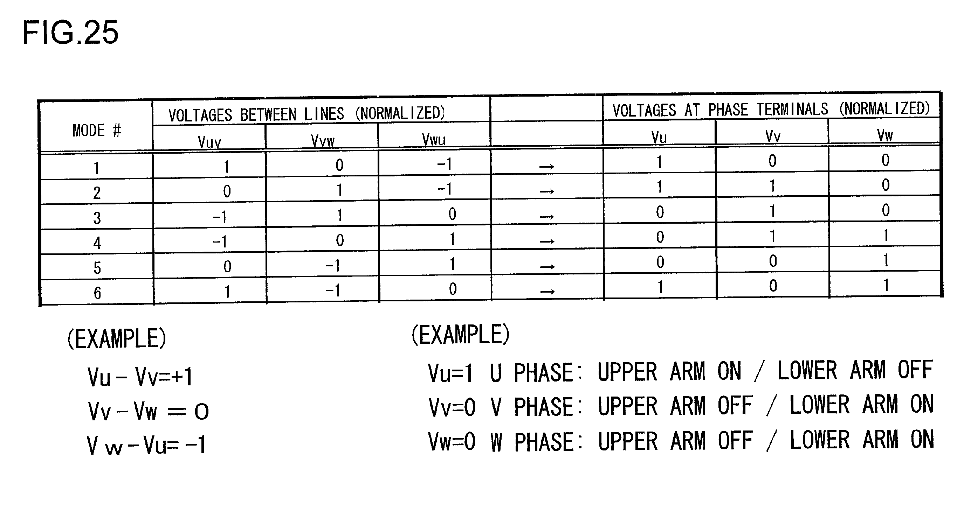

Next, a method for converting voltage pulses between lines to phase voltage pulses will be explained. Fig. 25 shows an example of a conversion table that is used when converting voltage pulses between lines to phase voltage pulses. In this table, the modes #1 through #6 that are shown in the column at the left side are numbers that are allocated to each possible switching state. In these modes #1 through #6, the relationship from the voltages between the lines to the output voltages is determined one-to-one. Each of these modes corresponds to an active interval in which energy transfer takes place between the DC side and the three phase AC side. It should be understood that the voltages between lines described in the table of Fig. 25 are ones in which the possible patterns for the potential differences between the different phases have been adjusted by being normalized by the battery voltage Vdc.

While in Fig. 25 it is shown, for example, that in mode #1 Vuv→1, Vvw→0, and Vu→1, this is a normalization of the case in which Vu-Vv=Vdc, Vv-Vw=0, and Vw-Vu=-Vdc. According to the table of Fig. 25, the phase voltages at this time, in other words the voltages at the phase terminals (that are proportional to the gate voltages) are: Vu → 1 (U phase: upper arm ON, lower arm OFF); Vv → 0 (V phase: upper arm OFF, lower arm ON); Vw → 0 (W phase: upper arm OFF, lower arm ON). In other words, in the table of Fig. 25, the case when Vu=Vdc, Vv=0, and Vw=0 is shown as normalized. The same type of thinking holds for modes #2 through #6, as for mode #1.

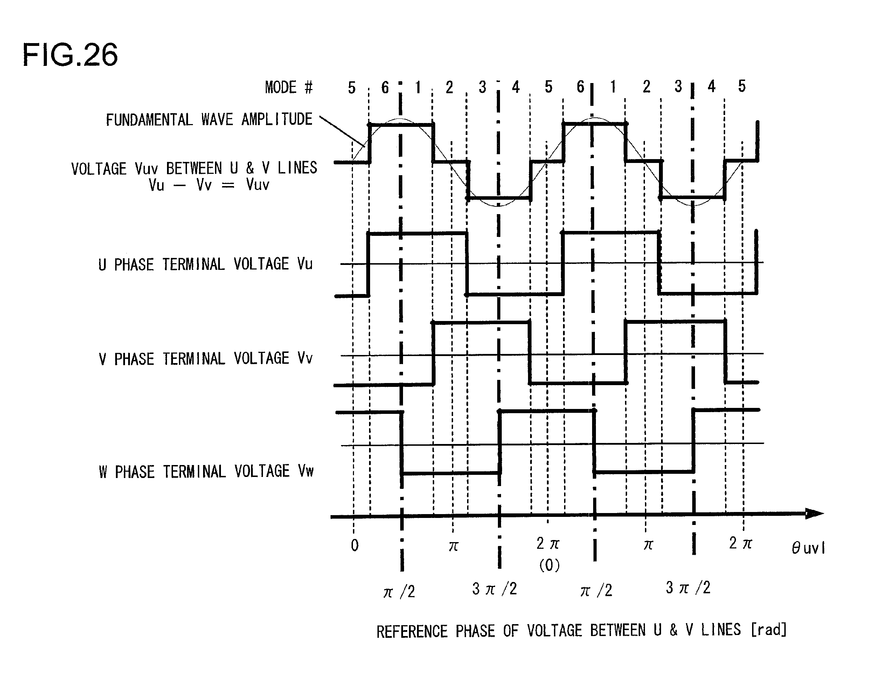

An example is shown in Fig. 26 in which, in the mode in which the power switching circuit 144 is controlled in the square wave state, the voltage pulses between lines have been converted into phase voltage pulses using the conversion table of Fig. 25. In Fig. 26, the voltage Vuv between the U line and the V line is shown in the upper portion as a representative example of a voltage between lines, while the voltage Vu at the U phase terminal, the voltage Vv at the V phase terminal, and the voltage Vw at the W phase terminal are shown in the lower portion. As shown in Fig. 26, in the square wave control mode, the modes shown in the conversion table of Fig. 25 change in order from #1 to #6. It should be understood that no three phase short circuited interval such as described hereinafter occurs in the square wave control mode.

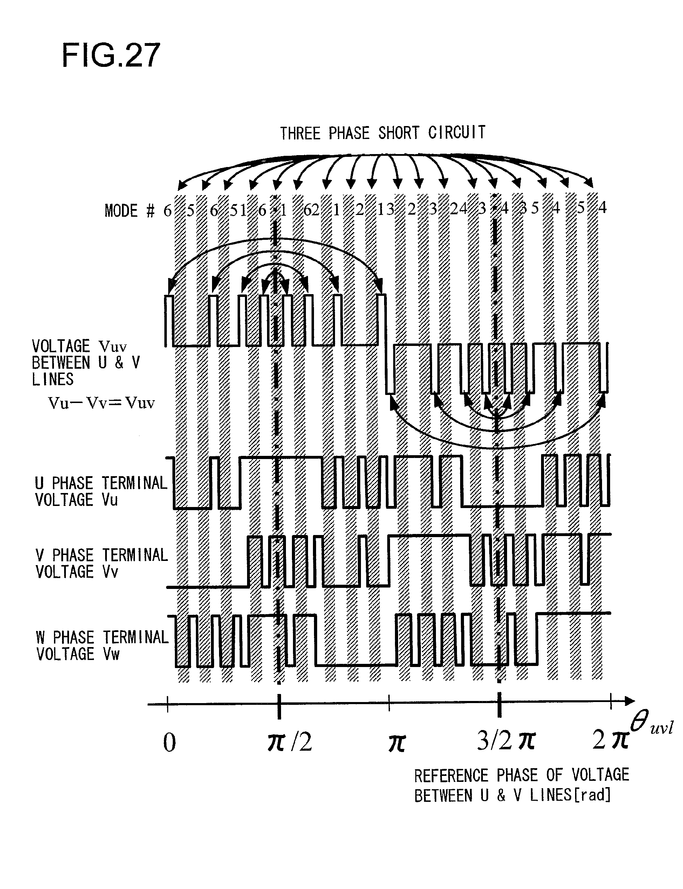

Fig. 27 shows the way in which the waveforms of the voltage pulses between lines shown in the Fig. 21 example are converted into phase voltage pulses according to the conversion table of Fig. 25. In Fig. 27, the voltage pulses between the U line and the V line are shown in the upper portion as a representative example of the voltages between lines, while the voltage Vu at the U phase terminal, the voltage Vv at the V phase terminal, and the voltage Vw at the W phase terminal are shown in the lower portion.

In the upper portion of Fig. 27, the number of the mode (i.e. of the active interval in which energy transfer takes place between the DC side and the three phase AC side) and the interval during which a three phase short circuit is established are shown. While, in the three phase short circuited interval, either the upper arms of all of the three phases are turned ON or the lower arms of all the three phases are turned ON, either switching mode may be selected, according to the situation with switching losses and/or continuous losses.

For example, when the voltage Vuv between the U and V lines is 1, the voltage Vu at the U phase terminal is 1 and the voltage Vv at the V phase terminal is 0 (modes #1 and #6). And when the voltage Vuv between the U and V lines is 0, the voltage Vu at the U phase terminal and the voltage Vv at the V phase terminal are the same value, in other words either Vu is 1 and also Vv is 1 (mode #2, three phase short circuit) or Vu is 0 and also Vv is 0 (mode #5, three phase short circuit). Moreover, when the voltage Vuv between the U and V lines is -1, the voltage Vu at the U phase terminal is 0 and the voltage Vv at the V phase terminal is 1 (modes #3 and #4). The pulses of the phase voltages, in other words the pulses of the voltages at the phase terminals (i.e. the gate voltage pulses), are generated on the basis of this type of relationship.

In Fig. 27, the pattern of the voltage pulses between lines and the pulses of the voltage at the phase terminals for each phase with respect to the phase $\theta$uvl is a pattern that repeats quasi-periodically with a minimum unit of $\pi/3$. In other words, the pattern at which the voltage at the U phase terminal inverts between 1 and 0 in the interval $0 \leq \theta$uvl$\leq \pi/3$ is the same as the pattern for the voltage at the W phase terminal in the interval $\pi/3 < \theta$uvl$\leq 2\pi/3$. Furthermore, the pattern at which the voltage at the V phase terminal inverts between 1 and 0 in the interval $0 \leq \theta$uvl$\leq \pi/3$ is the same as the pattern for the voltage at the U phase terminal in the interval $\pi/3 \leq \theta$uvl$\leq 2\pi/3$, and the pattern at which the voltage at the W phase terminal inverts between 1 and 0 in the interval $0 \leq \theta$uvl$\leq \pi/3$ is the same as the pattern for the voltage at the V phase terminal in the interval $\pi/3 < \theta$uvl$\leq 2\pi/3$. This type of characteristic is particularly prominent in the steady state in which the rotational speed and the output of the motor are constant.

Here, the modes #1 through #6 described above are defined as first intervals in which, with an IGBT 328 for an upper arm and an IGBT 330 for an lower arm of a different phase both ON, current is supplied from the battery 136 that is the DC power supply, to the motor-generator 192. Furthermore, the three phase short circuited intervals are formed as second intervals in which, for all the phases, either the IGBTs 328 for the upper arms or the IGBTs 330 for the lower arms are all ON, and in which the torque is maintained by the energy accumulated in the motor-generator 192. It will be understood that, in the example shown in Fig. 27, these first intervals and second intervals are formed alternatingly according to electrical angle.

Furthermore, in Fig. 27, for example in the interval $0 \leq \theta$uvl$\leq \pi/3$, the modes #6 and #5 are repeated alternatingly as first intervals, with three phase short circuited intervals being sandwiched between them as second intervals. Here, as will be understood from Fig. 27, on the one hand, in the mode #6, the IGBT 330 for the lower arm of the V phase is turned ON, while for the other phases, i.e. for the U phase and for the W phase, the sides opposite to which for the V phase, in other words the IGBTs 328 for the upper arms, are turned ON. On the other hand, in the mode #5, the IGBT 328 for the upper arm of the W phase is turned ON, while for the other phases, i.e. for the U phase and for the V phase, the sides opposite to that for the W phase, in other words the IGBTs 330 for the lower arms, are turned ON. In other words, in the first intervals, one phase from among the U phase, the V phase, and the W phase is selected (in the mode #6 the V phase, and in the mode #5 the W phase), and, for this one phase that has been selected, either the IGBT 328 for the upper arm or the IGBT 330 for the lower arm is turned ON, and also, for the other two phases (i.e. in the mode #6 the U phase and the W phase, and in the mode #5 the U phase and the V phase), those IGBTs 328 or 330 are turned ON for the arms on the side that is different from the side for the one phase that was selected. Moreover, the one phase that is selected (i.e. the V phase or the W phase) is changed over for successive first intervals.

Outside the interval $0 \leq \theta$uvl$\leq \pi/3$ as well, in a similar manner to that described above, specific pairs of the modes #1 through #6 are repeated alternatingly as first intervals, with three phase short circuited intervals sandwiched between them as second intervals. In other words: in the interval $\pi/3 \leq \theta$uvl$\leq 2\pi/3$, the modes #1 and #6 are alternatingly repeated; in the interval $2\pi/3 \leq \theta$uvl$\leq \pi$, the modes #2 and #1 are alternatingly repeated; in the interval $\pi \leq \theta$uvl$\leq 4\pi/3$, the modes #3 and #2 are alternatingly repeated; in the interval $4\pi/3 \leq \theta$uvl$\leq 5\pi/3$, the modes #4 and #3 are alternatingly repeated; and in the interval $5\pi/3 \leq \theta$uvl$\leq 2\pi$, the modes #5 and #4 are alternatingly repeated. Due to this, in a similar manner to that described above, in the first intervals, one phase from among the U phase, the V phase, and the W phase is selected, and, for this one phase that has been selected, either the IGBT 328 for the upper arm or the IGBT 330 for the lower arm is turned ON, and also, for the other two phases, those IGBTs 328 or 330 are turned ON for the arms on the side that is different from the side for the one phase that was selected. Moreover, the one phase that is selected is changed over for successive first intervals.

Now the first intervals described above, in other words the electrical angle positions at which the modes #1 through #6 are set up, and the lengths of those intervals, may be changed according to a command to the motor-generator 192 for requesting torque or rotational speed or the like. In other words, as previously described, along with change of the rotational speed and/or the torque of the motor, the electrical angle positions specified for creation of the first intervals may be changed in order to change the orders of the harmonic components that are eliminated. Or the lengths of the first intervals, in other words the pulse widths, may be changed according to change of the rotational speed and/or the torque of the motor; thereby the modulation index being changed. By doing this, it is possible to change the waveform of the AC current flowing to the motor to one that is more desirable, in concrete terms to change the harmonic components of that AC current, and it is possible to control the power supplied from the battery 136 to the motor-generator 192 by that change. It should be understood that it would be acceptable to change only one of the specified electrical angle positions and the lengths of the first intervals, or alternatively to change both of them at the same time.

Now, the following relationships hold between the shapes of the pulses and the voltage. The widths of the pulses as shown in the figure have the effect of changing the effective value of the voltage, and when the widths of the pulses of the voltage between lines are wide the effective value of the voltage is high, while when they are narrow the effective value of the voltage is low. Furthermore, when the number of harmonic components to be eliminated is low, the upper limit of the modulation index approaches a square wave, since the effective value of the voltage is high. The benefit of this is effective when the rotating electrical machine (i.e. the motor-generator 192) is rotating at a high speed, and it is possible to obtain an output that exceeds the upper limit of output when control is being performed with normal PWM. In other words, by changing the lengths of the first intervals during which power is supplied to the motor-generator 192 from the battery 136 that is the DC power supply, and by changing the electrical angle positions at which it is specified for these first intervals to be created, it is possible to change the effective value of the AC voltage supplied to the motor-generator 192, and to obtain an output that corresponds to the rotational state of the motor-generator 192.

Furthermore, for all of the U phase, the V phase, and the W phase, the shapes of the pulses of the drive signals shown in Fig. 27 are asymmetric left and right around any value $\theta uvl$, in other words around any electrical angle as a center. Moreover, at least one of the ON interval or the OFF interval of the pulses includes an interval that is continuous over $\pi/3$ or more of $\theta uvl$ (i.e. electrical angle). For example, in the U phase, there are the ON interval $\pi/6$ or more both before and after the vicinity of $\theta uvl=\pi/2$ as a center, and the OFF interval $\theta/6$ or more both before and after the vicinity of $\theta uvl=3\pi/2$ as a center. In a similar manner, in the V phase, there are the OFF interval $\pi/6$ or more both before and after the vicinity of $\theta uvl=\pi/6$ as a center, and the ON interval $\pi/6$ or more both before and after the vicinity of $\theta uvl=7\pi/6$ as a center; and, in the W phase, there are the OFF interval $\pi/6$ or more both before and after the vicinity of $\theta uvl=5\pi/6$ as a center, and the ON interval $\pi/6$ or more both before and after the vicinity of $\theta uvl=11\pi/6$ as a center. This is the kind of characteristic that the pulse shapes have.

As has been explained above, according to the power conversion device of this embodiment, when the PHM control mode is selected, a first interval in which power is supplied to the motor from the DC power supply, and a second interval in which the upper arms for all of the phases of a three phase full bridge or all of its lower arms are turned ON, are generated alternatingly at a specified timing according to the electrical angle. Due to this, the frequency of switching is reduced to 1/7 to 1/10 or less as compared to when the PWM control mode is selected. Accordingly, it is possible to reduce the switching losses. Moreover, in addition, it is also possible to alleviate EMC (electromagnetic noise).

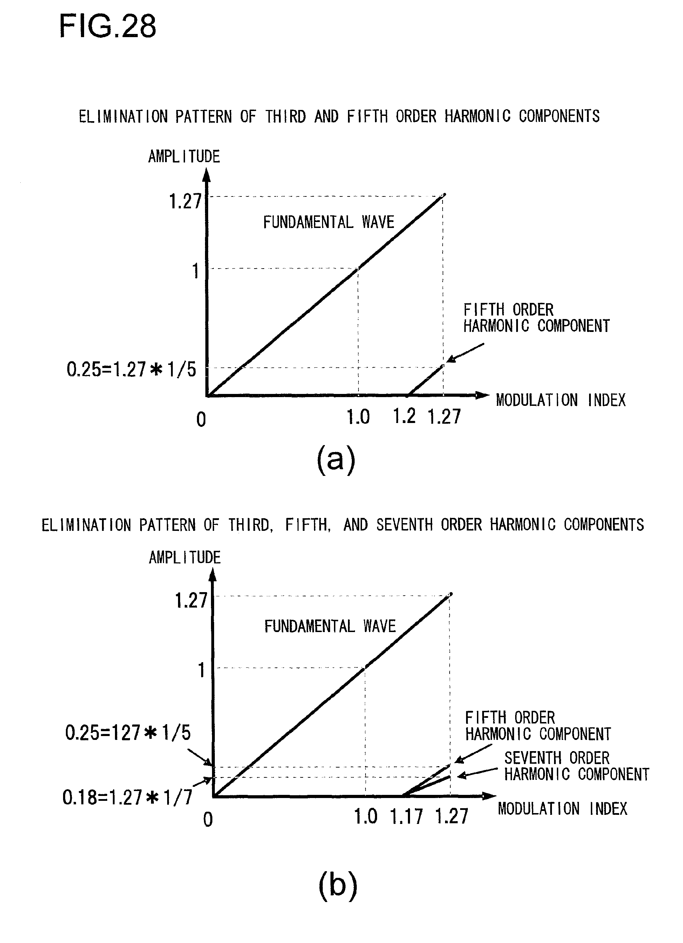

Next, the situation with regard to elimination of harmonic components in the waveform of the voltage pulses between lines when the modulation index changes, as shown by way of example in Fig. 23, will be explained. Fig. 28 is a figure showing, as the modulation index is changed, the magnitude of the amplitude of the fundamental wave of the voltage pulses between lines, and the magnitudes of the amplitudes of harmonic components that are to be the subjects of elimination.

In Fig. 28(a), an example is shown of a fundamental wave of voltage pulses between lines that has been taken as a subject for elimination of the harmonic components of the third order and of the fifth order, and the amplitudes of these harmonic components are shown. According to this figure it will be understood that, in the range of modulation index 1.2 or greater, the fifth order harmonic component appears not to have been completely eliminated. And, in Fig. 28(b), an example is shown of a fundamental wave of voltage pulses between lines that has been taken as a subject for elimination of the harmonic components of the third order, of the fifth order, and of the seventh order, and the amplitudes of these harmonic components are shown. According to this figure it will be understood that, in the range of modulation index 1.17 or greater, the fifth order harmonic component and the seventh order harmonic component appear not to have been completely eliminated.

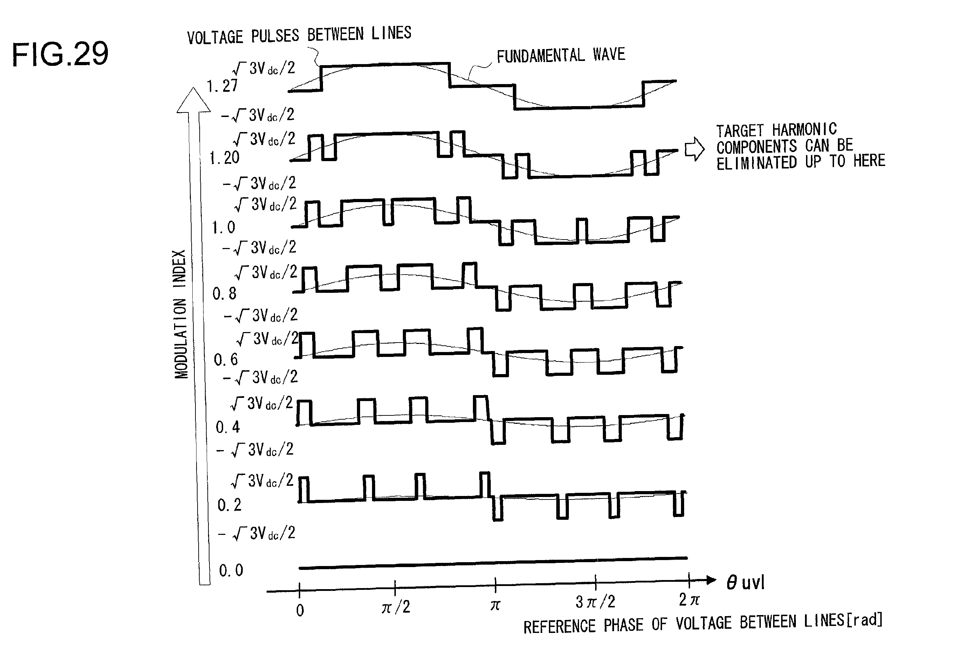

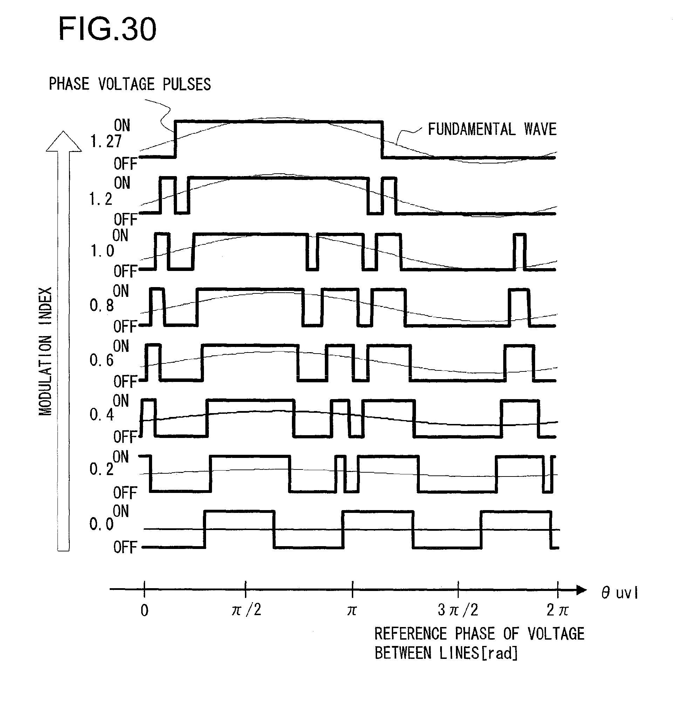

It should be understood that examples of the waveform of the voltage pulses between lines and of the phase voltage pulse waveform corresponding to Fig. 28(a) are respectively shown in Figs. 29 and 30. Here, examples are shown of the waveforms of the voltage pulses between lines and of the phase voltage waveforms as the modulation index is changed from 0 to 1.27, with a row vector for which the number of terms is 2 being set up, and with $k_1=1$ and $k_2=3$ being respectively selected as the values of $k_1$ and $k_2$ for each of the terms ($k_1/3$, $k_2/5$). Furthermore, Fig. 28(b) corresponds to the waveforms of the voltage pulses between lines and to the phase voltage waveforms shown respectively in Figs. 23 and 24.

From the above explanation it will be understood that, when the modulation index exceeds some constant value, some harmonic component that is to be the subject for elimination starts to appear no longer to be completely eliminated. Furthermore it will be understood that, the more in number are the types of harmonic component are to be the subject of elimination, the lower is this modulation index at which some harmonic component starts no longer to be completely eliminated.

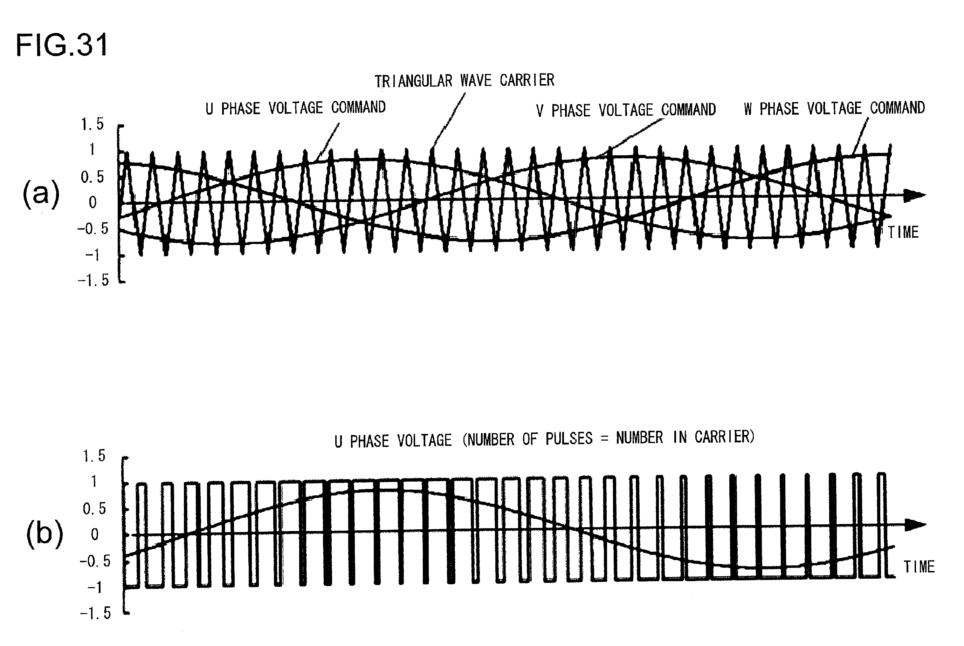

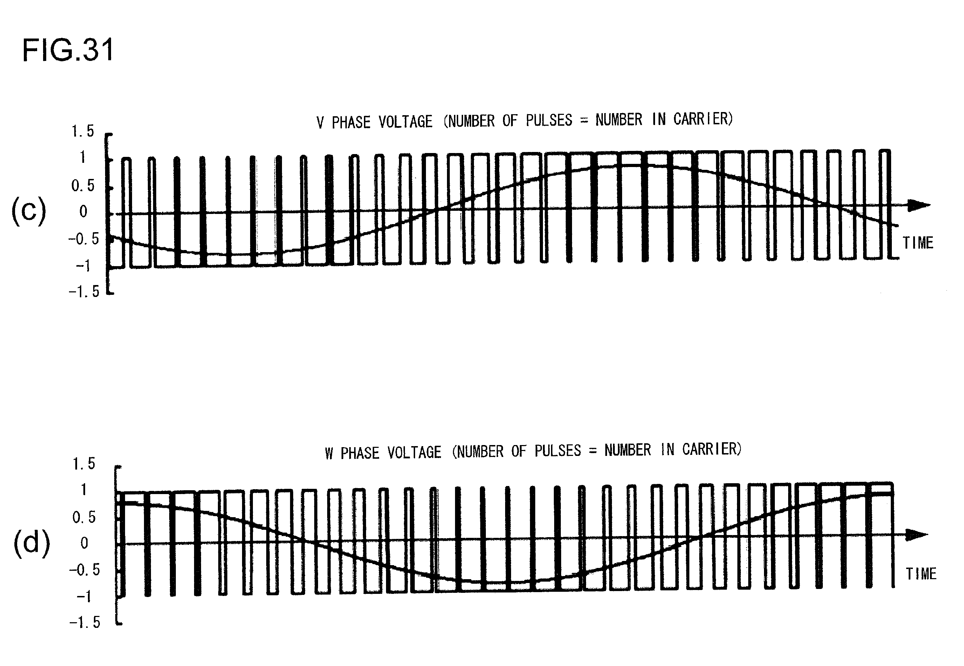

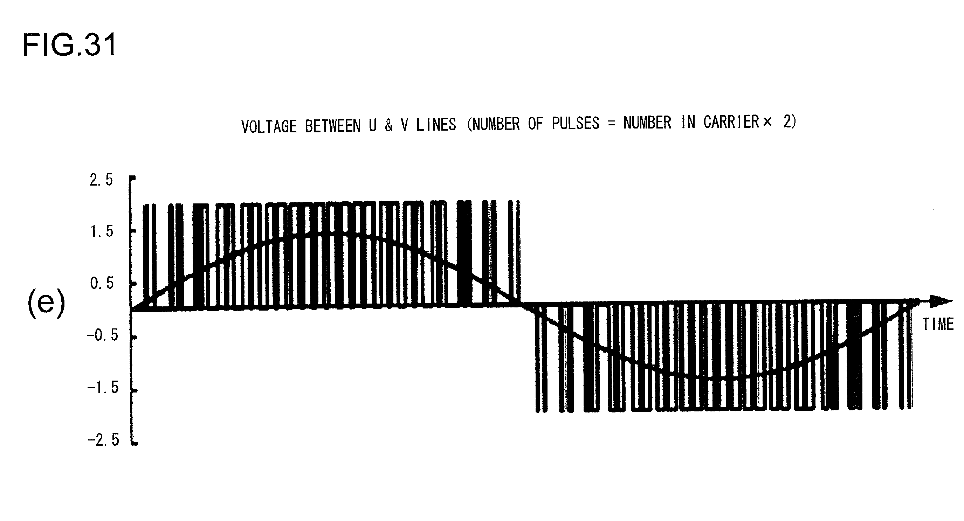

Next, the method by which the PWM pulse signal is generated by the pulse modulator 440 for PWM control shown in Fig. 5 will be explained with reference to Fig. 31. Fig. 31 (a) shows the waveforms of the voltage command signals for each of the U phase, the V phase and the W phase, and the waveform of a triangular wave carrier that is used for generation of the PWM pulses. Each of the voltage command signals is a sine wave command signal, with their phases being mutually spaced apart by $2\pi/3$, and their amplitudes change according to the modulation index. These voltage command signals and the triangular wave carrier signal are compared together for each of the U, V, and W phases, and voltage pulse waveforms for each of the U phase, the V phase, and the W phase are generated by setting their mutual intersections as the pulse ON/OFF timings, as respectively shown in Figs. 31(b), (c), and (d). It should be understood that the number of pulses for each of these pulse waveforms is equal to the number of triangular wave pulses of the triangular wave carrier.

Fig. 31(e) shows the waveform of the voltage between the U and V lines. The number of pulses here is twice the number of triangular wave pulses in the triangular wave carrier, in other words is equal to twice the number of pulses in the voltage pulse waveforms described above for the various phases. It should be understood that the same is true for the other voltages between lines, in other words for the voltage between the V and W lines and for the voltage between the W and U lines.

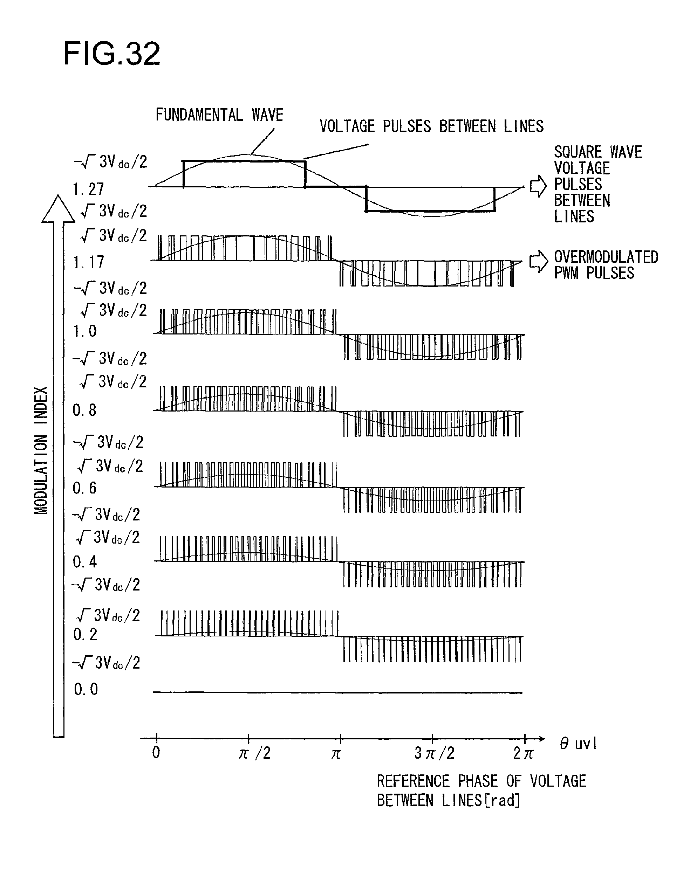

Fig. 32 shows an example in which waveforms of a voltage between lines created by the PWM pulse signal are drawn for various modulation indices. Here, examples of the waveforms of the voltage pulses between lines are shown as the modulation index changes from 0 to 1.27. In Fig. 32, when the modulation index becomes 1.17 or greater, the gaps between pairs of mutually adjacent pulses start to disappear, so that they combine to become a single pulse. This type of pulse signal is a so-called "overmodulated" PWM pulse signal. And finally, at a modulation index of 1.27, the waveform of the voltage pulses between lines becomes a square wave.

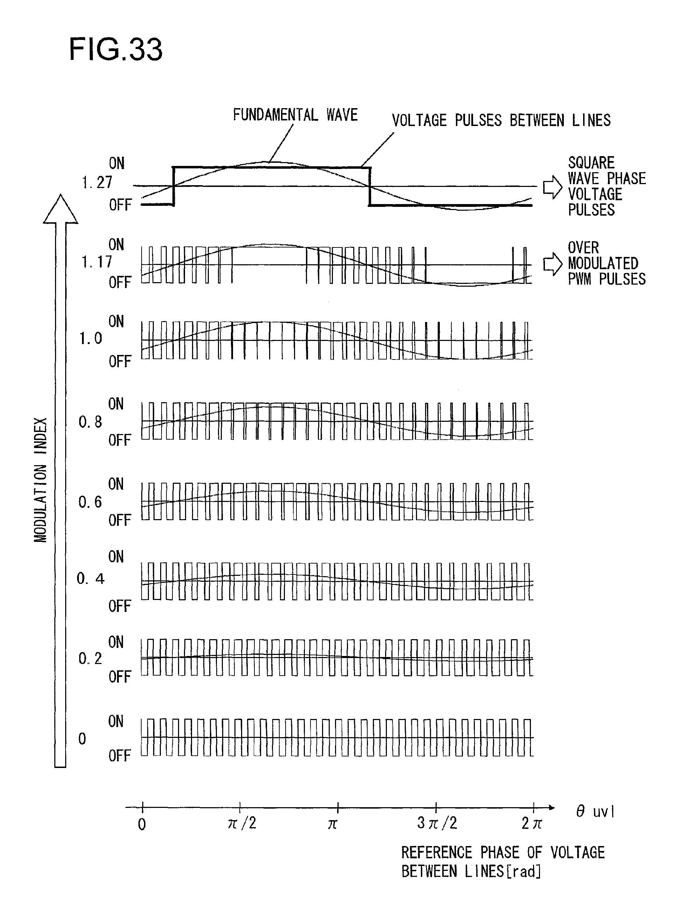

An example is shown in Fig. 33 in which the waveforms of the voltage pulses between lines shown in Fig. 32 are expressed as the corresponding phase voltage pulse waveforms. It will be understood that in Fig. 33, in a similar manner to Fig. 32, when the modulation index becomes 1.17 or greater, the gaps between pairs of mutually adjacent pulses start to disappear. It should be understood that there is a phase difference of $\pi/6$ between the phase voltage pulse waveforms of Fig. 33 and the waveforms of the voltage pulses between lines of Fig. 32.

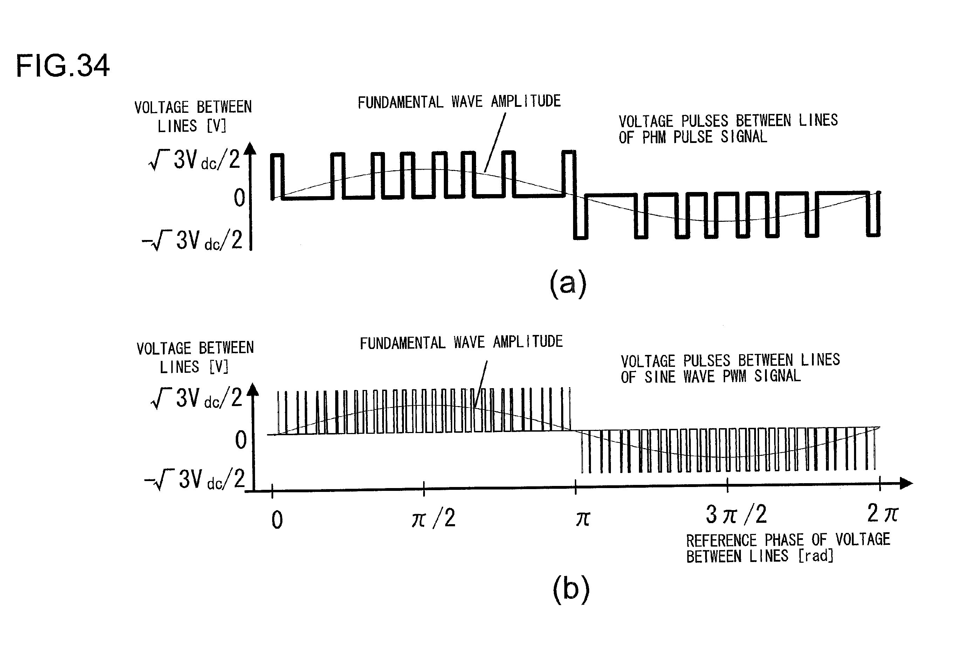

Now, a waveform of voltage pulses between lines due to a PHM pulse signal and a waveform of voltage pulses between lines due to a PWM pulse signal will be compared. Fig. 34(a) shows an example of a waveform of voltage pulses between lines due to a PHM pulse signal. This corresponds to the waveform of voltage pulses between lines having modulation index 0.4 in Fig. 21. On the other hand, Fig. 34(b) shows an example of a waveform of voltage pulses between lines due to a PWM pulse signal. This corresponds to the waveform of voltage pulses between lines having modulation index 0.4 in Fig. 32.

When the numbers of pulses in Figs. 34(a) and 34(b) are compared together, it will be understood that the waveform of voltage pulses between lines due to a PHM pulse signal shown in Fig. 34(a) has a much lower number of pulses than the waveform of voltage pulses between lines due to a PWM pulse signal shown in Fig. 34(b). Accordingly, while the control responsiveness decreases when a PHM pulse signal is used as compared to the case of a PWM signal because the number of pulses of the voltage between lines that are generated is smaller, on the other hand the number of times that switching is performed is greatly reduced as compared to when a PWM signal is used. As a result, it is possible greatly to reduce the switching losses.

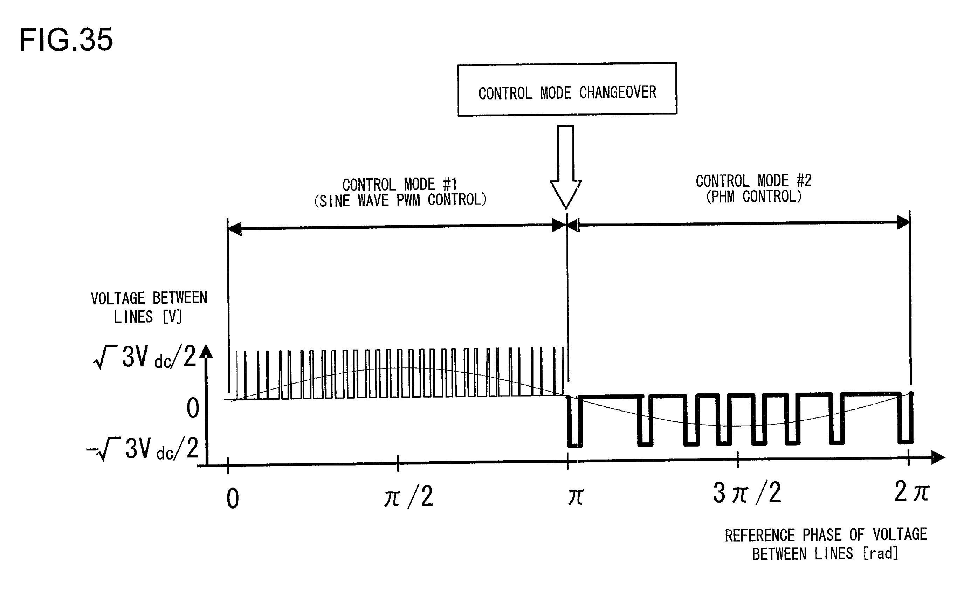

Fig. 35 shows the situation when, due to the changeover operation of the changeover device 450, the system changes over between the PWM control mode and the PHM control mode. Here, an example is shown of the waveform of the voltage pulses between lines when the control mode has been changed over from the PWM control mode to the PHM control mode, by the destination selected by the changeover device 450 being changed over from a PWM pulse signal to a PHM pulse signal when θuvl=π.

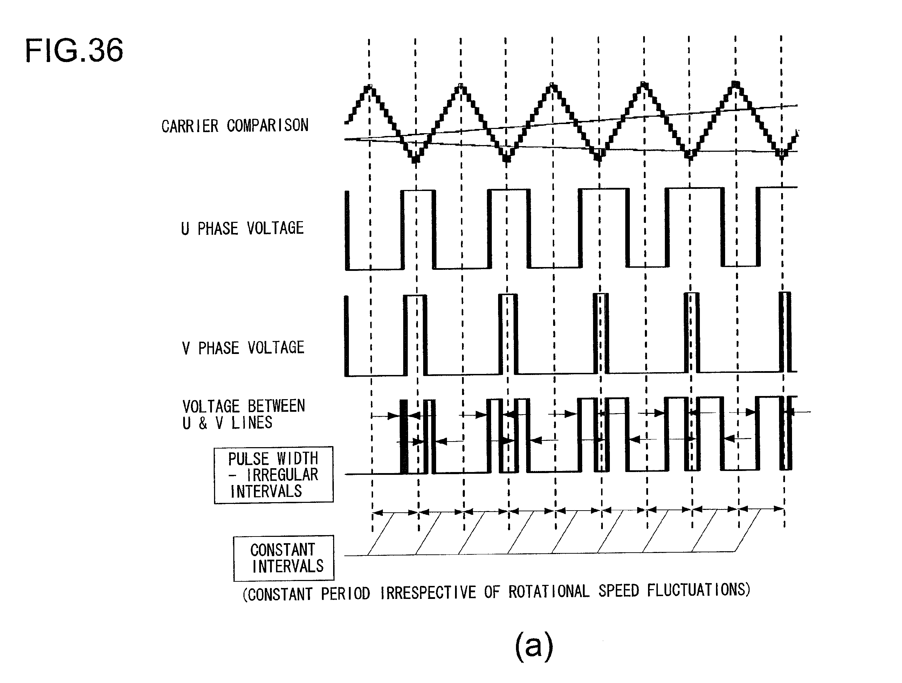

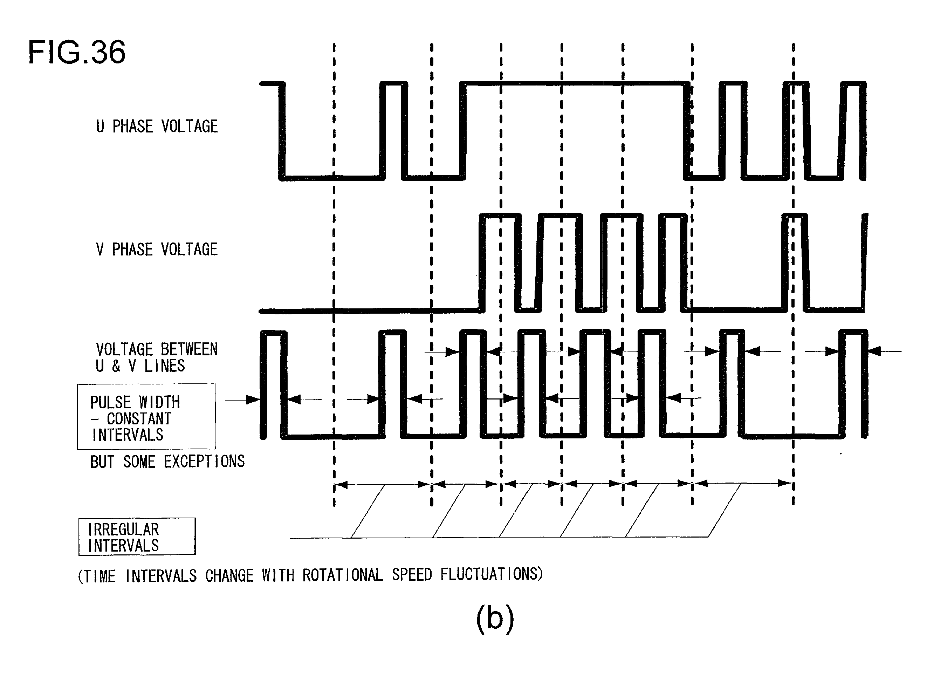

Next, the difference in pulse shapes between PWM control and PHM control will be explained with reference to Fig. 36. Fig. 36(a) shows a triangular wave carrier that is used for creating a PWM pulse signal, and also shows the U phase voltage, the V phase voltage, and the voltage between lines U and V that are created due to this PWM pulse signal. And Fig. 36(b) shows the U phase voltage, the V phase voltage, and the voltage between the U and V lines that are created due to a PHM pulse signal. When these figures are compared it will be understood that, when a PWM pulse signal is used, the pulse width of the pulses of the voltage between the U and V lines is not constant; while on the other hand, when a PHM pulse signal is used, the pulse width of the pulses of the voltage between the U and V lines is constant. It should be understood that while, as previously described, there are also some cases in which the pulse widths are not constant, this is a phenomenon due to a pulse having positive amplitude and a pulse having negative amplitude becoming overlapped, and if this pulse overlapping is resolved, all of the pulses are of the same width.

Moreover it will be understood that, since the triangular wave carrier is constant when the PWM pulse signal is used irrespective of fluctuations in the rotational speed of the motor, accordingly the gaps between the pulses of the voltages between the U and V lines are also constant irrespective of the motor rotational speed; but on the other hand, when the PHM pulse signal is used, the gaps between the pulses of the voltages between the U and V lines vary according to the motor rotational speed.

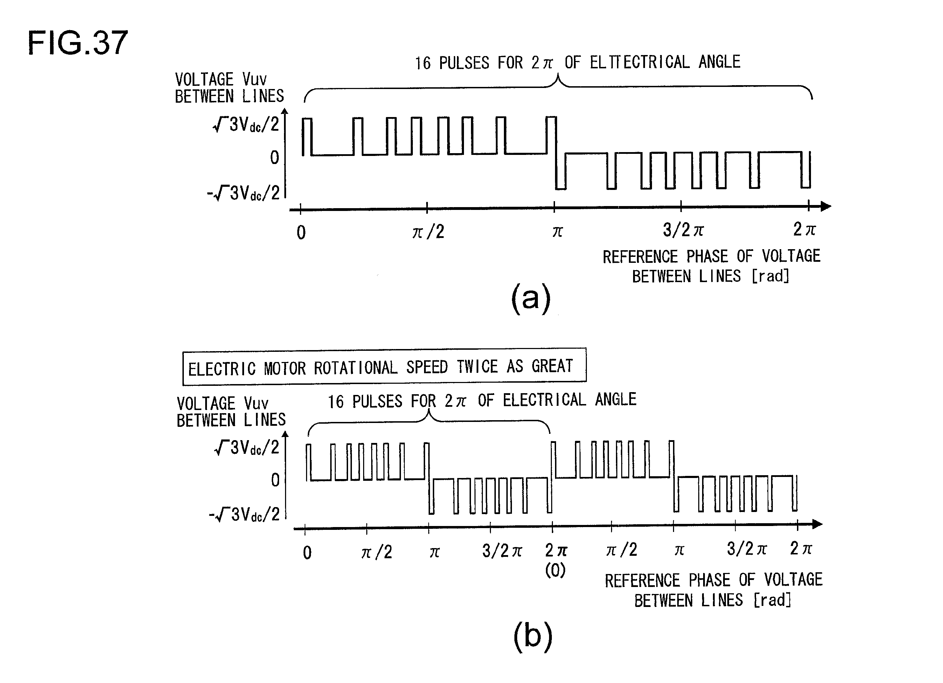

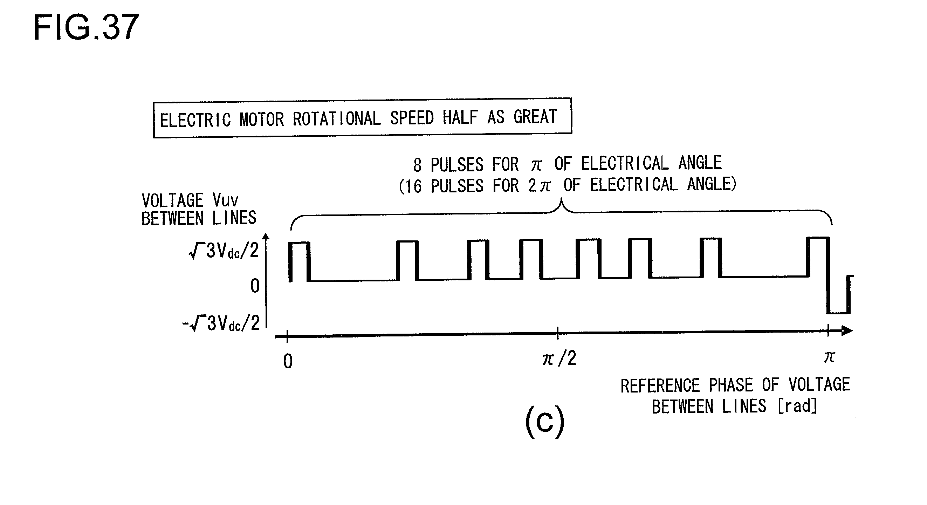

Fig. 37 shows the relationship between the rotational speed of the motor and the waveform of voltage pulses between lines due to a PHM pulse signal. Fig. 37(a) shows an example of the waveform of voltage pulses between lines due to a PHM pulse signal at some predetermined rotational speed. This corresponds to the waveform of voltage pulses between lines at the modulation index of 0.4 in Fig. 21, and has 16 pulses for each $2\pi$ of electrical angle (i.e. of the reference phase θuvl of the voltage between the U and V lines).

And Fig. 37(b) shows an example of a waveform of voltage pulses between lines due to a PHM pulse signal at twice the motor rotational speed of Fig. 37(a). It should be understood that the length of the horizontal axis in Fig. 37 (b) is made to be equivalent to that of the time axis of Fig. 37(a). When Fig. 37(a) and Fig. 37(b) are compared together, it will be understood that, while the number of pulses per $2\pi$ of electrical angle is still 16 and has not changed, in the Fig. 37(b) case there are twice as many pulses in the same time interval.

Moreover, Fig. 37(c) shows an example of a waveform of voltage pulses between lines due to a PHM pulse signal at half of the motor rotational speed of Fig. 37(a). It should be understood that the length of the horizontal axis in Fig. 37(c) is also made to be equivalent to that of the time axis of Fig. 37(a), as was the case for Fig. 37(b). When Fig. 37(a) and Fig. 37(c) are compared together, it will be understood that, since in Fig. 37(c) the number of pulses per $\pi$ of electrical angle is 8, accordingly the number of pulses per $2\pi$ of electrical angle is still 16 and has not changed; but, in the Fig. 37(c) case, there are half as many pulses in the same time interval.

As has been explained above, when a PHM pulse signal is used, the number of pulses per unit time of the voltage between lines changes in proportion to the rotational speed of the motor. In other words, when the number of pulses per $2\pi$ of electrical angle is considered, this is constant irrespective of the motor rotational speed. On the other hand, when a PWM pulse signal is used, as has been explained with reference to Fig. 36, the number of pulses of the voltage between lines is constant irrespective of the motor rotational speed. In other words, when the number of pulses per $2\pi$ of electrical angle is considered, this diminishes as the motor rotational speed rises.

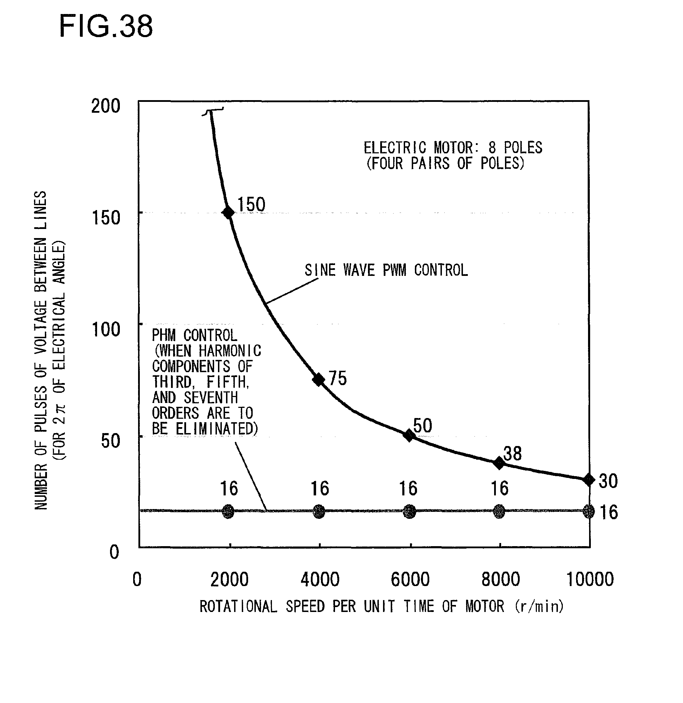

Fig. 38 shows the relationship between the number of pulses of the voltage between lines per $2\pi$ of electrical angle (in other words in one cycle of the voltage between lines) and the motor rotational speed, generated both under PHM control and under PWM control. It should be understood that, in Fig. 38, an example is shown in which an eight-pole motor (having four pairs of poles) was used, and in which, during PHM control, three harmonic components were the subjects of elimination, i.e. the harmonic components of the third, fifth, and seventh orders; and the frequency of the triangular wave carrier used during sine wave PWM control was set to 10 kHz. In this way, it will be understood that, in the case of PWM control, the number of pulses of the voltage between lines per $2\pi$ of electrical angle progressively decreases as the motor rotational speed rises, while by contrast, in the case of PHM control, it remains constant irrespective of the motor rotational speed. It should be understood that the number of pulses of the voltage between lines during PWM control may be obtained from the following Equation (12):

number of pulses of voltage between lines = frequency of triangular wave carrier / { (number of pairs of motor poles) X (motor rotational speed) / 60 } X 2 ................ (12)

It should be understood that while, in Fig. 38, a case has been shown in which the number of pulses of the voltage between lines per one cycle of the voltage between lines is 16 when in PHM control the number of harmonic components that are subjects for elimination is three, this values changes as previously described according to the number of harmonic components that are to be subjects for elimination. In other words, each time that the number of harmonic components that are subjects for elimination increases by one, the number of pulses of the voltage between lines per one cycle of the voltage between lines doubles, thus: the number of pulses is 8 when there are 2 harmonic components that are subjects for elimination; the number of pulses is 32 when there are 4 harmonic components that are subjects for elimination; and the number of pulses is 64 when there are 5 harmonic components that are subjects for elimination.

According to the embodiment explained above, in additional to the beneficial operational effects described above, even further beneficial operational effects may be obtained, as follows.

(1) The power conversion device includes the three phase full bridge type power switching circuit 144 that includes the IGBTs for the upper arms and the lower arms 328 and 330, and the control unit 170 that outputs drive signals to the IGBTs 328 and 330 for each of the phases, and, by the switching operation of the IGBTs 328 and 330 according to these drive signals, converts the voltage supplied from the battery 136 to output voltages that are spaced apart by $2\pi/3$ of electrical angle, these output voltages being supplied to the motor-generator 192. This power conversion device 140 changes over between a PHM control mode and a sine wave PWM control mode, on the basis of a predetermined condition. In the PHM control mode, a first interval in which the IGBTs 328 for the upper arms and the IGBTs 330 for the lower arms are respectively turned on in different phases and current is supplied from the battery 136 to the motor-generator 192, and a second interval in which either all of the IGBTs 328 for the upper arm are turned ON or all of the IGBTs 330 for the lower arm are turned ON and torque is maintained by energy accumulated in the motor-generator 192, are created alternatingly according to electrical angle. And, in the sine wave PWM control mode, the IGBTs 328 and 330 are turned ON and current is supplied from the battery 136 to the motor-generator 192 according to a pulse width that is determined on the basis of comparison of a sine wave command signal and a carrier wave. Since this is done, it is possible to perform appropriate control according to the state of the motor-generator 192 while reducing torque pulsations and switching losses.

(2) The control circuit 172 of the control unit 170 inputs the d axis current command signal Id* and the q axis current command signal Iq* to the current controller (ACR) 420 as input information. And by performing, for each of the d axis and the q axis of the motor-generator 192, feed forward control on the basis of this input information and feedback control on the basis of this input information and the current values of the AC current detected by the current sensors 180, the d axis voltage command signal Vd* and the q axis voltage command signal Vq* are calculated for determining the timings at which the IGBTs 328 and 330 are to be made continuous. By doing this, it is possible to suppress turbulence of the current waveform, and it is also possible further to suppress switching losses.

(3) The parameters used by the current controller (ACR) 420 for feed forward control or feedback control are changed according to the rotational speed of the motor-generator 192 and according to the waveform pattern of the drive signal. In concrete terms, among the parameters of Equation (6) used for feed forward control, it is arranged to change the values $a_{df0}$ and $b_{df1}$ in the transmission function $G_{df}(z)$ and the values $a_{qf0}$ and $b_{qf1}$ in the transmission function $G_{qf}(z)$ according to the rotational speed of the motor-generator 192 and according to the pulse interval $T_u$ that is determined according to the waveform pattern of the PHM pulse signal that is the drive signal. Moreover, the parameters in the transmission functions $G_{dc}(z)$ and $G_{qc}(z)$ of Equation (6) used for feedback control are also changed in a similar manner. Due to this, it is possible effectively to suppress turbulence in the current waveform for the motor-generator 192, as shown in Figs. 9(a) and 9(b).

(4) The A/D converter 190 determines sampling timings for the current signals of the AC output that is to be generated on the basis of the modulation index a, and the current values of the AC output measured by the current sensors 180 are sampled by the A/D converter 190 on the basis of these timings. And, on the basis of the current values that have been sampled in this manner, the fundamental current wave of the AC output is estimated by the Id and Iq converter 470, and the timings at which the IGBTs 328 and 330 are to be made continuous are determined on the basis of this fundamental current wave. In other words, the sampling timings for current values are determined on the basis of the points of intersection, when the waveform of the AC voltage to be generated by the power switching circuit 144 and the waveform of the drive signal from the drive circuit 174 are superimposed over one another. At this time, the sampling timings may be determined on the basis of a table of sampling phase against modulation index that is stored in advance in the sampling phase finder 481. By doing this, it is possible for the current controller (ACR) 420 to implement accurate current control.

The theory of the operation of the pulse modulator for PHM control 430 described with reference to Fig. 5 above will now be explained for a second time.

Let us consider a square wave that corresponds to the waveform of the AC that is to be outputted, for example to an AC voltage. A square wave includes harmonic components of various types, and when a Fourier series expansion is used it may be decomposed into its harmonic components as shown in Equation (1).

According to the type and the conditions of usage, it is determined which of the harmonic components described above are to be eliminated, and switching pulses are generated accordingly. To put it in another manner, it is aimed at to reduce the number of times switching is performed by including harmonic components whose influences as noise are low.

Fig. 39 is a figure showing, as one example, a process for generating a pattern of voltage between the lines for the U phase and the V phase in which the third order, the fifth order, and the seventh order harmonic components have been eliminated, and also the characteristics thereof. However, the voltage between lines is the electrical potential difference between the corresponding two phase terminals, and, if the voltage of the U phase is termed Vu and the voltage of the V phase is termed Vv, then the voltage Vuv between these lines is given by Vuv=Vu-Vv. Since the voltage between the lines for the V phase and the W phase and the voltage between the lines for the W phase and the U phase are the same, accordingly, in the following, the formation of the pattern of the voltage between the lines for the U phase and for the V phase will be explained as being a representative example.

The horizontal axis in Fig. 39 is an axis to be taken as a reference for the fundamental wave of the voltage between the lines for the U phase and the V phase, and in the following, as an abbreviation, this will be termed the reference phase θuvl of the voltage between the U and V lines. It should be understood that the section $\pi \leq \theta uvl \leq 2\pi$ is here omitted, because the pattern of the waveform of the voltage pulse train over that section is symmetrical to the pattern over the section $0 \leq \theta uvl < \pi$, except inverted. As shown in Fig. 39, the fundamental wave of the voltage pulses is a sine wave voltage with θuvl being taken as a reference. The pulses that are generated are centered around $\pi/2$ of this fundamental wave, and, according to the procedure shown in the figure, they are arranged in respective positions with respect to θuvl as shown in the figure by way of example. Here, since θuvl corresponds to the electrical angle as described above, the positions of arrangement of the pulses in Fig. 39 may be considered as being shown according to electrical angle. Accordingly, in the following, the positions at which these pulses are located will be defined by specific electrical angle positions. By doing this, pulse trains S1 ~ S4 and S1' ~ S2' are formed. These pulse trains have spectral distributions in which third order, fifth order, and seventh order harmonic components of the fundamental wave are not included. To put it in another manner, these pulse trains are waveforms in which, from a square wave that is defined in the section 0≤θuvl≤2π, the third order, fifth order, and seventh order harmonic components have been eliminated. It should be understood that it would be possible for the orders of the harmonic components that are eliminated to be other than the third order, the fifth order, and the seventh order. It will be acceptable to eliminate harmonic components up to a high order when the fundamental wave frequency is low, and only to eliminate harmonic components up to a low order when the fundamental wave frequency is high. For example, the orders of harmonic components that are eliminated may be changed in the following manner: when the rotational speed is low, the harmonic components of the fifth order, the seventh order, and the eleventh order may be eliminated; when the rotational speed becomes somewhat higher, the harmonic components of the fifth order and the seventh order may be eliminated; and, when the rotational speed becomes yet higher, only the harmonic component of the fifth order may be eliminated. This is done because, in the high rotational speed region, the winding impedance of the motor becomes great, so that the pulsations of current become small.

In a similar manner, in some cases, the orders of the harmonic components to be eliminated change according to the magnitude of the torque. For example, when the torque increases under the condition that the rotational speed stays constant at some value, then the orders of harmonic components that are eliminated may be changed in the following manner: when the torque is low, a pattern may be selected for elimination of the harmonic components of the fifth order, the seventh order, and the eleventh order; when the torque has somewhat increased, only the harmonic components of the fifth order and the seventh order may be eliminated; and, when the torque has increased yet further, only the harmonic component of the fifth order may be eliminated.

Moreover not only is it possible, as described above, for the set of harmonic components that are eliminated to be simply reduced along with increase of the torque or the rotational speed; conversely, in some cases, the orders of harmonic components to be eliminated may be increased, or they may be changed without any dependence upon increase or decrease of the torque or the rotational speed. Thus there is no limitation to monotonic change with respect to rotational speed or torque, since the orders of harmonic components to be eliminated may be determined in consideration of the magnitude of indicators such as torque ripple of the motor, or noise or EMC or the like.

In the embodiment described above, it is possible for the orders of harmonic components to be eliminated to be selected in consideration of influence of distortion upon some control object. The more the number of orders of harmonic components to be eliminated as described above increases, the greater does the number of times of switching of the switching elements 328 and 330 of the power switching circuit become. Since, in the embodiment described above, it is possible to select the orders of harmonic components to be eliminated in consideration of influence of distortion upon a control object, accordingly it is possible to prevent elimination of a greater number of harmonic components than necessary, and thereby it is possible appropriately to reduce the number of times of switching of the above described switching elements 328 and 330, while still according due consideration to the influence of distortion upon the control object.

With the control of the voltages between lines as explained with reference to the embodiment described above, it is possible to control the switching timings in the half period from phase 0 (radians) to π (radians) to be the same as the switching timings in the half period from phase π (radians) to 2π (radians), and thereby the control can be simplified, so that the controllability is enhanced. Furthermore, in the interval from phase 0 (radians) to π (radians) and also in the interval from phase π (radians) to 2π (radians), by controlling the switching timings to be the same when centered around phase π/2 or 3π/2, it is also possible to simplify the control, and thus to enhance the controllability.

Finally since, as described above, the switching pulses are generated according to the subject and the conditions of usage, accordingly it is possible to generate switching pulses in which those harmonic components whose influence as noise is low are included, and thus it is possible to reduce the number of times of switching of the switching elements 328 and 330 of the power switching circuit 144.

The above explanation is only given by way of example; the present invention should not be considered as being limited by any of the structures of the embodiment described above.

EXPLANATION OF THE REFERENCE SYMBOLS

43: power conversion device
110: electrically operated vehicle
112: front wheels

114: front wheel axles

116: front wheel side differential gear (front wheel side DEF)

118: speed change mechanism

120: engine

122: power division mechanism

136: battery

136: battery

138: DC connectors

200: power conversion device

140: power conversion device

142: power conversion device

144: power switching circuit

150: upper and lower arm series circuits

153: collector electrodes

154: gate electrodes

155: emitter electrodes

156: diodes

157: positive terminals (P terminal)

158: negative terminals (N terminal)

159: AC terminal

163: collector electrodes

164: gate electrodes

165: emitter electrodes

166: diodes

169: connection points

170: control unit

172: control circuit

174: driver circuit

186: AC power line

180: current sensor

188: AC connector

190: A/D converter

192: motor-generator

193: magnetic pole rotation sensor

194: motor-generator

195: motor for auxiliary machinery

314: DC positive terminal

316: DC negative terminal

328: IGBTs

330: IGBTs

410: torque command - current command converter

420: current controller (ACR)

421: current controller (ACR)

423: d axis current controller (ACR)

424: q axis current controller (ACR)

425: FF (feed forward) controller

426: FF (feed forward) controller

427: FB (feedback) controller

428: FB (feedback) controller

430: pulse modulator for PHM control

431: voltage phase difference calculator

432: modulation index calculator

434: pulse generator

435: phase finder

436: timer counter OR phase counter comparator

440: pulse modulator for PWM control

450: changeover device

460: angular velocity calculator

470: Id and Iq converter
481: sampling phase finder
482: timer counter OR phase counter comparator
483: sample hold circuit
500: capacitor module

**Claims**

1.  A power conversion device, comprising:

    a power switching circuit incorporating a plurality of series circuits in each of which an upper arm switching element and a lower arm switching element are connected in series, and that receives DC power and generates AC power that is supplied to a three phase AC motor;
    a sensor that measures current values of the AC output generated by the power switching circuit;
    a control circuit that, on the basis of the current values of the AC output measured by the sensor and information inputted from the exterior, determines timings to make the switching elements continuous according to the phase of the AC output to be generated by the power switching circuit, and generates control signals on the basis of these timings; and
    a driver circuit that generates drive signals for making the switching elements continuous or discontinuous, on the basis of the control signals from the control circuit; wherein:
    for each of the d axis and the q axis of the motor, the control circuit calculates voltage command signals for determining timings for making the switching elements continuous by performing feed forward control on the basis of the input information, and feedback control on the basis of the input information and the current values of the AC output.

2.  A power conversion device according to Claim 1, wherein:

    the control circuit changes parameters used for the feed forward control or the feedback control according to a rotational speed of the motor and a waveform pattern of the drive signal.

3.  A power conversion device according to Claim 2, wherein:

    the control circuit changes the parameters used for the feed forward control or the feedback control according to the rotational speed of the motor and the pulse interval of the drive signal that corresponds to the waveform pattern of the drive signal.

4.  A power conversion device according to any one of Claims 1 through 3, further comprising:

    an A/D converter that determines a sampling timing on the basis of a modulation index of the AC output, and samples the current values of the AC output as measured by the sensor, on the basis of the timing; and wherein:

    the control circuit estimates a fundamental current wave of the AC output on the basis of the current values of the AC output sampled by the A/D converter, and determines the timings at which to make the switching elements continuous on the basis of the fundamental current wave.

5.  A power conversion device according to Claim 4, wherein:

    the A/D converter determines the sampling timings on the basis of the points of intersection when the waveform of the AC output to be generated by the power switching circuit and the waveform of the drive signal are superimposed.

6.  A power conversion device according to Claim 4 or Claim 5, wherein:

    the A/D converter determines the sampling timings on the basis of a sampling phase table for each modulation index, which is stored in advance.

7.  A power conversion device, comprising:

a power switching circuit incorporating a plurality of series circuits in each of which an upper arm switching element and a lower arm switching element are connected in series, and that receives DC power and generates AC output;

a sensor that measures current values of the AC output generated by the power switching circuit;

an A/D converter that determines a sampling timing on the basis of a modulation index of the AC output, and samples the current values of the AC output as measured by the sensor on the basis of the timing;

a control circuit that, on the basis of the current values of the AC output sampled by the A/D converter and information inputted from the exterior, determines timings to make the switching elements continuous according to the phase of the AC output to be generated by the power switching circuit, and generates control signals on the basis of these timings; and

a driver circuit that generates drive signals for making the switching elements continuous or discontinuous, on the basis of the control signals from the control circuit.

FIG.1

FIG.2

# FIG.3

PWM CONTROL        ◄──────── | CONTRAST | ────────►     ONE-PULSE (SQUARE WAVE) CONTROL

○ (CLOSE TO SINE WAVE)

× (HIGH NUMBER OF TIMES
SWITCHED, HIGH SWITCHING
LOSSES)

○ (LOW NUMBER OF TIMES SWITCHED,
LOW SWITCHING LOSSES)

× (HARMONIC COMPONENTS OF 5TH, 7TH,
11TH ... ORDERS INCLUDED)

ELECTRICAL ANGLE $2\pi$

ELECTRICAL ANGLE $2\pi$

EP 2 566 043 A1

# FIG.4

FUNDAMENTAL WAVE + AMPLITUDE OF THIRD ORDER HARMONIC COMPONENT

FUNDAMENTAL WAVE

FUNDAMENTAL WAVE + AMPLITUDES OF THIRD ORDER AND
FIFTH ORDER HARMONIC COMPONENTS

SQUARE WAVE

$4/\pi=1.27$

$1$

$0$

$\pi$

$2\pi$

$-1$

$-4/\pi=-1.27$

(a)

EP 2 566 043 A1

# FIG.4

(b)

# FIG.5

EP 2 566 043 A1

# FIG.6

EP 2 566 043 A1

FIG.7

EP 2 566 043 A1

(a)

EP 2 566 043 A1

FIG.7

(b)

# FIG.8

ELECTRICAL ANGLE PHASE [deg]

EP 2 566 043 A1

**FIG.9**

PULSE SYNCHRONIZATION: ACR CYCLE = 20°

U PHASE
CURRENT
[A]

TORQUE
[Nm]

0⇒100Nm COMMAND

U PHASE
OUTPUT
VOLTAGE
[p.u.]

TIME [S]

(a)

EP 2 566 043 A1

# FIG.9

ACR CYCLE = 8°

(b)

# FIG.10

EP 2 566 043 A1

# FIG.11

STEP 1: INTEGRATE COMMANDED VOLTAGES AND OUTPUT VOLTAGES (PHM WAVEFORMS)

OUTPUT VOLTAGE

COMMANDED VOLTAGE

INTEGRATION

STEP 2: DETERMINE INTERSECTION POINTS AS SAMPLING TIMINGS

INTEGRATED VALUE OF OUTPUT VOLTAGE

INTEGRATED VALUE OF COMMANDED VOLTAGE

TIMINGS OF SAMPLING

EP 2 566 043 A1

# FIG.12

STEP 3: ACQUIRE ACTUAL CURRENT VALUES AT INTERSECTION POINT SAMPLING TIMINGS

TIMINGS OF SAMPLING

ACTUAL CURRENT

FUNDAMENTAL CURRENT WAVE (ESTIMATED)

# FIG.13

SAMPLING PHASE TABLE

| MODULATION INDEX (MFn) | SAMPLING PHASES ($\theta'nl$) | | | | |
|---|---|---|---|---|---|
| MF1 | $\theta'11$ | $\theta'12$ | $\theta'13$ | $\cdots$ | $\theta'1l$ |
| MF2 | $\theta'21$ | $\theta'22$ | $\theta'23$ | $\cdots$ | $\theta'2l$ |
| | | | | | |
| MFn | $\theta'n1$ | $\theta'n2$ | $\theta'n3$ | $\cdots$ | $\theta'nl$ |

EP 2 566 043 A1

# FIG.14

START → 701

INPUT MODULATION INDEX → 702

INPUT VOLTAGE PHASE → 703

CALCULATE PHASES IN CONTROL INTERVAL → 704

SEARCH ROM → 705

OUTPUT SAMPLING PHASES → 706

COMPARE WITH TIMER COUNTER, OR COMPARE WITH PHASE COUNTER → 707

OUTPUT COMPARE-MATCH SIGNAL → 708

PERFORM A/D CONVERSION → 709

ACQUIRE PHASE CURRENT SIGNALS AND MAGNETIC POLE POSITION SIGNAL

END

# FIG.15

```
                    START
                      │
                      ▼
         ┌─────────────────────────────┐  701
         │   INPUT MODULATION INDEX    │
         └─────────────────────────────┘
                      │
                      ▼
         ┌─────────────────────────────┐  702
         │     INPUT VOLTAGE PHASE     │
         └─────────────────────────────┘
                      │
                      ▼
    ┌──┌──────────────────────────────────┐──┐  710
    │  │ CALCULATE SAMPLING PHASES, AND   │  │
    │  │ COMPARE WITH TIMER COUNTER OR    │  │
    │  │ COMPARE WITH PHASE COUNTER       │  │
    └──└──────────────────────────────────┘──┘
                      │
                      ▼
    ┌──┌──────────────────────────────────┐──┐  711
    │  │      PERFORM A/D CONVERSION      │  │
    └──└──────────────────────────────────┘──┘
                      │
                      ▼
         ┌─────────────────────────────┐  712
         │  ACQUIRE PHASE CURRENT       │
         │  SIGNALS AND MAGNETIC        │
         │  POLE POSITION SIGNAL        │
         └─────────────────────────────┘
                      │
                      ▼
                    END
```

# FIG.16

VOLTAGE PHASE
SIGNAL
$\theta$ v

MODULATION
INDEX SIGNAL

a

PHASE FINDER

...

TIMER COUNTER
OR PHASE
COUNTER
COMPARATOR

434

435

436

... PULSE SIGNALS

ELECTRIC ANGULAR VELOCITY

$\omega$ re

EP 2 566 043 A1

# FIG.17

```
                    START

                      │
                      ▼
        ┌──────────────────────────┐        801
       /   INPUT MODULATION INDEX  /
      └──────────────────────────┘

                      │
                      ▼
        ┌──────────────────────────┐        802
       /        INPUT PHASE        /
      └──────────────────────────┘

                      │
                      ▼
    ┌──┬────────────────────────┬──┐        803
    │  │  CALCULATE PHASES IN    │  │
    │  │  CONTROL INTERVAL       │  │
    └──┴────────────────────────┴──┘

                      │
                      ▼
        ┌──┬──────────────┬──┐              804
        │  │  SEARCH ROM  │  │
        └──┴──────────────┴──┘

                      │
                      ▼
        ┌──────────────────────────┐        805
       /  OUTPUT SWITCHING PHASES  /
      └──────────────────────────┘

                      │
                      ▼
    ┌──┬────────────────────────┬──┐        806
    │  │  COMPARE WITH TIMER     │  │
    │  │  COUNTER, OR COMPARE    │  │
    │  │  WITH PHASE COUNTER     │  │
    └──┴────────────────────────┴──┘

                      │
                      ▼
        ┌──────────────────────────┐        807
       /    OUTPUT PULSE SIGNALS   /
      └──────────────────────────┘

                      │
                      ▼
                    END
```

# FIG.18

```
                    ┌─────────────┐
                    │    START    │
                    └──────┬──────┘
                           │
                           ▼
              ┌─────────────────────────┐        801
             /   INPUT MODULATION INDEX /
            └─────────────────────────┘
                           │
                           ▼
              ┌─────────────────────┐            802
             /      INPUT PHASE     /
            └─────────────────────┘
                           │
                           ▼
        ┌──┬─────────────────────────────┬──┐    820
        │  │ CALCULATE PULSE PATTERNS, AND│  │
        │  │ COMPARE WITH TIMER COUNTER OR│  │
        │  │ COMPARE WITH PHASE COUNTER   │  │
        └──┴─────────────────────────────┴──┘
                           │
                           ▼
              ┌─────────────────────────┐        807
             /    OUTPUT PULSE SIGNALS   /
            └─────────────────────────┘
                           │
                           ▼
                    ┌─────────────┐
                    │     END     │
                    └─────────────┘
```

## FIG.19

START

INPUT ORDERS OF
HARMONIC COMPONENTS
TO BE ELIMINATED — 821

PERFORM MATRIX
CALCULATION — 822

OUTPUT PULSE
REFERENCE ANGLES — 823

COMPARE WITH
TRIANGULAR WAVES — 824

OUTPUT VOLTAGES
BETWEEN LINES — 825

CONVERSION FROM
VOLTAGES BETWEEN
LINES → GATE
PULSES — 826

OUTPUT PULSE SIGNALS — 827

END

# FIG.20

PULSE WIDTHS DETERMINED BY DEVIATION BETWEEN CARR1 AND CARR2
IN VERTICAL DIRECTION (SAME FOR CARR3 AND CARR4)

REFERENCE PHASE OF VOLTAGE BETWEEN U AND V LINES [rad]

COMPARE PULSE REFERENCE POSITIONS $S_1$, $S_2$, $S_3$, AND $S_4$ WITH TRIANGULAR WAVE OF PERIOD $2\pi$

$$※d\theta = carr1(\theta_{uvl})\text{-}carr2(\theta_{uvl}) = carr3(\theta_{uvl})\text{-}carr4(\theta_{uvl})$$

PULSE WIDTH $\propto$ MODULATION INDEX

EP 2 566 043 A1

# FIG.21

FUNDAMENTAL WAVE AMPLITUDE

VOLTAGE PULSES BETWEEN LINES

NUMBER OF PULSES IN ELECTRICAL ANGLE $2\pi$ (ONE CYCLE)
WHEN 3 HARMONIC COMPONENTS ARE TO BE ELIMINATED = 16

REFERENCE PHASE OF VOLTAGE
BETWEEN LINES[rad]

# FIG.22

EXAMPLE OF WAVEFORM OF VOLTAGE PULSES BETWEEN LINES

WIDTH OF PULSES IS NOT CONSTANT

PULSE DECOMPOSITION

# FIG.23

# FIG.24

EP 2 566 043 A1

# FIG.25

| MODE # | VOLTAGES BETWEEN LINES (NORMALIZED) | | | | VOLTAGES AT PHASE TERMINALS (NORMALIZED) | | |
|---|---|---|---|---|---|---|---|
| | Vuv | Vvw | Vwu | | Vu | Vv | Vw |
| 1 | 1 | 0 | −1 | → | 1 | 0 | 0 |
| 2 | 0 | 1 | −1 | → | 1 | 1 | 0 |
| 3 | −1 | 1 | 0 | → | 0 | 1 | 0 |
| 4 | −1 | 0 | 1 | → | 0 | 1 | 1 |
| 5 | 0 | −1 | 1 | → | 0 | 0 | 1 |
| 6 | 1 | −1 | 0 | → | 1 | 0 | 1 |

(EXAMPLE)

$Vu - Vv = +1$

$Vv - Vw = 0$

$Vw - Vu = -1$

(EXAMPLE)

Vu=1 U PHASE: UPPER ARM ON / LOWER ARM OFF

Vv=0 V PHASE: UPPER ARM OFF / LOWER ARM ON

Vw=0 W PHASE: UPPER ARM OFF / LOWER ARM ON

EP 2 566 043 A1

# FIG.26

MODE #  5  6  1  2  3  4  5  6  1  2  3  4  5

FUNDAMENTAL WAVE AMPLITUDE

VOLTAGE Vuv BETWEEN U & V LINES
Vu − Vv = Vuv

U PHASE TERMINAL VOLTAGE Vu

V PHASE TERMINAL VOLTAGE Vv

W PHASE TERMINAL VOLTAGE Vw

$0$   $\pi$   $2\pi$   $\pi$   $2\pi$   $\theta$uvl
(0)

$\pi/2$   $3\pi/2$   $\pi/2$   $3\pi/2$

REFERENCE PHASE OF VOLTAGE BETWEEN U & V LINES [rad]

EP 2 566 043 A1

# FIG.27

THREE PHASE SHORT CIRCUIT

MODE # 6 5 6 51 6 1 62 1 2 13 2 3 24 3 4 3 5 4 5 4

VOLTAGE Vuv
BETWEEN U & V
LINES

$Vu - Vv = Vuv$

U PHASE TERMINAL
VOLTAGE Vu

V PHASE TERMINAL
VOLTAGE Vv

W PHASE TERMINAL
VOLTAGE Vw

$0 \quad \pi/2 \quad \pi \quad 3/2\pi \quad 2\pi$ $\theta_{uvl}$

REFERENCE PHASE OF VOLTAGE
BETWEEN U & V LINES[rad]

# FIG.28

ELIMINATION PATTERN OF THIRD AND FIFTH ORDER HARMONIC COMPONENTS

(a)

ELIMINATION PATTERN OF THIRD, FIFTH, AND SEVENTH ORDER HARMONIC COMPONENTS

(b)

FIG.29

VOLTAGE PULSES BETWEEN LINES

FUNDAMENTAL WAVE

TARGET HARMONIC COMPONENTS CAN BE ELIMINATED UP TO HERE

MODULATION INDEX

REFERENCE PHASE OF VOLTAGE BETWEEN LINES[rad]

EP 2 566 043 A1

# FIG.30

PHASE VOLTAGE PULSES

FUNDAMENTAL WAVE

MODULATION INDEX

1.27
1.2
1.0
0.8
0.6
0.4
0.2
0.0

ON / OFF

$\theta$ uvl

0    $\pi/2$    $\pi$    $3\pi/2$    $2\pi$

REFERENCE PHASE OF VOLTAGE
BETWEEN LINES[rad]

# FIG.31

**(a)** TRIANGULAR WAVE CARRIER / U PHASE VOLTAGE COMMAND / V PHASE VOLTAGE COMMAND / W PHASE VOLTAGE COMMAND
TIME

**(b)** U PHASE VOLTAGE (NUMBER OF PULSES = NUMBER IN CARRIER)
TIME

EP 2 566 043 A1

# FIG.31

V PHASE VOLTAGE (NUMBER OF PULSES = NUMBER IN CARRIER)

(c)

TIME

W PHASE VOLTAGE (NUMBER OF PULSES = NUMBER IN CARRIER)

(d)

TIME

EP 2 566 043 A1

# FIG.31

VOLTAGE BETWEEN U & V LINES (NUMBER OF PULSES = NUMBER IN CARRIER× 2)

(e)

EP 2 566 043 A1

# FIG.32

FUNDAMENTAL WAVE

VOLTAGE PULSES BETWEEN LINES

SQUARE WAVE
VOLTAGE
PULSES
BETWEEN
LINES

OVERMODULATED
PWM PULSES

MODULATION INDEX

$-\sqrt{3}V_{dc}/2$
1.27
$\sqrt{3}V_{dc}/2$

$\sqrt{3}V_{dc}/2$
1.17
$-\sqrt{3}V_{dc}/2$

$\sqrt{3}V_{dc}/2$
1.0
$-\sqrt{3}V_{dc}/2$

$\sqrt{3}V_{dc}/2$
0.8
$-\sqrt{3}V_{dc}/2$

$\sqrt{3}V_{dc}/2$
0.6
$-\sqrt{3}V_{dc}/2$

$\sqrt{3}V_{dc}/2$
0.4
$-\sqrt{3}V_{dc}/2$

$\sqrt{3}V_{dc}/2$
0.2
$-\sqrt{3}V_{dc}/2$

0.0

$0$   $\pi/2$   $\pi$   $3\pi/2$   $2\pi$   $\theta$ uvl

REFERENCE PHASE OF VOLTAGE
BETWEEN LINES [rad]

66

# FIG.33

# FIG.34

VOLTAGE BETWEEN
LINES [V]

FUNDAMENTAL WAVE AMPLITUDE

VOLTAGE PULSES BETWEEN LINES
OF PHM PULSE SIGNAL

$\sqrt{3}V_{dc}/2$

$0$

$-\sqrt{3}V_{dc}/2$

(a)

VOLTAGE BETWEEN
LINES [V]

FUNDAMENTAL WAVE AMPLITUDE

VOLTAGE PULSES BETWEEN LINES
OF SINE WAVE PWM SIGNAL

$\sqrt{3}V_{dc}/2$

$0$

$-\sqrt{3}V_{dc}/2$

$0$     $\pi/2$     $\pi$     $3\pi/2$     $2\pi$

REFERENCE PHASE OF VOLTAGE
BETWEEN LINES [rad]

(b)

EP 2 566 043 A1

FIG.35

CONTROL MODE CHANGEOVER

CONTROL MODE #1
(SINE WAVE PWM CONTROL)

CONTROL MODE #2
(PHM CONTROL)

VOLTAGE BETWEEN
LINES [V]

$\sqrt{3}V_{dc}/2$

$0$

$-\sqrt{3}V_{dc}/2$

$0$  $\pi/2$  $\pi$  $3\pi/2$  $2\pi$

REFERENCE PHASE OF VOLTAGE
BETWEEN LINES [rad]

EP 2 566 043 A1

# FIG.36

CARRIER COMPARISON

U PHASE VOLTAGE

V PHASE VOLTAGE

VOLTAGE BETWEEN
U & V LINES

PULSE WIDTH
- IRREGULAR
INTERVALS

CONSTANT
INTERVALS

(CONSTANT PERIOD IRRESPECTIVE OF ROTATIONAL SPEED FLUCTUATIONS)

(a)

EP 2 566 043 A1

## FIG.36

U PHASE VOLTAGE

V PHASE VOLTAGE

VOLTAGE BETWEEN
U & V LINES

PULSE WIDTH
- CONSTANT
INTERVALS

BUT SOME EXCEPTIONS

IRREGULAR
INTERVALS

(TIME INTERVALS CHANGE WITH ROTATIONAL SPEED FLUCTUATIONS)

(b)

EP 2 566 043 A1

# FIG.37

VOLTAGE Vuv
BETWEEN LINES

16 PULSES FOR $2\pi$ OF ELTTECTRICAL ANGLE

$\sqrt{3}V_{dc}/2$

0

$-\sqrt{3}V_{dc}/2$

0    $\pi/2$    $\pi$    $3/2\pi$    $2\pi$

REFERENCE PHASE OF VOLTAGE
BETWEEN LINES [rad]

(a)

ELECTRIC MOTOR ROTATIONAL SPEED TWICE AS GREAT

VOLTAGE Vuv
BETWEEN LINES

16 PULSES FOR $2\pi$ OF ELECTRICAL ANGLE

$\sqrt{3}V_{dc}/2$

0

$-\sqrt{3}V_{dc}/2$

0    $\pi/2$    $\pi$    $3/2\pi$    $2\pi$    $\pi/2$    $\pi$    $3/2\pi$    $2\pi$
                              (0)

REFERENCE PHASE OF VOLTAGE
BETWEEN LINES [rad]

(b)

EP 2 566 043 A1

FIG.37

ELECTRIC MOTOR ROTATIONAL SPEED HALF AS GREAT

8 PULSES FOR $\pi$ OF ELECTRICAL ANGLE
(16 PULSES FOR $2\pi$ OF ELECTRICAL ANGLE)

VOLTAGE Vuv
BETWEEN LINES

$\sqrt{3}V_{dc}/2$

0

$-\sqrt{3}V_{dc}/2$

0        $\pi/2$        $\pi$

REFERENCE PHASE OF VOLTAGE
BETWEEN LINES [rad]

(c)

# FIG.38

# FIG.39

EXAMPLE OF METHOD FOR ELIMINATING HARMONIC COMPONENTS
OF THIRD, FIFTH, AND SEVENTH ORDERS

CREATE PAIR OF PULSES
CENTERED AROUND $\pi/2$,
$\pi/3$ APART

CREATE 2 PAIRS OF
PULSES CENTERED UPON
ABOVE 2 PULSES, EACH
PAIR $\pi/5$ APART

CREATE 4 PAIRS OF
PULSES CENTERED UPON
ABOVE 4 PULSES, EACH
PAIR $3\pi/7$ APART

REFERENCE PHASE OF VOLTAGE BETWEEN
LINES FOR U AND V PHASES[rad]

## INTERNATIONAL SEARCH REPORT

| International application No. |
|---|
| PCT/JP2010/057575 |

**A. CLASSIFICATION OF SUBJECT MATTER**
*H02P21/00*(2006.01)i, *H02P27/04*(2006.01)i

According to International Patent Classification (IPC) or to both national classification and IPC

**B. FIELDS SEARCHED**

Minimum documentation searched (classification system followed by classification symbols)
H02P21/00, H02P27/04

| Documentation searched other than minimum documentation to the extent that such documents are included in the fields searched |
|---|
| Jitsuyo Shinan Koho           1922-1996     Jitsuyo Shinan Toroku Koho      1996-2010 |
| Kokai Jitsuyo Shinan Koho     1971-2010     Toroku Jitsuyo Shinan Koho      1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2004-312864 A  (Nissan Motor Co., Ltd.),<br>04 November 2004 (04.11.2004),<br>paragraph [0016]; fig. 2<br>& US 2004/0195993 A1    & EP 1467478 A2 | 1<br>2<br>3-6 |
| Y<br>A | JP 2010-88241 A  (Toyota Motor Corp.),<br>15 April 2010 (15.04.2010),<br>paragraphs [0047] to [0050]; fig. 2<br>(Family: none) | 2<br>3 |
| A | JP 2003-125597 A  (Hitachi, Ltd.),<br>25 April 2003 (25.04.2003),<br>paragraph [0007]<br>& US 5680299 A           & EP 0658969 A2 | 3 |

| ☒ | Further documents are listed in the continuation of Box C. | ☐ | See patent family annex. |
|---|---|---|---|

\* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search<br>03 August, 2010 (03.08.10) | Date of mailing of the international search report<br>17 August, 2010 (17.08.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/057575

C (Continuation). DOCUMENTS CONSIDERED TO BE RELEVANT

| Category* | Citation of document, with indication, where appropriate, of the relevant passages | Relevant to claim No. |
|---|---|---|
| A | JP 4-208076 A (Meidensha Corp.), 29 July 1992 (29.07.1992), page 4, lower left column, lines 2 to 8; fig. 1 (Family: none) | 4-6 |

Form PCT/ISA/210 (continuation of second sheet) (July 2009)

**INTERNATIONAL SEARCH REPORT**

| International application No. |
|---|
| PCT/JP2010/057575 |

---

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

---

**Box No. III      Observations where unity of invention is lacking (Continuation of item 3 of first sheet)**

This International Searching Authority found multiple inventions in this international application, as follows:
    Document 1 discloses a power conversion device which has a power switching circuit, which has a plurality of series circuits each of which has a switching element for an upper arm and a switching element for a lower arm connected in series, generates alternating current power by receiving direct current power and supplies the power to a three-phase alternating current motor, (continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1-6

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2010/057575

Continuation of Box No.III of continuation of first sheet(2)

a sensor, which measures the current value of the alternating current output generated by means of the power switching circuit, a control circuit, which, based on the current value of the alternating current output measured by means of the sensor and the inputted information from the outside, decides timing of carrying a current to the switching element corresponding to the phase of the alternating current output generated by means of the power switching circuit, and generates control signals based on the timing, and a driver circuit, which generates drive signals for carrying or interrupting a current to the switching element based on the control signals transmitted from the control circuit, the control circuit calculating voltage instruction signals for determining timing of carrying a current to the switching element by performing feedforward control based on the inputted information and feedback control based on the inputted information and the current value of the alternating current output for respective d shaft and q shaft of the motor.

Therefore, the invention in claim 1 is not novel to the invention disclosed in document 1 and does not have a special technical feature.

Consequently, the claims include the three inventions having the following special technical features.

As for the invention in claim 1 not having a special technical feature is classified into the invention group 1.

Invention group 1: The invention in claim 1, and the inventions having the following special technical feature among the inventions in claims 2-6
The feature of having a control circuit change parameters to be used for feedforward control or feedback control, corresponding to the rotating speed of a motor and the wave shape pattern of the drive signals.

Invention group 2: The invention having the following special technical feature among the inventions in claims 4-6
The feature of being provided with an A/D converter, which determines timing of sampling based on the modulation degree of an alternating current output and performs sampling of the current value of the alternating current output measured by means of a sensor, based on the determined timing, and the control circuit estimating the current fundamental wave of the alternating current output based on the current value of the alternating current output sampled by means of the A/D converter and determining the timing of carrying a current to the switching element based on the current fundamental wave.

Invention group 3: The invention in claim 7 having the following special technical feature
The feature of determining the timing of carrying a current to the switching element corresponding to the phase of the alternating current output generated by means of a power switching circuit, based on the current value of the alternating current output sampled by means of an A/D converter and inputted information obtained from the outside.

The invention which can be classified into a plurality of the above-mentioned invention groups is classified into the first group among such groups.

Form PCT/ISA/210 (extra sheet) (July 2009)

**EP 2 566 043 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63234878 B